(19) Europäisches Patentamt / European Patent Office / Office européen des brevets

(11) **EP 3 682 626 B1**

(12) **EUROPÄISCHE PATENTSCHRIFT**

(45) Veröffentlichungstag und Bekanntmachung des Hinweises auf die Patenterteilung:
**08.09.2021 Patentblatt 2021/36**

(21) Anmeldenummer: **18778816.1**

(22) Anmeldetag: **10.09.2018**

(51) Int Cl.:
*H04N 5/225* (2006.01)     *G02B 13/00* (2006.01)
*G02B 26/08* (2006.01)     *G02B 27/00* (2006.01)
*G02B 27/64* (2006.01)     *H04N 5/232* (2006.01)
*G02B 19/00* (2006.01)     *G02B 5/09* (2006.01)

(86) Internationale Anmeldenummer:
**PCT/EP2018/074328**

(87) Internationale Veröffentlichungsnummer:
**WO 2019/052952 (21.03.2019 Gazette 2019/12)**

(54) **MULTIAPERTURABBILDUNGSVORRICHTUNG MIT GERINGER BAUHÖHE UND UMSCHALTBARER BLICKRICHTUNG, ABBILDUNGSSYSTEM UND VERFAHREN ZUM BEREITSTELLEN EINER MULTIAPERTURABBILDUNGSVORRICHTUNG**

MULTI-APERTURE IMAGING DEVICE HAVING A LOW OVERALL HEIGHT AND A SWITCHABLE LINE OF VISION, IMAGING SYSTEM, AND METHOD FOR PRODUCING A MULTI-APERTURE IMAGING DEVICE

DISPOSITIF D'IMAGERIE À OUVERTURES MULTIPLES AYANT UN FAIBLE ENCOMBREMENT EN HAUTEUR ET UNE DIRECTION D'OBSERVATION COMMUTABLE, SYSTÈME D'IMAGERIE ET PROCÉDÉ DE FABRICATION D'UN DISPOSITIF D'IMAGERIE À OUVERTURES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2017 DE 102017216172**

(43) Veröffentlichungstag der Anmeldung:
**22.07.2020 Patentblatt 2020/30**

(73) Patentinhaber: **Fraunhofer-Gesellschaft zur Förderung der angewandten Forschung e.V. 80686 München (DE)**

(72) Erfinder:
• **WIPPERMANN, Frank**
  **07745 Jena (DE)**
• **HAGEN, Nico**
  **07745 Jena (DE)**
• **REIMANN, Andreas**
  **07745 Jena (DE)**

(56) Entgegenhaltungen:
WO-A1-2016/166730     WO-A1-2017/037688
DE-A1-102015 215 836     DE-A1-102015 220 566
US-A1- 2007 041 723     US-A1- 2015 293 328
US-A1- 2017 059 857

**Beschreibung**

Die vorliegende Erfindung bezieht sich auf eine Multiaperturabbildungsvorrichtung, auf ein Abbildungssystem und auf ein Verfahren zum Bereitstellen einer Multiaperturabbildungsvorrichtung. Die vorliegende Erfindung bezieht sich ferner auf eine Multiaperturabbildungsvorrichtung und ein Multiaperturabbildungssystem mit einer beweglichen Arrayanordnung.

Konventionelle Kameras besitzen einen Abbildungskanal, der das gesamte Objektfeld abbildet. Die Kameras besitzen adaptive Komponenten, die eine relative laterale, zweidimensionale Verschiebung zwischen Objektiv und Bildsensor zur Realisierung einer optischen Bildstabilisierungsfunktion zu ermöglichen.

Multiaperturabbildungssysteme mit linearer Kanalanordnung bestehen aus mehreren Abbildungskanälen, die jeweils nur einen Teil des Objekts aufnehmen und einen Umlenkspiegel enthalten. Der Umlenkspiegel kann drehbar gelagert sein und unter anderem eine Umschaltung der Blickrichtung ermöglichen, so dass dieselbe Kamera in verschiedene Blickrichtungen schauen kann, wobei die Blickrichtungen z. B. einen Winkel von 180° bilden. Die Baugröße des Spiegels beeinflusst dabei die Bauhöhe der Kamera, wohingegen die für die Abbildung erforderlichen Linsen eine kleinere Bauhöhe aufweisen, d. h., die Spiegel überragen die Linsen. Durch die Nutzung der Kamera in zwei Blickrichtungen infolge einer Rotation der Spiegel in eine andere Ablenkposition wird die erforderliche Bauhöhe in nachteiliger Weise zusätzlich vergrößert.

Wünschenswert wären Konzepte zum mehrkanaligen Erfassen von Objektbereichen oder Gesichtsfeldern, die eine hochqualitative Bilderfassung ermöglichen.

Die Aufgabe der vorliegenden Erfindung besteht deshalb darin, eine Multiaperturabbildungsvorrichtung, ein Abbildungssystem und ein Verfahren zum Bereitstellen einer Multiaperturabbildungsvorrichtung zu schaffen, die eine geringe Baugröße der Multiaperturabbildungsvorrichtung, insbesondere entlang einer Dickenrichtung ermöglichen.

Diese Aufgabe wird durch den Gegenstand der unabhängigen Patentansprüche gelöst.

Eine Erkenntnis der vorliegenden Erfindung besteht darin, erkannt zu haben, dass durch die Kombination einer Bewegung der Strahlumlenkeinrichtung der Multiaperturabbildungsvorrichtung mit einer Bewegung der Arraylinsen eine insgesamt geringere resultierende Bauhöhe für die verschiedenen Umlenkpositionen der Strahlumlenkeinrichtung erhalten werden kann, was zu einem geringen Maß an Überhang der Strahlumlenkeinrichtung bezüglich der Optiken führt.

Eine erfindungsgemäße Multiaperaturabbildungsvorrichtung nach Anspruch 1 umfasst einen Bildsensor, ein Array von optischen Kanälen, wobei jeder optische Kanal eine Optik zur Abbildung eines Teilgesichtsfelds eines Gesamtgesichtsfelds auf einen Bildsensorbereich des Bildsensors umfasst, und eine Strahlumlenkeinrichtung, die zwischen einer ersten Rotationsstellung und einer zweiten Rotationstellung durch Ausführen einer Umschaltbewegung umschaltbar ist, und die ausgebildet ist, um in einer ersten Rotationsstellung Strahlengänge der optischen Kanäle in eine erste Blickrichtung umzulenken und um die Strahlengänge der optischen Kanäle in einer zweiten Rotationsstellung in eine zweite Blickrichtung umzulenken, wobei die Strahlumlenkeinrichtung zwei gegenüberliegende und reflektierend gebildete Hauptseiten aufweist und ausgebildet ist, um in der ersten Stellung die Strahlengänge mit einer ersten Hauptseite der Strahlumlenkeinrichtung in die erste Blickrichtung zu lenken und in der zweiten Stellung die Strahlengänge mit einer zweiten Hauptseite in die zweite Blickrichtung zu lenken. Das Array ist ausgebildet, um basierend auf der Umschaltbewegung eine Anpassungsbewegung zum Anpassen einer Ausrichtung des Arrays bezüglich der Strahlumlenkeinrichtung auszuführen.

Die Erfindung umfasst weiterhin ein Abbildungssystem nach Anspruch 14, ein Verfahren zum Erfassen eines Objektbereichs nach Anspruch 15 und ein Verfahren zum Bereitstellen einer Multiaperturabbildungsvorrichtung nach Anspruch 16.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1a     eine schematische perspektivische Ansicht einer Multiaperturabbildungsvorrichtung gemäß einem Ausführungsbeispiel;

Fig. 1b     eine schematische Seitenschnittansicht der Multiaperturabbildungsvorrichtung aus Fig. 1a mit einer ersten Rotationsstellung einer Strahlumlenkeinrichtung;

Fig. 1c     eine schematische Seitenschnittansicht der Multiaperturabbildungsvorrichtung aus Fig. 1a in einem theoretischen Zustand und mit einer zweiten Rotationsstellung einer Strahlumlenkeinrichtung;

Fig. 1d     eine schematische Seitenschnittansicht der Multiaperturabbildungsvorrichtung aus Fig. 1a in einem erfindungsgemäßen Zustand und mit der zweiten Rotationsstellung einer Strahlumlenkeinrichtung, bei dem ein Array von optischen Kanälen eine translatorische Anpassungsbewegung ausgeführt hat;

Fig. 1e     eine schematische Seitenschnittansicht einer modifizierten Multiaperturabbildungsvorrichtung mit einem einzeiligen Array mit einer ersten Blickrichtung gemäß einem Ausführungsbeispiel;

Fig. 1f    eine schematische Seitenschnittansicht der Multiaperturabbildungsvorrichtung aus Fig. 1e mit einer zweiten Blickrichtung gemäß einem Ausführungsbeispiel;

Fig. 2a    eine schematische Seitenschnittansicht einer Multiaperturabbildungsvorrichtung gemäß einem Ausführungsbeispiel in einem ersten Rotationszustand der Strahlumlenkeinrichtung;

Fig. 2b    eine schematische Seitenschnittansicht der Multiaperturabbildungsvorrichtung aus Fig. 2a gemäß einem Ausführungsbeispiel in einem zweiten Rotationszustand der Strahlumlenkeinrichtung, bei dem ein Array von optischen Kanälen eine rotatorische Anpassungsbewegung ausgeführt hat;

Fig. 2c    eine schematische Seitenschnittansicht der Multiaperturabbildungsvorrichtung aus Fig. 2a in einem dritten Rotationszustand der Strahlumlenkeinrichtung, gemäß einem Ausführungsbeispiel;

Fig. 3a-d    schematische Seitenschnittansichten einer Vorrichtung gemäß einem Ausführungsbeispiel, bei dem die Strahlumlenkeinrichtung aus einem Gehäuse der Vorrichtung herausbewegbar ist;

Fig. 3e-f    schematische Aufsichten auf Ausgestaltungen der Multiaperturabbildungsvorrichtung gemäß den Fig. 3a-d gemäß Ausführungsbeispielen;

Fig. 4    eine schematische Seitenschnittansicht einer Multiaperturabbildungsvorrichtung gemäß einem Ausführungsbeispiel, bei dem ein Array optischer Kanäle einzeilig gebildet ist;

Fig. 5    eine schematische Seitenschnittansicht einer Multiaperturabbildungsvorrichtung gemäß einem Ausführungsbeispiel, bei dem die Strahlumlenkeinrichtung ausgebildet ist, um eine Rotationsbewegung um eine Drehachse auszuführen;

Fig. 6a-f    vorteilhafte Ausgestaltungen einer Strahlumlenkeinrichtung gemäß Ausführungsbeispielen;

Fig. 7a    eine schematische Ansicht einer Multiaperturabbildungsvorrichtung gemäß einem Ausführungsbeispiel in einer ersten rotatorischen Stellung der Strahlumlenkeinrichtung, in welcher eine Blendenstruktur einen Spalt verschließt;

Fig. 7b    eine schematische Ansicht der Multiaperturabbildungsvorrichtung aus Fig. 5a in der zweiten Stellung der Strahlumlenkeinrichtung dargestellt, wobei die Blendenstruktur einen Spalt an einer anderen Stelle verschließt;

Fig. 7c    eine schematische Ansicht der Multiaperturabbildungsvorrichtung aus Fig. 5a in einer optionalen Zwischenstellung zwischen der ersten Stellung und der zweiten Stellung;

Fig. 8    eine schematische Seitenschnittansicht einer Multiaperturabbildungsvorrichtung gemäß einem Ausführungsbeispiel die einen optischen Bildstabilisator aufweist;

Fig. 9    eine schematische perspektivische Ansicht einer Multiaperturabbildungsvorrichtung gemäß einem Ausführungsbeispiel, die transparente Strukturen aufweist, die entlang der Blickrichtungen der Multiaperturabbildungsvorrichtung ausgehend von der Strahlumlenkeinrichtung angeordnet sind;

Fig. 10    eine schematische Seitenschnittansicht einer Multiaperturabbildungsvorrichtung gemäß einem Ausführungsbeispiel, die optional die transparenten Strukturen umfassen kann, ohne weiteres jedoch auch ohne dieselben ausführbar ist;

Fig. 11    eine schematische Darstellung eines Gesamtgesichtsfelds gemäß einem Ausführungsbeispiel, wie es beispielsweise mit einer vorangehend beschriebenen Multiaperturabbildungsvorrichtung erfassbar ist;

Fig. 12    eine schematische perspektivische Ansicht eines Abbildungssystems, das ein Gehäuse und zumindest eine erste und eine zweite Multiaperturabbildungsvorrichtung aufweist;

Fig. 13    einen schematischen Aufbau umfassend eine erste Multiaperturabbildungsvorrichtung und eine zweite Multiaperturabbildungsvorrichtung, wie er beispielsweise in dem Abbildungssystem aus Fig. 12 angeordnet sein kann, gemäß einem Ausführungsbeispiel;

Fig. 14    ein schematisches Flussdiagramm eines Verfahrens zum Bereitstellen einer Multiaperturabbildungsvorrichtung gemäß einem Ausführungsbeispiel; und

Fig. 15    ein schematisches Flussdiagramm eines Verfahren zum Erfassen eines Objektbereichs gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungsbeispiele beziehen sich auf Multiaperturabbildungsvorrichtungen. Multiaperturabbildungsvorrichtungen können konfiguriert sein, um mittels einer Mehrzahl oder Vielzahl von Aperturen ein Gesamtgesichtsfeld (Gesamtobjektbereich) zu erfassen, indem mehrere Teilgesichtsfelder (Teilobjektbereiche) erfasst werden, die miteinander teilweise und unvollständig überlappen. Hierfür kann die Multiaperturabbildungsvorrichtung einen Bildsensor, ein Array von optischen Kanälen und eine Strahlumlenkeinrichtung umfassen.

Der Bildsensor kann mehrere Bildsensorbereiche aufweisen, auf welche jeweils ein Teilgesichtsfeld abgebildet wird. Der Bildsensor kann ausgebildet sein, um ein analoges oder digitales Bildsensorsignal auszugeben, das auf dem erfassten Teilgesichtsfeld basiert. Die Bildsensorbereiche können Teil eines einstückigen Bildsensor sein und/oder können zumindest teilweise von anderen Bildsensorbereichen mechanisch entkoppelt sein (mehrstückiger Bildsensor), etwa um für einen, mehrere oder alle Bildsensorbereiche eine individuelle Bewegung des Bildsensorbereichs zu ermöglichen.

Das Array von optischen Kanälen kann als eine ein- oder mehrzeilige Aneinanderreihung von optischen Kanälen implementiert werden. Jeder optische Kanal umfasst dabei eine Optik zur Abbildung eines der Teilgesichtsfelder auf einen Bildsensorbereich des Bildsensors. Jede der Optiken kann eine oder mehrere Optikelemente, etwa Linsen, diffraktive Elemente, refraktive Elemente, Blendenelemente oder dergleichen umfassen. Bspw. können mehrere Optikelemente gemeinsam einen Optikstapel bilden, der zumindest einen Teil der Optik des optischen Kanals bildet. Optikelemente eines Optikstapels können von einem gemeinsamen Stapelträger oder Linsenhalter gegeneinander und/oder gegenüber einem optionalen Träger oder dem Substrat gehalten werden. Der Stapelträger oder Linsenhalter kann einen konstanten oder mittels eines Kraftglieds (Aktuator) veränderlichen Abstand zwischen den Optikelementen ermöglichen, etwa zum Einstellen einer Abbildungsfunktion der Optik und/oder eines Fokus.

Die optischen Kanäle des Arrays von optischen Kanälen können einzeilig oder mehrzeilig angeordnet sein, wobei eine Zeile des Arrays so gebildet sein kann, dass die optischen Kanäle einer Zeile im Wesentlichen entlang einer Geraden angeordnet sind, die durch die äußeren optischen Kanäle der Zeile bestimmt ist. Im Wesentlichen kann hier so verstanden werden, dass eine Abweichung von höchstens 15 %, höchstens 10 % oder höchstens 5 % vom Verlauf der Linie zulässig ist.

Die Optiken unterschiedlicher optischer Kanäle können gleich oder von einander verschieden gebildet sein, um eine gleiche oder bezüglich einiger, mehrerer oder aller optischen Kanäle kanalindividuelle Abbildungsfunktion zu erhalten. Die Optiken der optischen Kanäle können gruppenweise mit zumindest einer, mehrerer oder aller Optiken je Gruppe von optischen Kanälen mit einem Substrat verbunden sein, um eine Abstützung und/oder Bewegung der Gruppe von Optiken zu erhalten. Mehrere Optiken einer Gruppe von optischen Kanälen können untereinander individuell mit dem Substrat verbunden sein oder können in Untergruppen mit zumindest einer, mehrerer oder aller Optiken der Optiken der Gruppe von optischen Kanälen einen gemeinsamen Träger aufweisen, an welchem die Optiken der Untergruppe von Optiken angeordnet sind und welcher eine Anordnung der Optiken gegenüber dem Substrat ermöglicht. Der Träger kann zumindest für den von der Multiaperturabbildungsvorrichtung zu erfassenden Wellenlängenbereich in Durchlassbereichen in einem Maß von zumindest 50 %, zumindest 70 %, zumindest 90 % oder gar zumindest 98 % transparent gebildet sein. In den Durchlassbereichen können Strahlengänge der optischen Kanäle können durch den transparenten Träger hindurchverlaufen. Abseits der Durchlassbereiche kann der Träger ebenfalls transparent gebildet sein, kann alternativ aber auch für zumindest einen Teil des Wellenlängenbereichs weniger transparent oder gar opak gebildet sein, um eine Filterung oder eine Blendenfunktion bereitzustellen, etwa zur Falschlichtunterdrückung. Ein derartiger Träger ermöglicht das Halten und/oder Bewegen der Optiken der Gruppe von optischen Kanäle gemeinsam gegenüber dem Substrat, so dass die Bewegung mit einer hohen Präzision und/oder das Halten mit einer geringen Anzahl von Elementen möglich ist.

Der Träger kann direkt mit dem Substrat verbunden sein. Alternativ oder zusätzlich kann der Träger mit einer anderen Komponente verbunden sein, etwa mit dem Bildsensor und/oder mit einem Gehäuse zum Hausen der Optiken und/oder des Bildsensors und/oder der Strahlumlenkeinrichtung. Das bedeutet, die Optiken und/oder der Träger können an dem Substrat aufgehängt werden. Bspw. können die Optiken und/oder Träger unmittelbar an dem Substrat beweglich oder unbeweglich gelagert sein oder mittelbar, etwa über einen Aktuator. Auch können die Optiken eines, mehrerer oder aller optischen Kanäle und zugeordnete Bildsensorbereiche mechanisch mit einander gekoppelt sein, etwa an, auf oder in einem Verfahrschlitten zum gemeinsamen Bewegen der Komponenten. Der Verfahrschlitten kann eine mechanische Verbindung zwischen dem Gehäuse 23 und der Strahlumlenkeinrichtung 18 bereitstellen und kann optional auch eine mechanische Verbindung zu dem Bildsensor 12 und/oder dem Array 14 bereitstellen, das bedeutet, die genannten Komponenten umfassen. Der Verfahrschlitten kann ein Gehäuse aufweisen.

Die Strahlumlenkeinrichtung kann ausgebildet sein, um die Strahlengänge der optischen Kanäle aus einer Richtung zwischen Bildsensor und Optiken hin zu dem oder den Gesamtgesichtsfeldern zu lenken. Bspw. kann die Strahlumlenkeinrichtung konfiguriert sein, um die Strahlengänge zeitlich abwechselnd in einer ersten Stellung in eine erste Richtung hin zu einem ersten Gesamtgesichtsfeld und in einer zweiten Stellung in eine zweite Richtung hin zu einem zweiten Gesamtgesichtsfeld zu lenken. Alternativ kann auch eine parallele Erfassung des ersten und zweiten Gesamtgesichtsfeldes erfolgen, etwa durch Vorsehen einer Anzahl von optischen Kanälen zum gleichzeitigen Erfassen der Teilgesichtsfelder des ersten und der Teilgesichtsfelder des zweiten Gesamtgesichtsfeldes sowie einem Ablenken einer ersten Anzahl von optischen Kanäle hin zu dem ersten Gesamtgesichtsfeld und einer zweiten Anzahl von optischen Kanäle hin zu dem zweiten Gesamtgesichtsfeld.

Eine Umlenkung eines Strahlenganges eines optischen Kanals kann in Strahlumlenkbereichen der Strahlumlenkeinrichtung erfolgen. Die Strahlumlenkeinrichtung kann als Spiegel gebildet sein, wobei der Spiegel über mehrere oder gar alle Strahlumlenkbereiche eben ausgebildet sein kann. Bspw. können die Strahlengänge der optischen Kanäle ein einem Verlauf von dem Bildsensor zu der Strahlumlenkeinrichtung mit einer zweidimensionalen Divergenz oder Ablenkung der Blickrichtung ausgestattet werden, so dass die optischen Kanäle durch gleiches Umlenken in zweidimensional in dem Gesamtgesichtsfeld verteilte Teilgesichtsfelder gelenkt werden. Alternativ kann die Strahlumlenkeinrichtung auch so gebildet werden, dass zumindest zwei Abschnitte der Strahlumlenkeinrichtung zueinander entlang zumindest einer Richtung geneigt zu einander sind, um eine Ablenkung oder Divergenz der optischen Kanäle in die zumindest eine Richtung in dem Gesamtgesichtsfeld teilweise oder ganz zu implementieren, so dass die optischen Kanäle in einem Bereich zwischen dem Bildsensor und der Strahlumlenkeinrichtung entlang der korrespondierenden Richtung in geringerem Maße mit einer Richtungsdivergenz versehen werden können oder gar parallel verlaufen können.

Die Abschnitte können Strahlumlenkbereiche für einen oder mehrere optische Kanäle aufweisen und können als Facetten bezeichnet werden. Bspw. kann eine Facette je optischen Kanal vorgesehen sein, es können aber auch Facetten von mehreren optischen Kanälen genutzt werden. Jeder optische Kanal kann einer Facette zugeordnet sein. Wird der Fall betrachtet, dass die Strahlumlenkeinrichtung lediglich eine Facette aufweist, so kann dies als ebener Spiegel implementiert werden.

Die Strahlumlenkeinrichtung kann ausgebildet sein, um in der ersten Stellung die Strahlengänge mit einer ersten Hauptseite oder Spiegelseite der Strahlumlenkeinrichtung in die erste Richtung zu lenken und in der zweiten Stellung die Strahlengänge mit der ersten Hauptseite oder Spiegelseite in die zweite Richtung zu lenken. Alternativ kann die Strahlumlenkeinrichtung ausgebildet sein, um in der zweiten Stellung die Strahlengänge mit einer zweiten Hauptseite oder Spiegelseite in die zweite Richtung zu lenken. Ein Umschalten zwischen der ersten Stellung und der zweiten Stellung kann durch eine translatorische und/oder rotatorische Bewegung der Strahlumlenkeinrichtung erfolgen. Bei einer translatorischen Bewegung kann die Strahlumlenkeinrichtung einen ersten axialen Abschnitt aufweisen, der eine Umlenkung der Strahlengänge in die erste Richtung ermöglicht und einen zweiten axialen Abschnitt aufweisen, der eine Umlenkung der Strahlengänge in die zweite Richtung ermöglicht. Zum Umschalten zwischen der ersten Stellung und der zweiten Stellung kann die Strahlumlenkeinrichtung entlang einer axialen Richtung, entlang derer die axialen Abschnitte angeordnet sind, etwa parallel zu einer Zeilenerstreckungsrichtung des Arrays, translatorisch bewegt werden.

Für eine Nutzung einer rotatorischen Bewegung kann die Strahlumlenkeinrichtung in der ersten Stellung einen ersten Anstellwinkel einer reflektierenden ebenen oder facettierten Hauptseite zu dem Array aufweisen, um die Strahlengänge in die erste Richtung umzulenken und kann in der zweiten Stellung einen zweiten Anstellwinkel, etwa um 90° gedreht zu dem ersten Anstellwinkel, aufweisen, um die Strahlengänge in die zweite Richtung umzulenken. Dies kann zu einer Situation führen, in welcher eine Oberflächennormale der Hauptseite der Strahlumlenkeinrichtung parallel zu einer Richtung zwischen den Optiken des Arrays und der Strahlumlenkeinrichtung zeigt. In dieser Orientierung kann eine Raumbedarf der Strahlumlenkeinrichtung senkrecht zu der Richtung und senkrecht zu einer Zeilenerstreckungsrichtung des Arrays hoch oder maximal sein. Die Strahlumlenkeinrichtung kann zwei reflektierende Hauptseiten aufweisen und beidseitig reflektiv gebildet sein, etwa als beidseitig reflektiv gebildeter ebener oder facettierter Spiegel. Die Strahlumlenkeinrichtung kann ausgebildet sein, um in der ersten Stellung die Strahlengänge mit einer ersten der Hauptseiten in die erste Richtung umzulenken und um in der zweiten Stellung die Strahlengänge mit einer zweiten der Hauptseiten in die zweite Richtung umzulenken. Dies ermöglicht eine Umschaltung zwischen der ersten und der zweiten Stellung mit einem geringen rotatorischen Umschaltwinkel, somit einem geringen Stellweg, was eine schnelle und energiearme Umschaltung ermöglicht. Ferner kann die Position in welcher die Oberflächennormale parallel zu einer Richtung zwischen Array und Strahlumlenkeinrichtung ist, vermieden werden, so dass eine geringe Bauhöhe erhalten werden kann. Die Hautseiten können parallel oder geneigt zu einander sein.

Die Strahlumlenkeinrichtung kann an einem Substrat aufgehängt werden und translatorisch und/oder rotatorisch gelagert sein. Bspw. kann die Strahlumlenkeinrichtung unmittelbar an dem Substrat gelagert sein oder mittelbar, etwa über einen Aktuator.

Manche der hierin beschriebenen Ausführungsbeispiele beziehen sich auf eine Bewegung von Komponenten, etwa dem Array von optischen Kanälen, der Strahlumlenkeinrichtung, Optiken oder dem Bildsensor. Für den Erhalt einer derartigen Bewegung können steuerbare Aktuatoren eingesetzt werden. Diese können unter Nutzung pneumatischer, hydraulischer, piezoelektrischer Aktuatoren, DC-Motoren, Schrittmotoren, thermischer Aktuatoren, elektrostatischer Aktuatoren, elektrostriktiver und/oder magnetostriktiver Aktuatoren oder Antriebe erfolgen, sofern es nicht anders beschrieben ist.

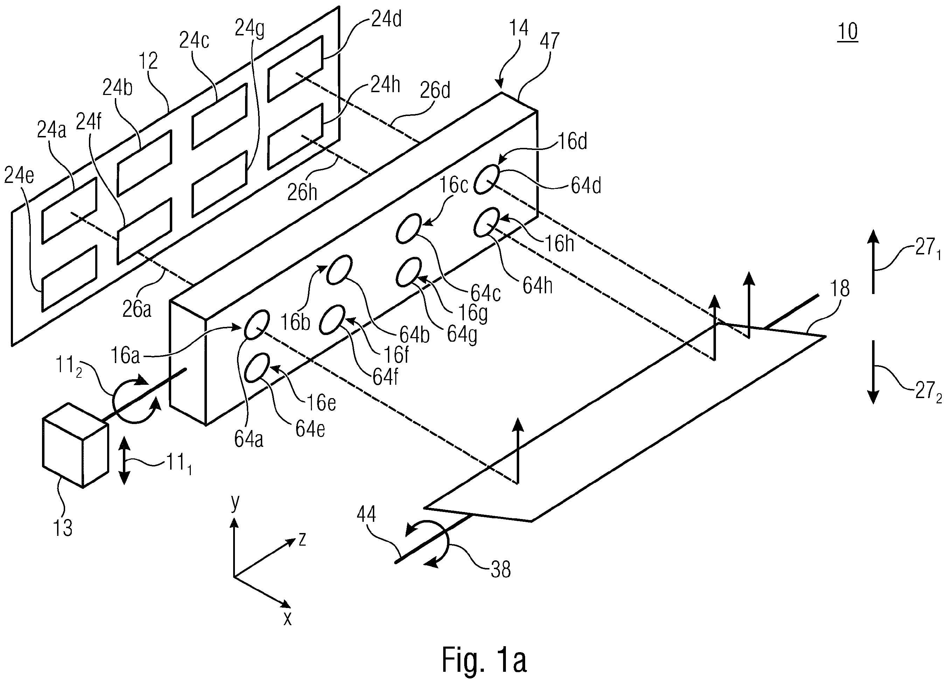

Fig. 1a zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor, ein Array von optischen Kanälen 16a-h und eine Strahlumlenkeinrichtung 18. Jeder optische Kanal 16a-h umfasst eine Optik 64a-h zur Abbildung eines Teilgesichtsfelds eines Gesamtgesichtsfelds auf einen Bildsensorbereich 24a-h des Bildsensors 12. Die optischen Kanäle 16a-h können als ein Verlauf von Strahlengängen 26a-h verstanden werden. die Strahlengänge 26a-h bezeichnen schematisch Mittenstrahlen der Gesamtstrahlengänge, das bedeutet, jedem Mittenstrahl ist ein Strahlenbündel mit Randstrahlen zugeordnet. Die Strahlengänge 26a-h können durch die in dem Array 14 angeordnete jeweilige Optik 64a-h beeinflusst sein, etwa durch Streuung oder Bündelung. Die einzelnen optischen Kanäle 16a-h können jeweils eine vollständige Abbildungsoptik bilden oder umfassen und mindestens eine optische Komponente bzw. Optik, etwa eine refraktive, diffraktive oder hybride Linse aufweisen und können einen Ausschnitt des mit der Multiaperturabbildungsvorrichtung insgesamt aufgezeichneten Gesamtobjekts abbilden. Das bedeutet, eine, mehrere oder alle der Optiken 64a-h können auch eine Kombination von optischen Elementen sein. Bezüglich eines, mehreren oder allen der optischen Kanäle 16a-h kann eine Apperturblende angeordnet sein.

Die Optiken 64a-h können einzeln, gruppenweise oder gemeinsam direkt oder mittels eines Linsenhalters an einem Träger 47 angeordnet sein. Der Träger kann ein zumindest lokal in einem Bereich der Strahlengänge transparent gebildetes Element sein, etwa ein Glasträger. Alternativ oder zusätzlich kann das Array 14 auch ein Gehäuse aufweisen, in welchem die Optiken 64a-h angeordnet sind, wobei optional auch der Bildsensor 12 in dem Gehäuse angeordnet sein kann. Alternativ kann auf die Anordnung des Trägers 47 auch verzichtet werden, etwa wenn die Optiken 64a-h an einem Substrat aufgehängt werden. Ein derartiges Substrat kann unbeweglich sein, wobei es aber auch möglich ist, das Substrat beweglich auszugestalten, etwa um eine Bewegung der Optiken 64a-h zur Bildstabilisierung und/oder Fokussierung zu ermöglichen.

Die Bildsensorbereiche 24a-h können beispielsweise jeweils aus einem Chip gebildet sein, der ein entsprechendes Pixelarray umfasst, wobei die Bildsensorbereiche 24a-h auf einem gemeinsamen Substrat bzw. einem gemeinsamen Schaltungsträger, wie einer gemeinsamen Platine oder einem gemeinsamen Flexboard montiert sein können. Alternativ wäre es natürlich auch möglich, dass die Bildsensorbereiche 24a-h jeweils aus einem Teil eines gemeinsamen Pixelarrays, das sich kontinuierlich über die Bildsensorbereiche 24a-h erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 24a-h ausgelesen. Verschiedene Mischungen dieser Alternativen sind natürlich ebenfalls möglich, wie z. B. das Vorhandensein eines Chips für zwei oder mehr optische Kanäle und eines weiteren Chips für wiederum andere optische Kanäle oder dergleichen. In dem Fall mehrerer Chips des Bildsensors 12 können diese beispielsweise auf einer oder mehreren Platinen oder Schaltungsträgern montiert sein, wie z. B. alle gemeinsam oder gruppenweise oder dergleichen.

Die Strahlumlenkeinrichtung 18 ist ausgebildet, um die Strahlengänge 26a-h der optischen Kanäle 16a-h umzulenken. Hierfür kann die Strahlumlenkeinrichtung 18 beispielsweise eine reflektierende Hauptseite aufweisen, die den Optiken 64a-h bzw. dem Array 14 zugewandt und diesbezüglich geneigt ist, d. h., eine Rotationsstellung aufweist. Durch die Neigung können die Strahlengänge 26a-h in eine Blickrichtung $27_1$ umgelenkt werden, wobei die Blickrichtung $27_1$ eine relative Richtung bezüglich der Multiaperturabbildungsvorrichtung 10 beschreiben kann, entlang der der zu erfassende Objektbereich angeordnet ist. Wie es nachfolgend detailliert beschrieben ist, kann die Strahlumlenkeinrichtung 18, die zwischen der dargestellten ersten Rotationsstellung und einer zweiten Rotationstellung umschaltbar sein, etwa durch Ausführen einer Umschaltbewegung. Die Umschaltbewegung kann eine Rotationsbewegung 38 um eine Drehachse 44 der Stahlumlenkeinrichtung 18 umfassen. Basierend auf der Rotationsbewegung 38 kann somit zumindest die erste Rotationsstellung oder Stellung und die zweite Rotationsstellung oder Stellung der Strahlumlenkeinrichtung 18 erhalten werden. In den unterschiedlichen Rotationsstellungen können die Strahlengänge 26a-h der optischen Kanäle 16a-h in unterschiedliche Blickrichtungen $27_1$ bzw. $27_2$ umgelenkt werden. Hierfür kann die Multiaperturabbildungsvorrichtung 10 einen nicht dargestellten Aktuator umfassen, der die Rotationsbewegung bzw. Umschaltbewegung bereitstellen kann.

Das Array 14 ist ausgebildet, um basierend auf der Umschaltbewegung 38 eine Anpassungsbewegung 11 zum Anpassen einer Ausrichtung des Arrays 14 bezüglich der Strahlumlenkeinrichtung 18 auszuführen. Hierfür kann die Multiaperturabbildungsvorrichtung 10 einen Aktuator 13 umfassen, der ausgebildet ist, um eine translatorische Anpassungsbewegung $11_1$ und/oder eine rotatorische Anpassungsbewegung $11_2$ der Optiken

64a-h bereitzustellen. Das bedeutet, der Aktuator 13 kann eine die Anpassungsbewegung 11 bereitstellen, wobei dies ein gemeinsames Bewegen sämtlicher Optiken 64a-h des Arrays 14 umfassen kann, etwa durch Bewegen des Trägers 47 und/oder eines Gehäuses. Alternativ können die Optiken 64a-h auch individuell bewegt werden, etwa wenn diese einzeln an einem Substrat angeordnet oder abgestützt sind. Die Anpassungsbewegung kann gemeinsam mit dem Bildsensor 12 ausgeführt werden, das bedeutet, der Bildsensor 12 kann gemäß einem Ausführungsbeispiel mit den Optiken 64a-h des Arrays 14 gemeinsam im Rahmen der Anpassungsbewegung 11 bewegt werden. Optional können Aktuatoren einer Fokussiereinrichtung zum Bereitstellen eines Autofokus durch Erzeugen einer Relativbewegung zwischen dem Array 14 und dem Bildsensor 12 entlang einer axialen Richtung der Verläufe der Strahlengänge und/oder Aktuatoren eines optischen Bildstabilisators mitbewegt werden.

Die Anpassungsbewegung 11 ermöglicht es, durch geometrische Rahmenbedingungen erforderliche Überhänge der Strahlumlenkeinrichtung 18 gegenüber dem Array 14 entlang einer Dickenrichtung y, die senkrecht zu einer axialen Richtung x zwischen dem Bildsensor 12 und dem Array 14 und senkrecht zu einer Zeilenerstreckungsrichtung z des Arrays 14 angeordnet ist, so im Raum anzuordnen, dass eine Dicke (Abmessung) der Multiaperturabbildungsvorrichtung entlang der y-Richtung geringer ist als bei einer unbewegten Anordnung des Arrays 14.

Die Anpassungsbewegung 11 kann hierbei von anderen Bewegungen abgegrenzt werden, etwa von Bewegungen zur Fokussierung, die bspw. einen Abstand zwischen dem Array 14 und dem Bildsensor 12 verändern. Das bedeutet, dass die Anpassungsbewegung in Abwesenheit einer translatorischen Abstandsänderung zwischen dem Array 14 und dem Bildsensor 12 entlang einer Richtung parallel zu einer Erstreckung der optischen Kanäle zwischen dem Bildsensor 12 und dem Array 14 erfolgt, also entlang der Richtung x. Das soll jedoch nicht dahingehend einschränken, dass die Anpassungsbewegung nicht mit einer Bewegung zur Fokussierung kombinierbar oder überlagerbar wäre, was in Ausführungsbeispielen vorgesehen ist. Jedoch handelt es sich dann um die Überlagerung zweier oder mehrerer Bewegungen, von denen die Anpassungsbewegung eine ist. Die Anpassungsbewegung selbst und alleinig kann dann unter Beibehaltung des Abstandes ausgeführt werden.

Durch die optischen Kanäle kann eine Mehrzahl oder Vielzahl von Teilgesichtsfeldern eines Gesamtgesichtsfeldes erfassbar sein, wobei jedes Teilgesichtsfeld von zumindest einem optischen Kanal 16a-h erfassbar ist. Jedem optischen Kanal kann somit ein Teilgesichtsfeld zugeordnet sein, welches mit dem optischen Kanal erfasst wird. Jedem Teilgesichtsfeld kann, bspw. ausgehend von der Multiaperturabbildungsvorrichtung 10 und/oder der Strahlumlenkeinrichtung 18 eine Richtung zugeordnet sein, in die der jeweilige Strahlengang 26a-h des optischen Kanals 16a-h mit der Strahlumlenkeinrichtung 18 umgelenkt wird.

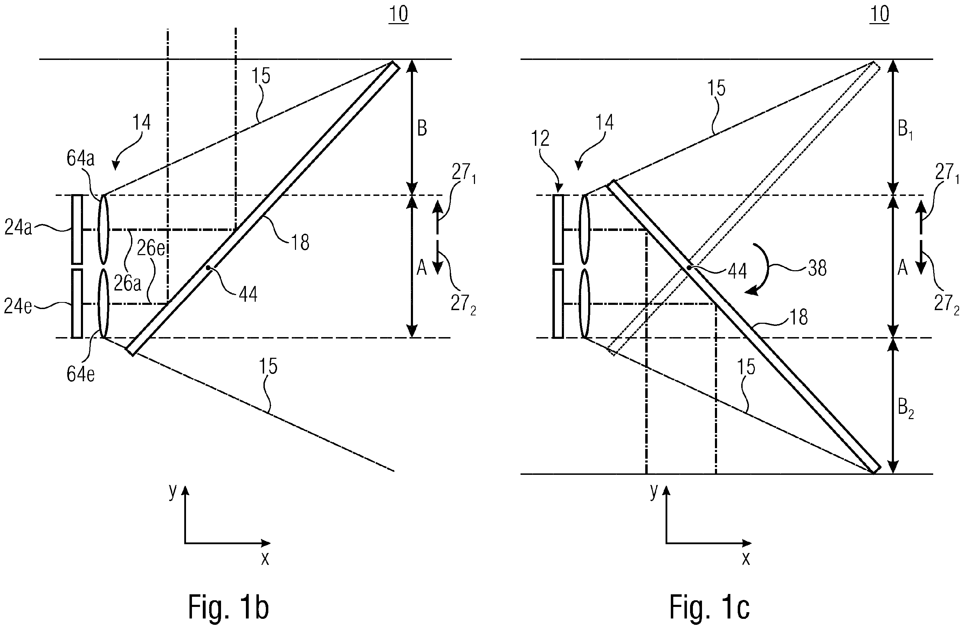

Fig. 1b zeigt eine schematische Seitenschnittansicht der Multiaperturabbildungsvorrichtung 10, wobei beispielhaft eine Schnittebene durch die Bildsensorbereiche 24a und 24e sowie die Optiken 64a und 64e dargestellt ist. Die Neigung der Strahlumlenkeinrichtung 18 gegenüber den Strahlengängen 26a und 26e zum Umlenken derselben kann dazu führen, dass die Strahlumlenkeinrichtung 18 entlang der Dickenrichtung y einen variablen, d. h. zunehmenden oder abnehmenden Abstand entlang der x-Richtung und bezüglich der Optiken 64a und 64e aufweist. Die divergierenden Strahlen des Strahlengangs der optischen Kanäle treffen bevorzugt in einem Umfang von zumindest 90 %, zumindest 95 % oder zumindest 99,5 %, idealerweise zu 100 % auf die Strahlumlenkeinrichtung 18. Jeder der optischen Kanäle des Arrays 14 und somit auch die Kombination mehrerer optischer Kanäle über mehrere Zeilen kann eine Divergenz der Strahlengänge aufweisen, wie es beispielsweise durch die Randstrahlen 15 des Arrays 14 angedeutet ist. Die Divergenz oder Strahlaufweitung entlang der x-Richtung in Kombination mit der Neigung der Strahlumlenkeinrichtung 18 führt nun dazu, dass zusätzlich zu einer Abmessung A der Multiaperturabbildungsvorrichtung 10, die durch den Bildsensor 12 und das Array 14 bedingt ist, ein Überhang B oder $B_1$ der Strahlumlenkeinrichtung 18 gegenüber den Optiken 64a bis 64e und/oder des Bildsensors 12 erforderlich ist, um die Strahlengänge der optischen Kanäle vollständig umzulenken. Eine unvollständige Umlenkung kann zu Einbußen in der Bildqualität führen.

Dadurch ergibt sich für die dargestellte Orientierung der Strahlumlenkeinrichtung 18 zum Umlenken der Strahlengänge 26a und 26e in die Blickrichtung $27_1$ ein Gesamtbauraumbedarf für die Multiaperturabbildungsvorrichtung 10 von A und zusätzlich B (A+B).

Fig. 1c zeigt eine schematische Seitenschnittansicht der Multiaperturabbildungsvorrichtung 10 in einem theoretischen Zustand, in welchem die Strahlumlenkeinrichtung 18 die Rotationsbewegung 38 zum Umschalten zwischen der Blickrichtung $27_1$ in die Blickrichtung $27_2$ der Multiaperturabbildungsvorrichtung 10 ausgeführt hat, das bedeutet, die Strahlumlenkeinrichtung 18 ist beispielsweise um die Drehachse 44 gedreht. Die Blickrichtungen $27_1$ und $27_2$ sind innerhalb eines Toleranzbereichs von $\pm$ 30°, $\pm$ 15° oder $\pm$ 5° gegenläufig oder antiparallel zueinander angeordnet. Entlang der Dickenrichtung y ist nun ein Übergang der Multiaperturabbildungsvorrichtung 10 entlang der anderen Richtung bzw. Blickrichtung $27_2$ erforderlich. In dem unbewegten Zustand des Arrays 14 ist zur Bereitstellung beider Blickrichtungen $27_1$ und $27_2$ nun ein erster Überhang $B_1$ entlang der ersten Blickrichtung $27_1$ und ein zweiter Überhang $B_2$ entlang der zweiten Blickrichtung $27_2$ erforderlich, wobei im symmetrischen Fall gelten kann, dass $B_1 = B_2$.

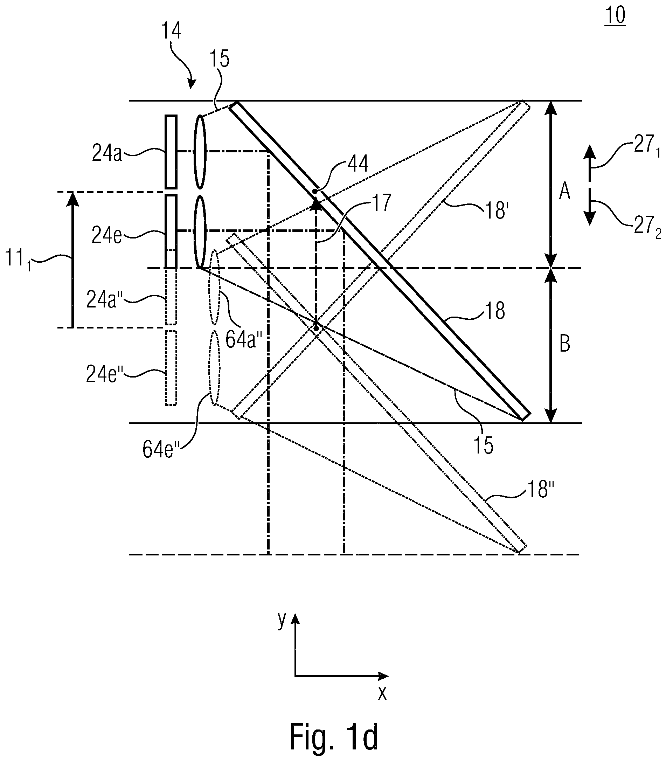

Fig. 1d zeigt eine schematische Seitenschnittansicht der Multiaperturabbildungsvorrichtung 10 gemäß einem Ausführungsbeispiel, in welchem das Array 14 die Anpassungsbewegung $11_1$ entlang der y-Richtung ausgeführt hat. Die Bildsensorbereiche 24a und 24e können beispielsweise mitbewegt werden, um eine konstante Relativposition des Arrays 14 zu dem Bildsensor 12 beizubehalten. Das bedeutet, die vertikale Position des Bildsensors, der Array-Optik und damit der optischen Achsen kann veränderlich sein. Alternativ kann durch andere Maßnahmen, etwa einer zusätzlichen Strahlumlenkung zwischen dem Array 14 und dem Bildsensor 12 und/oder einer größenmäßig redundanten Ausgestaltung des Bildsensors 12 auf eine Mitbewegung des Bildsensors 12 verzichtet werden.

In Kombination mit der lateralen Anpassungsbewegung $11_1$ kann die Strahlumlenkeinrichtung 18 ebenfalls lateral parallel zu der y-Richtung bewegt werden. Ein Umfang einer Bewegung 17 der Strahlumlenkeinrichtung 18 im Zusammenhang mit der Anpassungsbewegung $11_1$ kann innerhalb eines Toleranzbereichs von 20 %, 10 % oder 5 % gleich sein, wie ein Umfang der Anpassungsbewegung $11_1$. Die Umschaltbewegung der Strahlumlenkeinrichtung 18 zum Umschalten zwischen der Blickrichtung $27_1$ in die Blickrichtung $27_2$ kann somit die Rotationsbewegung 38 umfassen und zusätzlich die translatorische Bewegung 17 der Strahlumlenkeinrichtung 18 entlang der Bewegungsrichtung y. Die Anpassungsbewegung $11_1$ kann eine weitere translatorische Bewegung umfassen, die sich auf das Array 14 bezieht. Das Array 14 kann sich entlang derselben Bewegungsrichtung bewegen wie die Strahlumlenkeinrichtung 18 bewegt wird. Beispielsweise können während der Umschaltbewegung zum Umschalten in die zweite Blickrichtung $27_2$ die Anpassungsbewegung $11_1$ und die translatorische Bewegung 17 entlang der anderen Blickrichtung $27_1$ ausgeführt werden. Wie es durch die Bildsensorbereiche 24"a und 24"e sowie die Optiken 64"a und 64"e sowie die Strahlumlenkeinrichtung 18" dargestellt ist, die eine unveränderte Position der Komponenten in Übereinstimmung mit der Fig. 1c zeigen, kann ein Bauraumbedarf der Multiaperturabbildungsvorrichtung 10 entlang der Dickenrichtung y bis hin zu dem Umfang eines Überhangs $B_1$ oder $B_2$ verglichen mit dem theoretischen Zustand der Fig. 1c eingespart werden.

Werden die Strahlengänge des Arrays 14 jeweils symmetrisch um die Blickrichtung vor dem Auftreffen auf die Strahlumlenkeinrichtung 18 umgelenkt, wie es beispielsweise der Fall sein kann, wenn die Blickrichtungen $27_1$ und $27_2$ einen Winkel von 180° zueinander aufweisen und das Array 14 in einem Winkel von 90° bezüglich der Blickrichtungen $27_1$ und $27_2$ angeordnet ist, so kann eine Position oder laterale Abmessung der Strahlumlenkeinrichtung 18 entlang der Dickenrichtung y in den Rotationsstellungen zum Umlenken der Strahlengänge in die Blickrichtungen $27_1$ und $27_2$ gleich oder zumindest in einem Umfang von zumindest 20 %, zumindest 80 % oder zumindest 90 % gleich sein. Das bedeutet, dass eine Projektion der Strahlumlenkeinrichtung in eine Ebene parallel zur Zeilenerstreckungsrichtung, etwa parallel zu einem Verlauf der Strahlengänge zwischen Bildsensor 12 und Array 14 oder parallel zu einer Hauptseite des Bildsensors 12 in beiden Rotationsstellungen in dem Umfang gleich ist (überlappt) und bei 100 % Gleichheit deckungsgleich ist.

In dem dargestellten Fall der translatorischen Anpassungsbewegung $11_1$ kann die Ersparnis des Bauraums in der Verschiebung der Strahlumlenkeinrichtung 18 durch die translatorische Bewegung 17 beschrieben werden, die es ermöglicht, dass ein Teil eines durch die Umschaltbewegung erforderlichen Bewegungsraumes der Strahlumlenkeinrichtung verglichen mit dem unbeweglichen Array gemäß Fig. 1c reduziert ist, da der Bauraum mehrfach genutzt wird, während in dem theoretischen Zustand der Fig. 1c jeder Überlapp $B_1$ und $B_2$ in einem eigens dafür vorzusehenden Bauraum angeordnet ist. Die Anpassungsbewegung kann als eine an diese laterale Bewegung 17 angepasste Bewegung des Arrays 14 verstanden werden. Das Array 14 kann somit bewegt werden, um eine Relativposition zwischen dem Array 14 und der Strahlumlenkeinrichtung 18 anzupassen. Selbiges kann auch durch Erzeugen einer Rotationsbewegung des Arrays 14 erhalten werden, wie es später ausgeführt wird.

Eine erforderliche Bauhöhe und/oder eine Abmessung der Multiaperturabbildungsvorrichtung 10 innerhalb eines Gehäuses kann somit der Bedingung genügen, dass eine Dicke D kleiner ist als eine Höhe der Anordnung aus Bildsensor 12 und Array 14 und einem zweifachen Überhang B, das heißt, es kann gelten, dass

$$D < A + 2B.$$

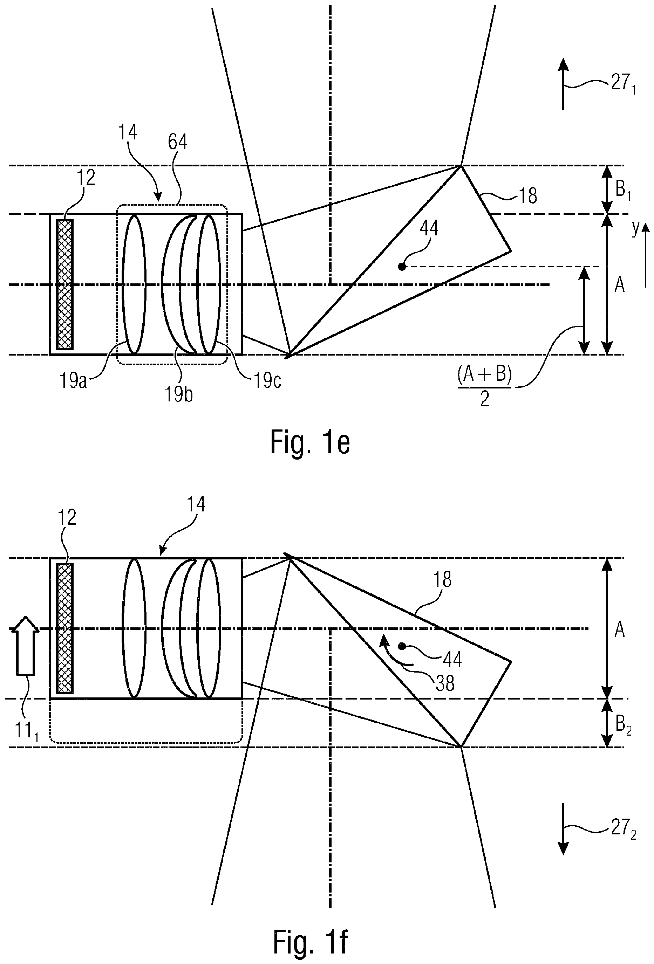

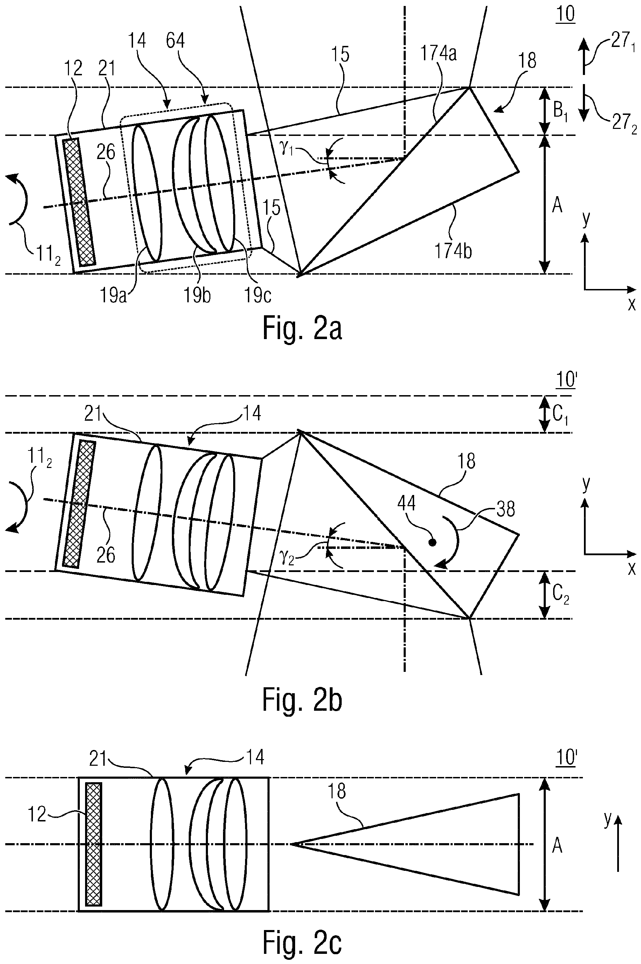

Fig. 1e und Fig. 1f zeigen eine schematische perspektivische Ansicht einer Multiaperturabbildungsvorrichtung 10', in einer ersten Rotationsstellung und in der zweiten Rotationsstellung. Neben anderen Modifikationen gegenüber der Multiaperturabbildungsvorrichtung 10, die im Zusammenhang mit den Fig. 2a bis Fig. 2c erläutert werden, ist das Array 14 einzeilig gebildet, das bedeutet, die Optiken 64 des Arrays 14 liegen in einer einzigen Zeile vor. Die Optiken 64 können über einen Träger und/oder einen Linsenhalter mechanisch mit einander verbunden sein, so dass eine gemeinsame Bewegung der Optiken 64 in dem Array 14 durch eine Bewegung/Aktuierung des Arrays 14 ermöglicht ist. Alternativ kann auch jede Optik 64 oder Linse 19a-c hiervon einzeln gehaltert und/oder bewegbar sein. Es sind auch kombinatorische Lösungen möglich, bei der beispielsweise ein gemeinsamer Träger und/oder eine mit einander verbundene Linsenhalterung implementiert ist, um eine gemeinsame Bewegung der Optiken 64 zu erhalten. Dies kann bspw. in einem Verfahrschlitten oder dergleichen erfolgen. Zusätzlich können weitere Aktoren vorgesehen sein, die eine kanalindividuelle Bewegung der Linsen ermöglicht, etwa zum Bereitstellen einer kanalindividuellen Fokussierung. Es versteht sich, dass eine kanalglobale Fokussierung auch ohne Modifikation durch eine gemeinsame Bewegung aller Linsen erhalten werden kann.

Gemäß einer Ausführungsform kann die Strahlumlenkeinrichtung 18 ausgebildet sein, um während der Umschaltbewegung ausschließlich eine Rotationsbewegung 38 um eine Rotationsachse 44 auszuführen. In diesem Fall kann die Rotationsachse oder Drehachse 44 in Dickenrichtung y in der Mitte der y-Ausdehnung der Facette bzw. Strahlumlenkeinrichtung angeordnet sein, das bedeutet, bspw. bei (A+B)/2, wobei A+B die Gesamtausdehnung der Strahlumlenkeinrichtung 18 entlang der Dickenrichtung y bezeichnet. Die Dickenrichtung y kann bei ungekippter Normalstellung des Arrays 14 senkrecht zu einer Zeilenerstreckungsrichtung des Arrays 14 und senkrecht zu einem Verlauf der Strahlengänge zwischen dem Bildsensor 12 und dem Array 14 angeordnet sein. Eine Zentrierung der Rotationsachse 44 auf die Mitte kann zwar möglichst exakt erfolgen, ist jedoch auch innerhalb eines Toleranzbereichs von 20 %, 10 % oder 5 % noch vorteilhaft. Das beutetet, dass die Umschaltbewegung bspw. ausschließlich durch die rotatorische Bewegung 38 ausgeführt wird, wobei eine Drehachse der Rotationsbewegung 38 entlang einer Dickenrichtung der Multiaperturabbildungsvorrichtung innerhalb eines Toleranzbereichs von 20 % zentriert zu einer entlang der Dickenrichtung y größten Ausdehnung der Strahlumlenkeinrichtung (18).

In Fig. 1f ist die Multiaperturabbildungsvorrichtung 10' nach ausführen der Anpassungsbewegung $11_1$ dargestellt. Die Strahlumlenkeinrichtung 18 wurde entsprechend mitbewegt, wie es im Zusammenhang mit der Fig. 1d beschreiben ist. Auch entlang der zweiten Blickrichtung $27_2$ kann ein Überhang $B_2$ angeordnet sein. Es kann gelten, dass $B_1 = B_2 = B$, etwa bei einer symmetrischen Ausgestaltung der Multiaperturabbildungsvorrichtung 10'. Ein gesamter Bauraumbedarf A+B kann gering sein, da lediglich ein Einfaches des Überhanges ausreichend sein kann, was gegenüber einer zweifachen Vorhaltung gemäß Fig. 1a geringer sein kann. Das bedeutet, dass die Umschaltbewegung eine rotatorische Bewegung 38 der Strahlumlenkeinrichtung 18 umfasst, wobei die Anpassungsbewegung 11 eine translatorische Bewegung $11_1$ des Arrays 14 der entlang einer Bewegungsrichtung/Dickenrichtung y umfasst, die senkrecht zu einer Zeilenerstreckungsrichtung z und parallel zu einer Dickenrichtung y der Multiaperturabbildungsvorrichtung ist.

Fig. 2a zeigt eine schematische Seitenschnittansicht der Multiaperturabbildungsvorrichtung 10', die nochmals beschrieben wird und die mehrere Veränderungen gegenüber der Multiaperturabbildungsvorrichtung 10 aufweist, die jeweils optional und einzeln und unabhängig voneinander implementierbar sind. Das Array 14 kann als einzeiliges Array gebildet werden, was im Hinblick auf die Fig. 1a beispielsweise durch die Anordnung lediglich der Optiken 64a bis 64d oder einer anderen Anzahl von Optiken in einer einzelnen und einzigen Zeile verstanden werden kann. Ferner kann eine Optik 64 eine Mehrzahl von Optikelementen 19a, 19b und/oder 19c aufweisen, die gemeinsam zur Strahlformung eingesetzt werden. Das Array 14 sowie der Bildsensor 12 können in einem gemeinsamen Gehäuse angeordnet werden, um eine gemeinsame Bewegung des Arrays 14 und des Bildsensors 12 zu ermöglichen. Ferner kann die Strahlumlenkeinrichtung 18 als einzelne oder eine Mehrzahl von Facetten gebildet sein, die gegeneinander geneigte Hauptseiten 174a und 174b aufweisen.

Die Multiaperturabbildungsvorrichtung 10' ist lediglich der besseren Darstellbarkeit gewählt. Alternativ kann ebenso und ohne Einschränkungen für die Beschreibung im Zusammenhang mit der Anpassungsbewegung $11_2$ die Multiaperturabbildungsvorrichtung 10 verwendet werden. In Fig. 2a ist die Multiaperturabbildungsvorrichtung 10' durch die Orientierung der Strahlumlenkeinrichtung 18 so ausgestaltet, dass eine Erfassung entlang der Blickrichtung $27_1$ möglich ist.

In Fig. 2b ist die Strahlumlenkeinrichtung 18 um die Rotationsachse 44 mit der Rotationsbewegung 38 gedreht. Beispielsweise kann dies im Uhrzeigersinn erfolgen. Die Anpassungsbewegung $11_2$ umfasst ebenfalls eine Rotationsbewegung des Arrays 14, beispielsweise durch Bewegen des Gehäuses 21. In den Fig. 2a und 2b kann die Anpassungsbewegung $11_2$ dazu führen, dass gegenüber einer symmetrischen Blickrichtung des Arrays 14 vor einem Auftreffen auf die Strahlumlenkeinrichtung 18, wie es beispielsweise in den Fig. 1b, 1c und 1d dargestellt ist, eine Vorab-Neigung der Strahlengänge 26 erhalten wird, so dass diese bezüglich der Referenzrichtung, beispielsweise parallel zu der x-Richtung, mit einem Winkel $\gamma_1$ und/oder $\gamma_2$ auftreffen, so dass eine Umlenkung der Strahlengänge 26 durch die Strahlumlenkeinrichtung 18 geringer ausfallen kann, verglichen mit einem Verlauf der Mittenstrahlen der Strahlengänge 26 parallel zu der x-Richtung.

Das Array 14 und der Bildsensor 12 können beispielsweise über das Gehäuse 21 mechanisch miteinander gekoppelt sein und ausgebildet sein, um die Anpassungsbewegung 11 gemeinsam auszuführen. Das Gehäuse 21 kann als Verfahrschlitten oder dergleichen bezeichnet werden. Dies kann auch so verstanden werden, dass anstelle einer vollständigen Beeinflussung der Blickrichtung durch die Strahlumlenkeinrichtung 18 bereits ein Teil der Umschaltung der Blickrichtungen $27_1$ und $27_2$ durch eine Bewegung des Arrays 14 erhalten werden kann. Sind die Blickrichtungen $27_1$ und $27_2$ beispielsweise entgegengesetzt zueinander angeordnet und weisen einen Winkel von 180° auf und ist die Strahlumlenkeinrichtung 18 beispielsweise durch einen beidseitigen reflektiven Spiegel mit zueinander parallel angeordneten Hauptseiten angeordnet, wie es in der Fig. 1b dargestellt ist, so ist in der Konfiguration gemäß Fig. 1b beispielsweise eine Rotation um 90° erforderlich, um Umschaltbewegung zu bewirken. Dies führt bspw. zu einer Orientierung von $\pm 45°$ gegenüber der x-Richtung. Durch Anwenden der Anpassungsbewegung $11_2$ unter Verwendung der entsprechenden Rotationsbewegung des Arrays 14 kann diese Orientierung oder Neigung auf $45°\text{-}\gamma_1$ oder $45°\text{-}\gamma_2$ reduziert werden, so dass die Gesamtrotationsbewegung 38 beispielsweise $90°\text{-}(\gamma_1+\gamma_2)$ reduzierbar ist.

Eine weitere Reduzierung ist möglich, indem die zueinander geneigten Hauptflächen 174a und 174b verwendet werden. Durch die Vorab-Neigung der Strahlengänge 26 um die Winkel $\gamma_1$ und $\gamma_2$ kann somit ein geringerer Bedarf an Rotation der Strahlumlenkeinrichtung 18 zum Umschalten zwischen den Blickrichtrichtungen $27_1$ und $27_2$ erforderlich sein. Dieses geringere Maß an Rotation führt zu einem geringeren Überhang der Strahlumlenkeinrichtung 18 gegenüber dem Array 14, der mit C bezeichnet ist. Selbst bei Verwendung der Strahlumlenkeinrichtung 18 gemäß den Fig. 1a bis 1d kann gelten, dass B > C. Das bedeutet, durch Reduzieren des Rotationsumfangs der Strahlumlenkeinrichtung 18 durch die Anpassungsbewegung $11_2$ kann ebenfalls ein geringeres Maß an Bauraumbedarf entlang der y-Richtung erhalten werden. Das bedeutet, dass die Umschaltbewegung von der ersten in die zweite Rotationsstellung die rotatorische Bewegung 38 der Strahlumlenkeinrichtung 18 umfassen kann und dass die Anpassungsbewegung $11_2$ eine weitere rotatorische Bewegung umfassen kann. Die beiden rotatorischen Bewegungen können bevorzugt gleichsinnig sein, beispielsweise beide im Uhrzeigersinn oder beide entgegen dem Uhrzeigersinn. Die Summen der Beträge von Winkeln, um die die Strahlenlenkeinrichtung 18 durch die Rotationsbewegung 38 und das Array 14 durch die Anpassungsbewegung $11_2$ rotiert werden, können innerhalb eines Toleranzbereichs von 20 %, 10 % oder 5 % einen Winkelbetrag von 90° ergeben.

Zwar ist entlang der positiven y-Richtung und entlang der negativen y-Richtung jeweils ein Überlapp $C_1$ und $C_2$ erforderlich, diese sind jedoch verglichen mit dem Überlapp B, $B_1$ oder $B_2$ gering, was zu einer vorteilhaften Ausgestaltung führt. Bspw. kann gelten:

$$C = C_1 = C_2 > B = B_1 = B_2.$$

Die somit erforderlichen Abmessungen von A $+ C_1 + C_2$ bzw. A $+ 2$ C kann somit ebenfalls der Bedingung genügen, dass

$$D < A + 2\ B.$$

Anhand der Fig. 1a bis 1d, 2a und 2b wurden beispielhaft Ausgestaltungen beschrieben, in denen die Anpassungsbewegung 11 eine translatorische Bewegung $11_1$ oder eine rotatorische Bewegung $11_2$ umfasst. Gemäß Ausführungsbeispielen ist es ebenfalls möglich, die Anpassungsbewegung 11 so auszuführen, dass die translatorische Bewegung $11_1$ und die rotatorische Bewegung $11_2$ ausgeführt werden. Beispielsweise kann in den Fig. 1b und 1d eine Rotation des Arrays 14 implementiert werden, beispielsweise durch den Aktuator 11. Alternativ oder zusätzlich kann das Array 14 und/oder das Gehäuse 21 gemäß den Fig. 2a und 2b zusätzlich mit der Anpassungsbewegung $11_1$ bewegt werden, beispielsweise in eine positive y-Richtung beim Umschalten zwischen der Blickrichtung $27_1$ auf die Blickrichtung $27_2$. Hierdurch kann zusätzlich zur Vermeidung eines der beiden Überlappräume $B_1$ oder $B_2$ bzw. $C_1$ oder $C_2$ auch eine Reduzierung des verbleibenden Überlappbereichs erhalten werden.

Das bedeutet, dass die Umschaltbewegung von der ersten in die zweite Rotationsstellung eine erste rotatorische Bewegung der Strahlumlenkeinrichtung und eine translatorische Bewegung der Strahlumlenkeinrichtung entlang einer ersten Bewegungsrichtung umfasst, das bedeutet, die Rotationsbewegung 38 und die translatorische Bewegung 17. Die Anpassungsbewegung kann eine translatorische Bewegung des Arrays entlang der Bewegungsrichtung, das heißt, die Anpassungsbewegung $11_1$ und zusätzlich eine rotatorische Bewegung, die Anpassungsbewegung $11_2$ umfassen.

In anderen Worten kann zusätzlich zur Drehbewegung der Strahlumlenkeinrichtung zur Erzielung einer anderen Blickrichtung der Multiaperturkamera die Einheit bestehend aus Bildsensor und Array-Optik bewegt werden. Letztere waren bislang zumindest in Dickenrichtung ortsfest. Infolge der erforderlichen Schrägstellung der Spiegelfacette oder des Spiegels ragt die der Array-Optik abweisende Kante der Spiegelfacette in Dickenrichtung über das Linsenarray hinaus und bestimmt damit im Wesentlichen die Bauhöhe. Die der Array-Optik zugewandte Kante ragt weniger bzw. nicht über die von der durch die Linsen der Array-Optik vorgegebene Bauhöhe heraus. Die Kanten bilden bei ortsfesten optischen Achsen des Arrays in Dickenrichtung die Abstände 1/2 A + B. Bei Umschaltung der Blickrichtung durch Drehung der Strahlumlenkeinrichtung ergibt sich ein ähnliches Bild. Für den Gesamtaufbau ergibt sich für die gewünschte Realisierung der zwei Blickrichtungen eine Bauhöhe von A + 2 B. Gemäß Ausführungsbeispielen werden zusätzlich zur Drehung der Strahlumlenkeinrichtung die Einheit bestehend aus Bildsensoren und Array-Optik bewegt, das bedeutet, es wird die Anpassungsbewegung 11 ausgeführt. Dies kann zum einen eine translative Bewegung $11_1$ entlang der Dickenrichtung umfassen, eine rotative Bewegung mit der Drehachse parallel zur Zeilenerstreckungsrichtung, siehe Anpassungsbewegung $11_2$, oder eine Kombination hieraus. In der Folge kann die erforderliche Bauhöhe auf den Wert von bis zu A + B reduziert werden. Für die Realisierung zusätzlicher Bewegungen zur Implementierung eines Autofokus und/oder einer optischen Bildstabilisierung können weitere Antriebe angeordnet sein, um die Einheit bestehend aus Bildsensoren und Array-Optik zu bewegen. Die Multiaperturabbildungsvorrichtungen gemäß Ausführungsbeispielen können ohne Autofokus und/oder Bildstabilisierung implementiert werden. Alternativ oder zusätzlich kann auch der Aktuator 13 ausgebildet sein, um eine entsprechende Bewegung zur Fokussierung und/oder Bildstabilisierung bereitzustellen.

Fig. 2c zeigt eine schematische Seitenschnittansicht der Multiaperturabbildungsvorrichtung 10' in einer dritten Rotationsstellung, die beispielsweise während der Umschaltbewegung erhalten werden kann und/oder welche in einem inaktiven Zustand der Multiaperturabbildungsvorrichtung 10 erhalten werden kann, beispielsweise während eines Bereitschafts-Zustandes (Standby). In der dargestellten Rotationsstellung kann eine Abmessung der Strahlumlenkeinrichtung 18 entlang der Dickenrichtung y kleiner oder gleich sein als eine Abmessung des Gehäuses 21 bzw. des Bildsensors 12 und/oder des Arrays 14. Das bedeutet, die Dicke der Multiaperturabbildungsvorrichtung 10' ist in diesem Zustand bevorzugt nicht durch die Strahlumlenkeinrichtung 18 bestimmt. Dies ermöglicht eine dünne Aufbewahrung der Multiaperturabbildungsvorrichtung. Das bedeutet, eine rotatorische Position und damit auch eine vertikale Position des Bildsensors, der Array-Optik und damit der optischen Achsen können veränderlich sein.

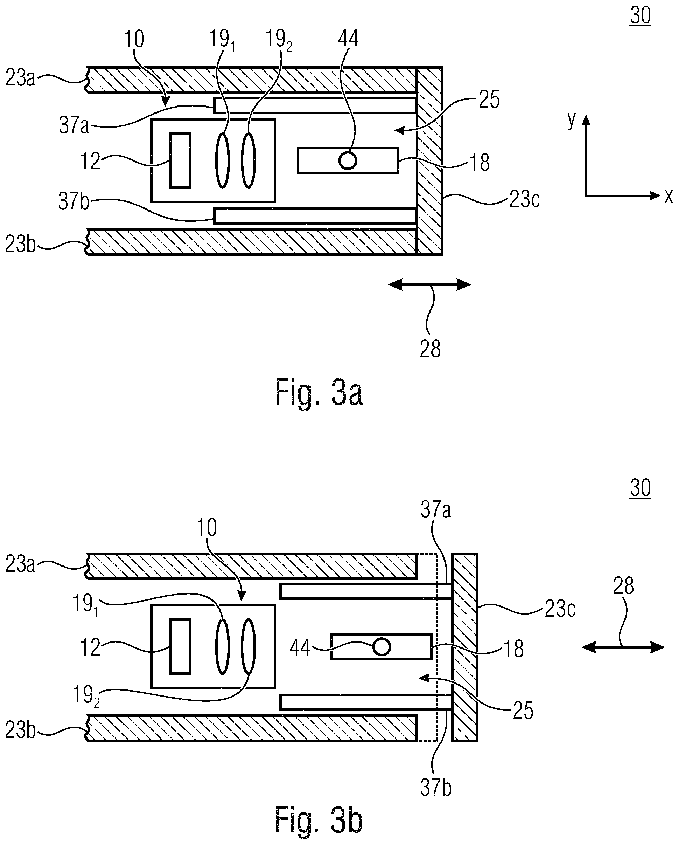

Fig. 3a zeigt eine schematische Seitenschnittansicht einer Vorrichtung 30 gemäß einem Ausführungsbeispiel. Die Vorrichtung 30 weist einen ersten Betriebszustand auf, in welchem die Multiaperturabbildungsvorrichtung 10 innerhalb eines Gehäuses 23 mit Seitenflächen 23a, 23b und 23c angeordnet ist, wobei bspw. die Seitenflächen 23a und 23b Hauptseiten sind, etwa eine Vorder- und eine Rückseite. Bspw. ist die Vorrichtung 30 ein Mobiltelefon wie etwa ein Smartphone oder ein Tabletcomputer, so dass zumindest eine der Hauptseiten ein Display aufweisen kann. Die Seitenfläche 23c kann eine Nebenseite sein und als Abdeckung bezeichnet werden. Durch Aufklappen oder bewegen der Abdeckung 23c kann die Multiaperturabbildungsvorrichtung 10 bzw. die Strahlumlenkeinrichtung 18 ganz oder teilweise aus einem Gehäusevolumen 25 herausbewegt werden, um eine Strahlumlenkung außerhalb des Gehäusevolumens 25 zu ermöglichen, um so einen zweiten Betriebszustand zu erhalten, in welchem die Multiaperturabbildungsvorrichtung 10 bspw. Aufnahmen von Gesichtsfeldern erfasst. In dem ersten Betriebszustand kann die Strahlumlenkposition eine Mittenstellung zwischen der ersten und zweiten Rotationsstellung aufweisen, wie es im Zusammenhang mit Fig. 2c beschrieben ist. Die Strahlumlenkeinrichtung 18 weist eine erste Position innerhalb eines Gehäuses auf.

Die Vorrichtung 30 weist zumindest teilweise transparente Abdeckungen 37a und 37b auf, die mit der Abdeckung 23c verbunden sein können. Die Abdeckungen 37a und 37b können somit gemeinsam mit der Strahlumlenkeinrichtung 18 entlang einer translatorischen Bewegungsrichtung 28 bewegbar sein, so dass die Strahlumlenkeinrichtung 18 aus dem Gehäuse 23 ganz oder teilweise herausbewegt wird. Die zumindest teilweise transparenten Abdeckungen 37a und 37b können in der dargestellten ersten Position jeweils an voneinander verschiedenen Seiten der Strahlumlenkeinrichtung 18 zwischen selbiger und dem Gehäuse 23 angeordnet sein. Das bedeutet, die Strahlumlenkeinrichtung 18 kann zwischen den Abdeckungen 37a und 37b angeordnet sein.

In dem ersten Betriebszustand können die Abdeckungen 37a und 37b teilweise oder vollständig innerhalb des Gehäusevolumens 25 angeordnet sein. Die Abdeckungen 37a und 37b können bspw. an einem Verfahrschlitten angeordnet oder transparente Bereiche des Verfahrschlittens sein. Während der Bewegung der Strahlumlenkeinrichtung aus dem Gehäuse 23 oder in das Gehäuse 23 kann das Array 14 und/oder der Bildsensor 12 ortsfest bleiben oder ebenfalls entlang der lateralen Bewegungsrichtung 28 bewegt werden, so dass bspw. ein Abstand zwischen dem Bildsensor 12, dem Array 14 und der Strahlumlenkeinrichtung 18 unverändert bleibt. Der Verfahrschlitten kann in diesem Fall auch den Bildsensor 12 und/oder das Array 14 umfassen.

Fig. 3b zeigt eine schematische Seitenschnittansicht der Vorrichtung 30, bei der die Strahlumlenkrichtung 18 eine Zwischenposition zwischen der ersten Position und der zweiten Position aufweist. Bspw. kann die Zwischenposition der Strahlumlenkeinrichtung während eines Einfahrens oder eines Ausfahrens der Strahlumlenkeinrichtung 18 in das Gehäusevolumen 25 hinein bzw. aus dem Gehäusevolumen 25 heraus erhalten werden. Die Strahlumlenkeinrichtung 18 ist teilweise aus dem Gehäusevolumen 25 herausbewegt.

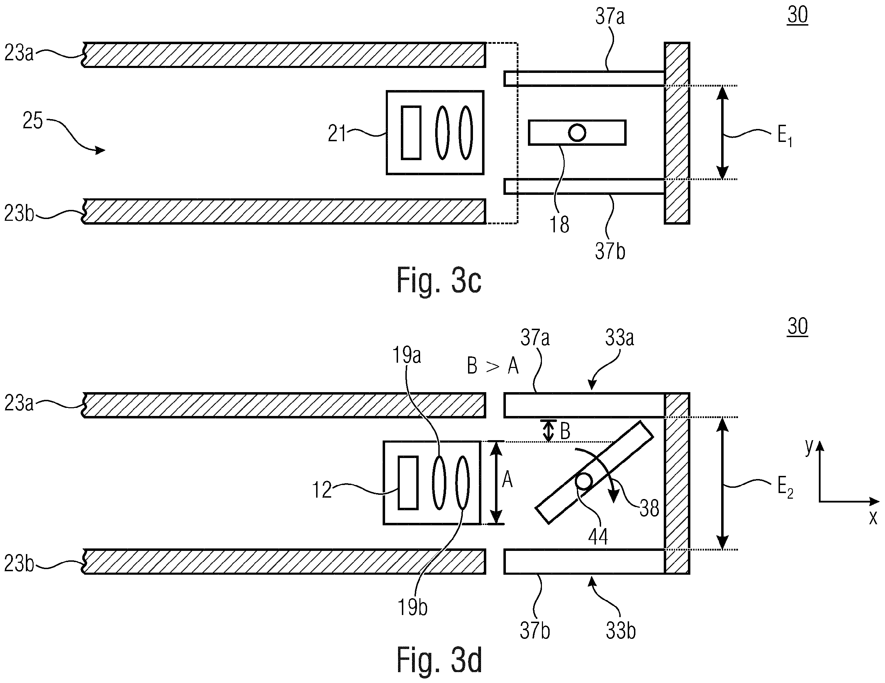

Fig. 3c zeigt eine schematische Seitenschnittansicht der Vorrichtung 30, bei der die Strahlumlenkrichtung 18 die zweite Position aufweist, d.h., die Strahlumlenkeinrichtung 18 ist bspw. vollständig aus dem Gehäusevolumen 25 herausgefahren. Die zumindest teilweise transparenten Abdeckungen 37a und 37b weisen einen Abstand $E_1$ zueinander auf, der kleiner ist als ein vergleichbarer Abstand zwischen Seitenflächen des Gehäuses 23a und 23b.

Fig. 3d zeigt eine schematische Seitenschnittansicht der Vorrichtung 30, bei der ein Abstand der zumindest teilweise transparenten Abdeckungen 37a und 37b verglichen mit den Fig. 3a-c vergrößert ist. Die zumindest teilweise transparenten Abdeckungen 37a und/oder 37b können entlang einer von der jeweils anderen zumindest teilweise transparenten Abdeckung 37a bzw. 37b abgewandte translatorische Bewegungsrichtung, etwa parallel zur Dickenrichtung y, d. h., entlang einer positiven oder negativen y-Richtung bewegbar sein. Der in den Fig. 3a-c dargestellte Zustand der zumindest teilweise transparenten Abdeckungen 37a und 37b kann als eingefahrener oder zusammengeklappter Zustand verstanden werden. Der in Fig. 3d dargestellte Zustand kann als ausgefahrener oder ausgeklappter Zustand verstanden werden, bei dem ein Abstand $E_2$ zwischen den zumindest teilweise transparenten Abdeckungen 37a und 37b gegenüber dem Abstand $E_1$ verändert, bspw. vergrößert ist, d. h., es gilt $E_2 > E_1$. Der Abstand $E_2$ kann bspw. größer oder gleich sein, als der Abstand zwischen den vergleichbaren Seiten des Gehäuses 23. Die Strahlumlenkeinrichtung 18 ist ausgebildet, um die Strahlengänge der optischen Kanäle so umzulenken, dass sie durch die zumindest teilweise transparenten Abdeckungen 37a und/oder 37b verlaufen.

Die Winkelorientierung der Strahlumlenkeinrichtung 18 kann verglichen mit dem ersten Betriebszustand aus Fig. 3a oder dem Zustand in Fig. 3b oder 3c verändert sein, so dass die vom Strahlengang der Multiaperturabbildungsvorrichtung genutzte Fläche der Strahlumlenkeinheit verglichen mit dem ersten Betriebszustand zunimmt und die erste Rotationsstellung oder zweite Rotationsstellung erhalten wird. Der vergrößerte Abstand $E_2$ kann alternativ oder zusätzlich einen erhöhten Umfang der rotatorischen Bewegung 38 ermöglichen. Mit der rotatorischen Bewegung 38 kann die Strahlumlenkeinrichtung 18 zwischen zumindest einer ersten und einer weiteren Rotationsstellung umschaltbar sein, wobei jede Stellung einer Blickrichtung der Multiaperturabbildungsvorrichtung zugeordnet werden kann. Die Drehung der Strahlumlenkeinrichtung 18 kann analog oder bistabil oder mehrfach stabil erfolgen. Die rotatorische Bewegung 38 zur Veränderung einer Blickrichtung der Multiaperturabbildungsvorrichtung kann mit einer Rotationsbewegung der Strahlumlenkeinrichtung 18 zur optischen Bildstabilisierung kombiniert werden. Die Abdeckungen 37a und/oder 37b können die anderen Komponenten der Multiaperturabbildungsvorrichtung kapseln.

Innerhalb des Abstands $E_2$ kann die Multiaperturabbildungsvorrichtung die Umschaltbewegung und die Anpassungsbewegung ausführen. So kann bspw. das Herausfahren der Abdeckungen 37a und 37b einen Bewegungsraum für das Array 14 und/oder den Bildsensor 12 bereitstellen, der entsprechend den Ausführungen der Fig. 1a-d und Fig. 2a-c basierend auf der Anpassungsbewegung gering sein kann, was auch eine geringe Ausdehnung der Vorrichtung 30 entlang der Dickenrichtung ermöglicht.

Die gegenüberliegend angeordneten Abdeckungen 37a und/oder 37b bzw. transparente Bereiche hiervon können eine schaltbare Blende 33a und/oder 33b aufweisen, so dass die schaltbare Blende 33a-b bspw. ober- und/oder unterhalb oder entlang einer beliebigen anderen Richtung der Strahlumlenkeinrichtung eingebracht ist. Die Blende 33a-b kann nach Betriebszustand und Blickrichtung der Kamera geschaltet werden. Bspw. kann jeweils eine nicht genutzt Blickrichtung der Multiaperturabbildungsvorrichtung von der Blende 33a-b zumindest teilweise verschlossen werden, um einen Eintritt von Falschlicht zu reduzieren. Die Blenden 33a-b können z. B. mechanisch bewegt oder elektrochrom sein. Die von der Blende 33a-b beeinflussten Bereiche können zusätzlich mit einer schaltbaren Blende 33a-b ausgestattet sein, die den optischen Aufbau für den Fall der Nichtbenutzung abdeckt. Die Blende 33a-b kann elektrisch steuerbar sein und eine elektrochrome Schicht(folge) umfassen. Die Blende 33a-b kann alternativ oder zusätzlich ein mechanisch bewegtes Teil umfassen. Die Bewegung kann unter Nutzung pneumatischer, hydraulischer, piezoelektrischer Aktuatoren, DC-Motoren, Schrittmotoren, thermischer Aktuatoren, elektrostatischer Aktuatoren, elektrostriktiver und/oder magnetostriktiver Aktuatoren oder Antriebe erfolgen. In einem Zustand der Multiaperturabbildungsvorrichtung, bei der die Blickrichtung eine Blende durchdringt kann die Blende 33a-b so geschaltet werden, um die Strahlengänge der optischen Kanäle durchzulassen. Das bedeutet, dass die Multiaperturabbildungsvorrichtung einen ersten Betriebszustand und einen zweiten Betriebszustand aufweisen kann. Die Strahlumlenkeinrichtung kann den Strahlengang der optischen Kanäle in dem zweiten Betriebszustand und in einer ersten Rotationsstellung so umlenken, dass dieser durch einen ersten transparenten Bereich der Abdeckung 37a verläuft. In der zweiten Rotationsstellung des zweiten Betriebszustands kann der Strahlengang der optischen Kanäle so umgelenkt werden, dass dieser durch einen zweiten transparenten Bereich der Abdeckung 37b verläuft. Eine erste Blende 33a kann ausgebildet sein, um den ersten transparenten Bereich in dem zweiten Betriebszustand optisch zumindest teilweise zu verschließen. Eine zweite Blende 33b kann ausgebildet sein, um den zweiten transparenten Bereich in dem ersten Betriebszustand optisch zeitweise zumindest teilweise zu verschließen. So kann ein Eintritt von Falschlicht aus einer Richtung, die nicht die aktuelle Blickrichtung der Multiaperturabbildungsvorrichtung ist, reduziert werden, was sich vorteilhaft auf die Bildqualität auswirkt. Die erste und/oder zweite Blende 33a-b kann für zumindest einen, für zumindest zwei oder für alle der optischen Kanäle wirksam sein. Bspw. können zumindest einer, zumindest zwei oder alle optischen Kanäle der Multiaperturabbildungsvorrichtung durch die erste Blende verlaufen, wenn der Strahlengang der optischen Kanäle durch den ersten transparenten Bereich gelenkt wird und durch die zweite Blende verlaufen, wenn der Strahlengang der optischen Kanäle durch den zweiten transparenten Bereich gelenkt wird.

Es wird darauf hingewiesen, dass es möglich ist, einen Mechanismus zum Ausklappen der Strahlumlenkeinrichtung mit einem Mechanismus zum translatorischen Bewegen zu kombinieren, d.h., es können Mischformen auftreten. Ein Aufklappen des Gehäuses und/oder ein Ausfahren der Strahlumlenkeinrichtung kann derart erfolgen, dass ggf. das Abbildungsmodul, d. h., die optischen Kanäle, Optiken davon und/oder der Bildsensor aus dem Gehäusevolumen bewegt werden. Eine Winkeländerung der Strahlumlenkeinrichtung kann ermöglichen, dass eine Ausdehnung der Multiaperturabbildungsvorrichtung in Dickenrichtung groß ist und/oder dass die Strahlumlenkeinrichtung den Strahlengang ungehindert nach "vorn" und "hinten" umlenken kann. Deckgläser, etwa die Abdeckungen 37 können auch bzgl. der ausgeklappten bzw. ausgefahrenen Elemente fixiert sein. Die Deckgläser können beliebige, ebene oder nicht-ebene Flächen aufweisen.

In anderen Worten kann die Multiaperturabbildungsvorrichtung zumindest teilweise auf einem BewegungsschlittenNerfahrschlitten angebracht sein und aus einem flachen Gehäuse, etwa einem Smartphone, herausfahren. Hierbei können die Strahlumlenkeinrichtung und die Einheit bestehend aus Bildsensor und Array-Optik andere Positionen einnehmen als wenn in den beiden Blickrichtungen Bilder aufgenommen werden. Die Positionierung kann dabei derart erfolgen, dass sich eine minimale Bauhöhe ergibt und in dieser Position die Spitzen der beidseitig verspiegelten Facetten der Strahlumlenkeinrichtung oder eine schmale Kante der Strahlumlenkeinheit in Richtung der Array-Optik weisen.

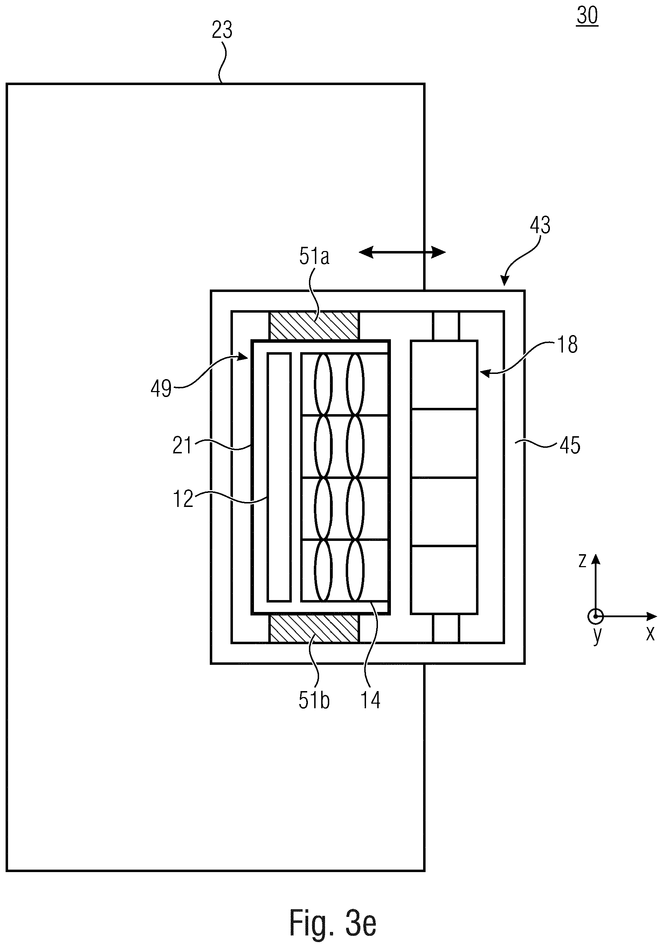

Fig. 3e zeigt eine schematische Aufsicht auf die Multiaperturabbildungsvorrichtung 30, bei der eine Funktion eines beispielhaften Verfahrschlittens 43, der beweglich in dem Gehäuse 23 angeordnet sein kann. Der Verfahrschlitten 43 kann einen Rahmen oder eine andere Befestigungsstruktur 45 aufweisen, mit der die Strahlumlenkeinrichtung 18, der Bildsensor 12 und das Array 14 unmittelbar oder mittelbar, d. h., beweglich hiergegenüber, angeordnet oder gelagert ist. Die Strahlumlenkeinrichtung 18 weist bspw. eine kanalindividuelle Facettierung auf, also jeweils einen Strahlumlenkbereich pro Kanal, wobei die Facetten gegenüber einander geneigt sein können, um eine kanalindividuelle Ablenkung der Strahlengänge zu erhalten. Die Strahlumlenkeinrichtung 18 kann rotatorisch gegenüber dem Rahmen 45 gelagert sein und basierend auf einer Bewegung des Rahmens 45 bewegt werden als auch basierend auf der Rotationsbewegung 38 gegenüber dem Rahmen 45. Manche der Komponenten, bspw. der Bildsensor 12 und das Array 14 können mittels einer Verfahreinheit 49 mechanisch mit einander gekoppelt sein, so dass eine Bewegung der Verfahreinheit 49 eine Bewegung der hiermit gekoppelten Komponenten verursacht. Innerhalb des Verfahrschlittens 43 kann nun bspw. die Verfahreinheit 49 ausgebildet sein, um die Anpassungsbewegung auszuführen und hierbei eine Relativbewegung gegenüber dem Rahmen 45 ausführen. Alternativ oder zusätzlich können optionale Antriebe oder Aktoren 51a und/oder 51b, etwa der Fokussiereinrichtung und/oder des optischen Bildstabilisators gleichzeitig mitbewegt werden. Entsprechende Antriebe 51a und/oder 51b, etwa pneumatische, hydraulische, thermische, piezoelektrische, elektrostatische, elektrodynamische, magneto- oder elektrostriktive Aktuatoren können innerhalb des Gehäuses 21 und/oder in der Verfahreinheit 49 oder wie dargestellt außerhalb des Gehäuses 21 angeordnet sein. So kann der Fokus und/oder die Bildstabilisierung durch die Aktoren 51a und/oder 51b bereitgestellt oder eingestellt werden, während die hierdurch bewegte Verfahreinheit 49 zusätzlich zum Erhalt der Anpassungsbewegung bewegt wird.

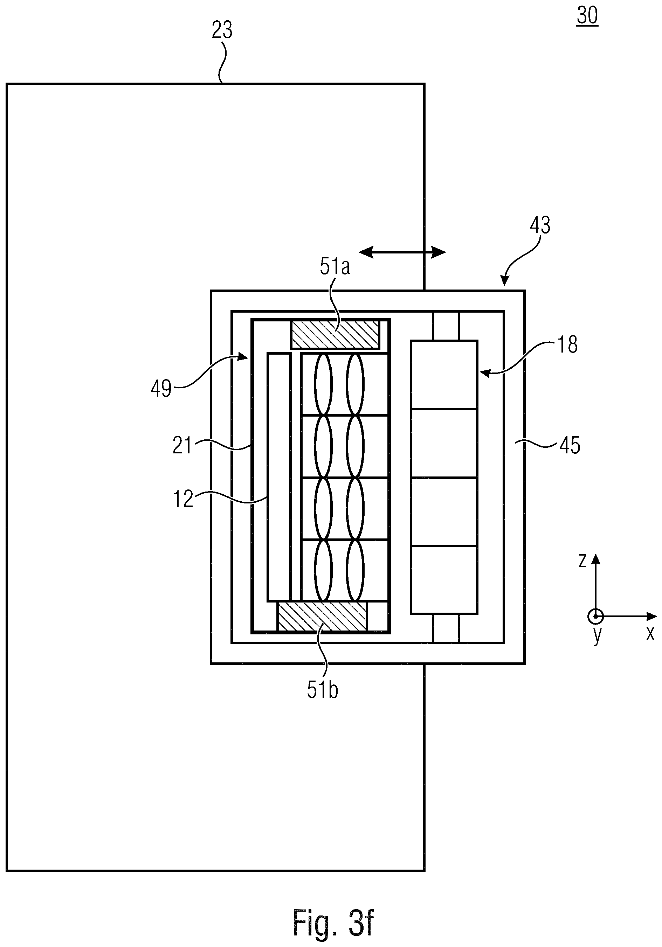

Fig. 3f zeigt eine schematische Aufsicht der Multiaperturabbildungsvorrichtung 30, bei der der Verfahrschlitten 43 bzw. die Verfahreinheit 49 modifiziert ist. Im Speziellen sind bspw. die Aktuatoren 51a und 51b Teil der Verfahreinheit 49 und bspw. in dem Gehäuse 21 angeordnet, so dass die Aktuatoren 51a und/oder 51b während dem Ausführen der Anpassungsbewegung mitbewegt werden. Die Verfahreinheit 49 kann das Array 14, den Bildsensor 12 und die Aktuatorik 51a/51b für Autofokus und optische Bildstabilisierung umfassen. Das bedeutet, dass das Array 14, der Bildsensor 12 und Aktuatoren 51a/51b zum Bereitstellen eine Fokussierung zur optischen Bildstabilisierung mechanisch mit einander gekoppelt sind und ausgebildet sind, um die Anpassungsbewegung 11 gemeinsam auszuführen.

Der Verfahrschlitten 43 kann dazu dienen, die gesamte Multiaperturkamera aus dem Gehäuse 23 seitlich herauszufahren. An diesem Verfahrschlitten sind bspw. Bildsensor 12, Array 14, Strahlumlenkeinheit 18, Aktoren für Autofokus und optische Bildstabilisierung sowie ggf. Deckgläser angeordnet, die sich in x-Richtung mitbewegen. Für die Anpassungsbewegung 11 kann nun zusätzlich die Einheit bestehend aus Bildsensor, Array und ggf. Autofokus und/oder optische Bildstabilisierung separat und entlang y bewegt werden, bspw. durch die Verfahreinheit 49.

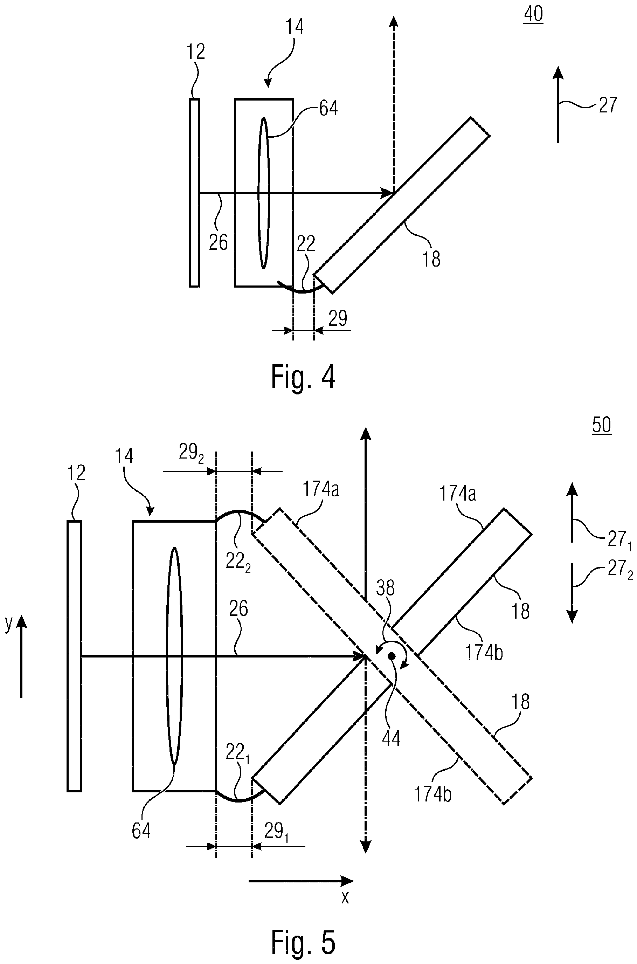

Fig. 4 zeigt eine schematische Seitenschnittansicht einer Multiaperturabbildungsvorrichtung 40 gemäß einem Ausführungsbeispiel, bei dem das Array 14 einzeilig gebildet ist, das bedeutet, im Gegensatz zu dem zweizeiligen Array aus Fig. 1 kann lediglich eine Zeile von Optiken 64 angeordnet sein. Unabhängig hiervon kann die Multiaperturabbildungsvorrichtung 40 eine Blendenstruktur 22 aufweisen.

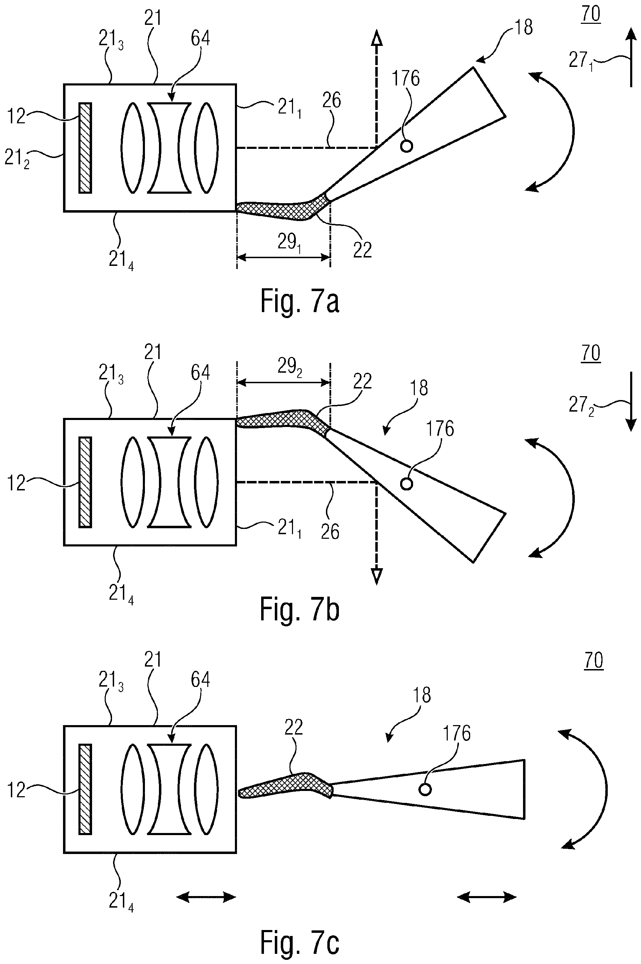

Zwischen dem Array 14 und der Strahlumlenkeinrichtung 18 ist ein Spalt 29, d. h. ein Abstand, angeordnet. Die Multiaperturabbildungsvorrichtung 10 ist dabei so ausgeführt, dass die Blendenstruktur 22 den Spalt 29 zumindest teilweise verschließt. Dabei kann die Blendenstruktur 22 wie dargestellt mit dem Array 14 bzw. einem Träger 47 und/oder der Strahlumlenkeinrichtung 18 überlappen. Das bedeutet, die Blendenstruktur 22 kann in mechanischem Kontakt mit dem Array 14 und/oder der Strahlumlenkeinrichtung 18 stehen und außerhalb eines Bereichs oder Volumens, der bzw. das räumlich zwischen der Strahlumlenkeinrichtung 18 und dem Array 14 angeordnet ist, angeordnet sein. Alternativ zu dem mechanischen Kontakt mit dem Array 14 kann die Blendenstruktur 22 mit einer transparenten Struktur in mechanischem Kontakt stehen, etwa einer transparenten Struktur 42, die im Zusammenhang mit der Fig. 7 erläutert ist. Alternativ kann die Blendenstruktur 22 an dem Array 14 und/oder der Strahlumlenkeinrichtung 18 so angeordnet sein, dass sich die Blendenstruktur räumlich zwischen dem Array 14 und der Strahlumlenkeinrichtung 18 befindet. In beiden Fällen wird der Spalt 29 zwischen dem Array 14 und der Strahlumlenkeinrichtung 18 zumindest teilweise, d. h., zumindest 50 %, zumindest 70 %, zumindest 90 % oder bevorzugt vollständig, verschlossen.

Die Blendenstruktur 22 kann ausgebildet sein, um einen Eintritt von Licht zu verhindern oder zumindest teilweise zu reduzieren, insbesondere aus einer Richtung, die von den Richtungen verschieden ist, die den Teilgesichtsfeldern der aktuell eingestellten Blickrichtung zugeordnet sind. Durch die Anordnung der Blendenstruktur 22 an einem entgegen der Blickrichtung 27 liegenden oder angeordneten Ende des Trägers 47 und/oder der Strahlumlenkeinrichtung 18 kann ein Eintritt von Falschlicht aus der Richtung entgegengesetzt zu der Blickrichtung 27 zumindest teilweise reduziert werden. Wird der Spalt 29 vollständig verschlossen und ist die Blendenstruktur 22 vollständig opak ausgebildet, kann ein Umfang des Falschlichts bspw. aus der Richtung entgegengesetzt der Blickrichtung oder auch weiteren Richtungen sogar vollständig reduzierbar sein. Mit einem zunehmenden Maß an Reduzierung des Falschlichts kann in zunehmendem Maße eine Erhöhung der Bildqualität erhalten werden.

Die Blendenstruktur 22 kann mit zumindest einem des Arrays 14 und/oder der Strahlumlenkeinrichtung 18 mechanisch fest verbunden sein und so von diesem Element gehalten werden. An dem anderen Element kann ein loser oder ebenfalls fester mechanischer Kontakt erhalten werden, um den Spalt 29 zu verschließen.

Fig. 5 zeigt eine schematische Seitenschnittansicht einer Multiaperturabbildungsvorrichtung 50 gemäß einem weiteren Ausführungsbeispiel, bei dem die Strahlumlenkeinrichtung 18 ausgebildet ist, um die Rotationsbewegung 38 um die Drehachse 44 auszuführen, wobei basierend auf der Rotationsbewegung 38 eine erste Stellung und eine zweite Stellung der Strahlumlenkeinrichtung 18 erhalten werden kann. Die Strahlumlenkeinrichtung 18 ist ausgebildet, um in der ersten Stellung die Strahlengänge 26 in eine erste Blickrichtung $27_1$ zu lenken. Die Strahlumlenkeinrichtung 18 ist ferner ausgebildet, um in einer zweiten Stellung, die durch gestrichpunktete Linien dargestellt ist, die Strahlengänge 26 in eine zweite Blickrichtung $27_2$ umzulenken. Die Strahlumlenkeinrichtung 18 kann beispielsweise zwei gegenüberliegende und reflektierend gebildete Hauptseiten 174a und 174b aufweisen, wobei in den unterschiedlichen Stellungen unterschiedliche reflektierende Hauptseiten 174a oder 174b den Optiken 64 zugewandt sind. Das bedeutet, in den unterschiedlichen Stellungen lenkt die Strahlumlenkeinrichtung 18 die Strahlengänge 26 mit unterschiedlichen Hauptseiten um.

Basierend auf Stellungen zwischen denen durch die Rotationsbewegung 38 umgeschaltet werden kann, kann in einer ersten Stellung ein erster Spalt $29_1$ von einer Blendenstruktur $22_1$ zumindest teilweise verschlossen sein, wie es beispielsweise im Zusammenhang mit der Multiaperturabbildungsvorrichtung 40 beschrieben ist. Basierend auf der Rotationsbewegung 38 kann sich der Spalt $29_1$ in seiner Abmessung entlang einer Richtung x, die parallel zu einer Richtung ausgehend vom Bildsensor 12 zu der Strahlumlenkeinrichtung 18 und parallel zu einer Zeilenerstreckungsrichtung des Arrays 14 verläuft, verändern. In der zweiten Stellung kann der Spalt $29_2$ durch die Blendenstruktur $22_2$ verschlossen sein, um einen Eintritt von Falschlicht aus der ungenutzten Blickrichtung $27_1$ zu verhindern.

Gemäß manchen Anforderungen an Multiaperturabbildungsvorrichtungen ist eine geringe oder gar minimale Höhe der Multiaperturabbildungsvorrichtung entlang einer Richtung senkrecht zu der x-Richtung und senkrecht zu der Zeilenerstreckungsrichtung gewünscht, etwa entlang einer y-Richtung, die auch als Dickenrichtung bezeichnet werden kann. Durch die diagonale Anordnung der Strahlumlenkeinrichtung 18 bezüglich des Bildsensors 12 und/oder dem Array 14 kann ein Flächenabmaß der Strahlumlenkeinrichtung 18 vergleichsweise größer sein als eine Fläche des Bildsensors 12, um eine vollständige Abbildung und/oder Umlenkung des Strahlengangs 26 zu ermöglichen. Das bedeutet, würde die Strahlumlenkeinrichtung 18 so geneigt, dass die Hauptseiten 174a und/oder 174b parallel zu der y-Richtung angeordnet sind, so würde die Strahlumlenkeinrichtung 18 das Array 14 und/oder den Bildsensor 12 möglicherweise überragen, was dem Bestreben der minimalen Bauhöhe entgegenspricht.

Zum Umschalten zwischen den beiden illustrierten Stellungen ist es ebenfalls möglich, die Ansteuerung der Strahlumlenkeinrichtung 18 so vorzunehmen, dass in einer Stellung zwischen der ersten und zweiten Stellung die Hauptseiten 174a und/oder 174b parallel zu der x-Richtung verlaufen. In diesem Falls können sich Nebenseiten der Strahlumlenkeinrichtung 18 während der Bewegung an das Array 14 annähern und/oder von diesem entfernen, so dass der Spalt $29_1$ und/oder $29_2$ in seiner Abmessung veränderlich ist. Gleichzeitig ist jedoch ein endlicher Abstand zwischen der Strahlumlenkeinrichtung 18 und dem Array 14 erforderlich, um die entsprechende Bewegung zu ermöglichen. Dieser Abstand führt zu den Spalten $29_1$ und/oder $29_2$, welche durch die beschriebenen Blendenstrukturen $22_1$ und/oder $22_2$ verschlossen werden können, um einen Eintritt von Falschlicht durch die entsprechende Spalte zumindest teilweise zu verhindern.

In anderen Worten kann es erforderlich sein, einen Abstand zwischen einer vorderen Kante des Spiegels (Strahlumlenkeinrichtung) und dem anschließenden Array aus Abbildungsoptiken einzustellen, damit sich der Umlenkspiegel drehen kann. Dieser Spalt ist transparent und damit lichtdurchlässig. Hierdurch kann in nachteiliger Weise Licht aus einer Richtung in den Aufbau eindringen, die nicht der beabsichtigten Blickrichtung der Kamera entspricht und welches damit die Abbildungsqualität verschlechtert. Diesem Effekt kann mit den Blendenstrukturen $22_1$ und/oder $22_2$ entgegengewirkt werden.

An der Seite/Kante der Strahlumlenkeinrichtung der Multiaperturabbildungsvorrichtung mit linearer Kanalanordnung kann eine sich über die gesamte Ausdehnung der Strahlumlenkeinrichtung erstreckende und damit die gesamte Breite des Array-Objektivs erstreckende Blende aus opakem und/oder flexiblem Material angeordnet sein. Diese kann beispielsweise einer Dichtlippe ähneln.

Basierend auf der Ausgestaltung der Anpassungsbewegung kann die Blendenstruktur während der

translatorischen Anpassungsbewegung $11_1$ mitbewegt werden und/oder die rotatorische Anpassungsbewegung $11_2$ basierend auf einem Überhang und/oder einer flexiblen Ausgestaltung der Blendenstruktur 22 kompensieren.

Bevor nachfolgend weitere Details zu hierin beschriebenen Multiaperturabbildungsvorrichtungen erläutert werden, soll auf eine bevorzugte Ausführungsform der Strahlumlenkeinrichtung 18 eingegangen werden. Obwohl diese auch als planarer Spiegel oder als doppelseitiger Spiegel gebildet werden kann, kann basierend auf einer keilförmigen Form eine platzsparende Realisierung erhalten werden. Ferner können mehrere Keile in der Strahlumlenkeinrichtung 18 angeordnet sein und jeweils eine Facette derselben bilden, wobei jeder optische Kanal der Multiaperturabbildungsvorrichtung einer Facette zugeordnet ist. Durch unterschiedliche Neigungen der Facetten zu einer Referenzposition der Strahlumlenkeinrichtung können die Strahlengänge in unterschiedliche Richtungen umgelenkt werden, was einer Divergenz der Richtungsumlenkung, d. h. einer unterschiedlichen Richtungsumlenkung oder einer Differenz zwischen zwei Richtungsumlenkungen ermöglicht, so dass unterschiedliche Teilbereiche des Gesamtobjektbereichs erfassbar sind.

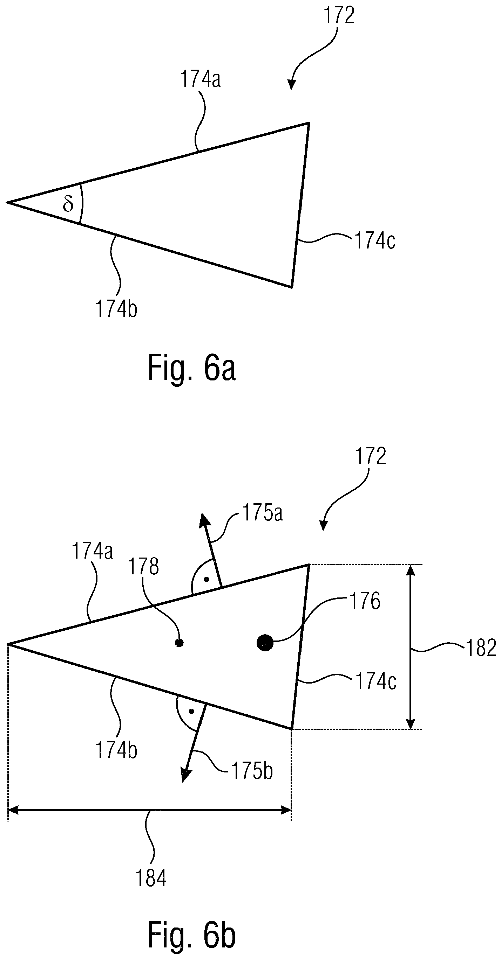

Anhand der Fig. 6a-f werden vorteilhafte Ausgestaltungen der Strahlumlenkeinrichtung 18 beschrieben. Die Ausführungen zeigen eine Reihe von Vorteilen auf, die einzeln oder in beliebiger Kombination mit einander ausführbar sind, jedoch nicht einschränkend wirken sollen. Die dargestellte Blendenstruktur 22 ist optional, so dass Ausführungsbeispiele auch ohne selbige ausgeführt werden können.

Fig. 6a zeigt eine schematische Seitenschnittansicht eines Strahlumlenkelements 172, das in hierin beschriebenen Strahlumlenkeinrichtungen als einer der Strahlumlenkbereiche 46 einsetzbar ist. Das Strahlumlenkelement 172 kann für einen, eine Mehrzahl oder alle der optischen Kanäle 16a-d wirksam sein und einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei ins-besondere bei reflektierenden Oberflächen eine zumindest abschnittsweise ebene Ausbildung vorteilhaft sein kann, um Abbildungsfehler zu vermeiden. Die beiden Hauptseiten 174a und 174b können um einen Winkel δ zueinander geneigt sein. Der Winkel δ kann einen Wert zwischen 1° und 89° aufweisen, weist bevorzugt einen Wert zwischen 5° und 60° und besonders bevorzugt einen Wert zwischen 10° und 30° auf. Die Hauptseiten 174a und 174b sind also bevorzugt in einem Winkel von höchstens 60° geneigt zu einander angeordnet.

Das Strahlumlenkelement 172 weist bspw. eine erste Seite 174a, eine zweite Seite 174b und eine dritte Seite 174c auf. Zumindest zwei Seiten, etwa die Seiten 174a und 174b sind reflektiv ausgebildet, so dass das Strahlumlenkelement 172 beidseitig reflektiv ausgebildet ist. Bei den Seiten 174a und 174b kann es sich um Hauptseiten des Strahlumlenkelements 172 handeln, also Seiten, deren Fläche größer ist, als die Seite 174c.

In anderen Worten kann das Strahlumlenkelement 172 keilförmig und beidseitig reflektiv gebildet sein. Der Fläche 174c gegenüberliegend, also zwischen den Flächen 174a und 174b, kann eine weitere Fläche angeordnet sein, die jedoch wesentlich kleiner als die Fläche 174c ist. Mit anderen Worten verläuft der durch die Flächen 174a, 174b und 174c gebildete Keil nicht beliebig spitz zu, sondern ist an der spitzen Seite mit einer Fläche versehen und mithin abgestumpft.

Fig. 6b zeigt eine schematische Seitenschnittansicht des Strahlumlenkelements 172, bei dem eine Aufhängung oder eine Verschiebeachse 176 des Strahlumlenkelements 172 beschrieben ist. Bei der Verschiebeachse 176 kann es sich bspw. um die Drehachse 44 handeln. Die Verschiebeachse 176, um die das Strahlumlenkelement 172 rotatorisch und/oder translatorisch in der Strahlumlenkeinrichtung 18 bewegbar sein kann, kann exzentrisch bezüglich eines Flächenschwerpunktes 178 des Querschnitts verschoben sein. Der Flächenschwerpunkt kann alternativ auch ein Punkt sein, der die hälftige Abmessung des Strahlumlenkelements 172 entlang einer Dickenrichtung 182 und entlang einer Richtung 184 senkrecht hierzu beschreibt.

Die Hauptseite 174a kann eine Oberflächennormale 175a aufweisen, während die Hauptseite 174b eine Oberflächennormale 175b aufweisen kann. Wird eine rotatorische Bewegung um die Verschiebeachse 176 genutzt, um zwischen der ersten Stellung und der zweiten Stellung der Strahlumlenkeinrichtung umzuschalten, so kann die rotatorische Bewegung der Strahlumlenkeinrichtung so ausgeführt werden, dass zwischen den beiden Stellungen eine Orientierung gemäß welcher eine der Hauptseiten 174a oder 174b dem Array 14 vollständig zugewandt ist, vermieden ist, wie es im Zusammenhang mit Fig. 5 beschrieben ist. Dies kann auch so verstanden werden, dass während eines Wechsels zwischen dem ersten und dem zweiten Betriebszustand oder Stellung durch die rotatorische Bewegung die Oberflächennormale 175a und die Oberflächennormale 175b der zweiten Hauptseite zu jedem Zeitpunkt einen Winkel von zumindest 10° bezogen auf eine Richtung hin zu dem Bildsensor und ggf. parallel zu einer Oberflächennormalen des Bildsensors aufweisen. So kann vermieden werden, dass einer der Winkel 0° oder 180° beträgt, was eine hohe oder näherungsweise maximale Ausdehnung der Strahlumlenkeinrichtung entlang der Dickenrichtung bedeuten kann.

Die Verschiebeachse 176 kann bspw. entlang einer Dickenrichtung 182 unverändert und einen beliebigen Versatz in einer Richtung senkrecht hierzu aufweisen. Alternativ ist auch ein Versatz entlang der Dickenrichtung 182 vorstellbar. Die Verschiebung kann bspw. so erfolgen, dass bei einer Rotation des Strahlumlenkelements 172 um die Verschiebeachse 176 ein höherer Stellweg erhalten wird, als bei einer Rotation um den Flächenschwerpunkt 178. So kann sich durch die Verschiebung der Verschiebeachse 176 der Weg, um den die Kante zwischen den Seiten 174a und 174b bei einer Rotation bewegt wird bei gleichem Rotationswinkel verglichen mit einer Rotation um den Flächenschwerpunkt 178 erhöhen. Bevorzugt ist das Strahlumlenkelement 172 so angeordnet, dass die Kante, also die spitze Seite des keilförmigen Querschnitts, zwischen den Seiten 174a und 174b dem Bildsensor zugewandt ist. Durch geringe Rotationsbewegungen kann somit eine jeweils andere Seite 174a oder 174b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 182 gering ist, da eine Bewegung des Strahlumlenkelements 172 so, dass eine Hauptseite senkrecht zum Bildsensor steht, nicht erforderlich ist.

Die Seite 174c kann auch als Nebenseite oder als Rückseite bezeichnet werden. Mehrere Strahlumlenkelemente können so miteinander verbunden werden, dass ein verbindendes Element an der Seite 174c angeordnet ist, oder durch den Querschnitt der Strahlumlenkelemente verläuft, also im Inneren der Strahlumlenkelemente angeordnet ist, etwa im Bereich der Verschiebeachse 176. Insbesondere kann das haltende Element so angeordnet sein, dass es nicht oder lediglich in geringem Umfang, d. h., höchstens 50 %, höchstens 30 % oder höchstens 10 % über das Strahlumlenkelement 172 entlang der Richtung 182 hinausragt, so dass das Halteelement nicht die Ausdehnung des Gesamtaufbaus entlang der Richtung 182 erhöht oder bestimmt. Die Ausdehnung in Dickenrichtung 182 kann alternativ durch die Linsen der optischen Kanäle bestimmt sein, d. h. diese weisen die das Minimum der Dicke definierende Abmessung auf.

Das Strahlumlenkelement 172 kann aus Glas, Keramik, Glaskeramik, Kunststoff, Metall oder einer Kombination dieser Materialien und /oder weiterer Materialien gebildet sein. In anderen Worten kann das Strahlumlenkelement 172 so angeordnet sein, dass die Spitze, d. h., die Kante zwischen den Hauptseiten 174a und 174b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 174c erstrecken. Die Drehachse des Strahlumlenkelements 172 kann exzentrisch angeordnet sein.

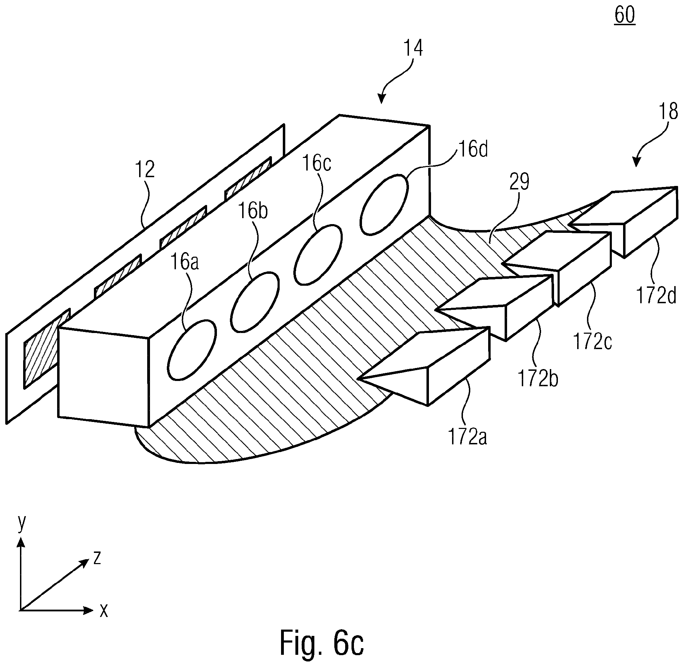

Fig. 6c zeigt eine schematische perspektivische Ansicht einer Multiaperturabbildungsvorrichtung 60, die einen Bildsensor 12, und ein einzeiliges Array 14 von nebeneinander angeordneten optischen Kanälen 16a-d umfasst. Die Strahlumlenkeinrichtung 18 umfasst eine Anzahl von Strahlumlenkelementen 172a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt. Jedes Strahlumlenkelement 172a-d kann einem optischen Kanal 16a-d zugeordnet sein. Die Strahlumlenkelemente 172a-d können als eine Vielzahl von Elementen 172 gebildet sein. Alternativ können zumindest zwei, mehrere oder alle Strahlumlenkelemente 172a-d einstückig mit einander gebildet sein.

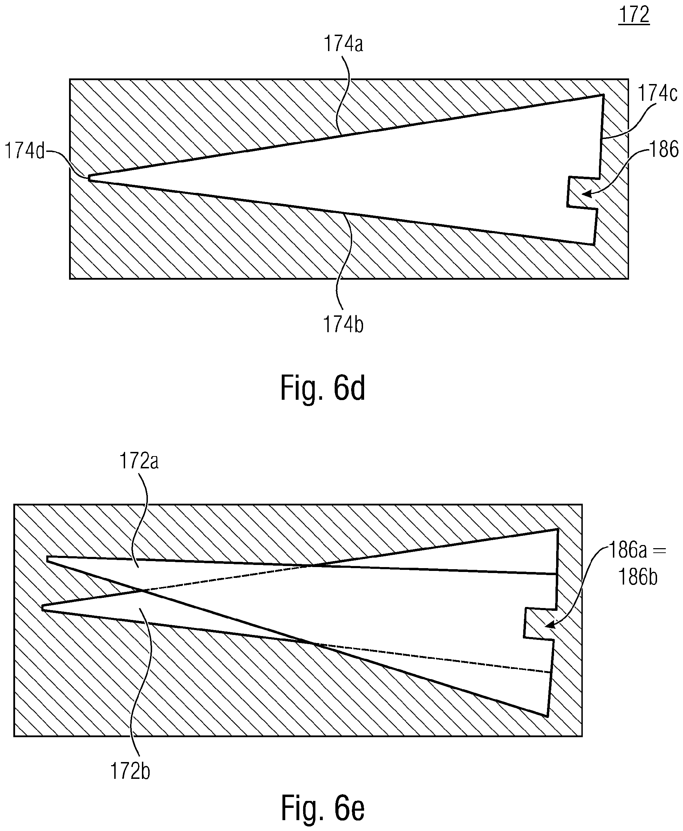

Fig. 6d zeigt eine schematische Seitenschnittansicht des Strahlumlenkelements 172, dessen Querschnitt als Freiformfläche gebildet ist, das bedeutet, nicht notwendigerweise einem einfachen Drei- oder Vierecks entsprechend. So kann die Seite 174c eine Aussparung 186 aufweisen, die eine Befestigung eines haltenden Elements ermöglicht, wobei die Aussparung 186 auch als hervorstehendes Element, etwa als Feder eines Nut-FederSystems gebildet sein kann. Der Querschnitt weist ferner eine vierte Seite 174d auf, die eine geringere Flächenausdehnung als die Hauptseiten 174a und 174b aufweist und selbige mit einander verbindet.

Fig. 6e zeigt eine schematische Seitenschnittansicht eines ersten Strahlumlenkelements 172a und eines in Darstellungsrichtung dahinterliegenden zweiten Strahlumlenkelements 172b. Die Aussparungen 186a und 186b können dabei so angeordnet sein, dass sie im Wesentlichen deckungsgleich sind, so dass eine Anordnung eines verbindenden Elements in den Aussparungen ermöglicht ist.

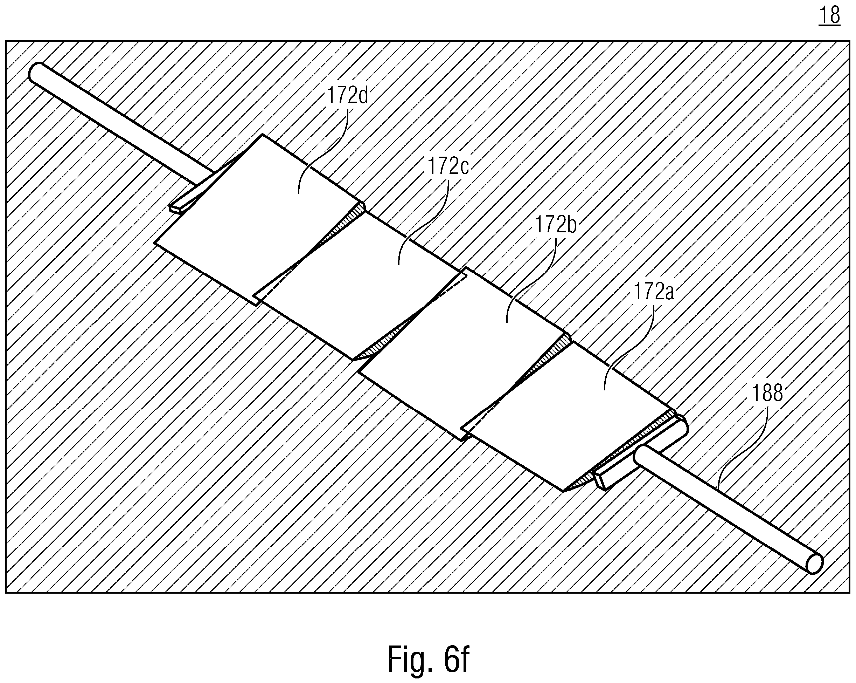

Fig. 6f zeigt eine schematische perspektivische Ansicht der Strahlumlenkeinrichtung 18, die bspw. vier Strahlumlenkelemente 172a-d umfasst, die mit einem verbindenden Element 188 verbunden sind. Das verbindende Element kann nutzbar sein, um von einem Aktuator translatorisch und/oder rotatorisch bewegt zu werden. Das verbindende Element 188 kann einstückig ausgebildet sein und über eine Erstreckungsrichtung, etwa die y-Richtung, an oder in den Strahlumlenkelementen 172a-d verlaufen. Alternativ kann das verbindende Element 188 auch lediglich mit zumindest einer Seite der Strahlumlenkeinrichtung 18 verbunden sein, etwa wenn die Strahlumlenkelemente 172a-d einstückig gebildet sind. Alternativ kann eine Verbindung mit einem Aktuator und/oder eine Verbindung der Strahlumlenkelemente 172a-d auch auf beliebige andere Weise erfolgen, etwa mittels Kleben, Ansprengen oder Löten. Die Strahlumlenkelemente 172a-d können mit einem geringen Abstand oder gar direkt aneinander anschließend gebildet sein, so dass keine oder möglichst geringe Lücken zwischen den Strahlumlenkelemente 172a-d implementiert sind.

Das bedeutet, die Strahlumlenkeinrichtung 18 kann als ein Array von nebeneinander angeordneten Facetten gebildet sein, wobei jeder optische Kanal einer der Facetten zugeordnet ist. Die Blendenstruktur kann sich über das Array von Facetten erstrecken.

Die Strahlumlenkeinrichtung kann eine erste und eine zweite reflektierende Hauptseite 174a und 174b aufweisen, wobei die Hauptseiten mit einem Winkel $\delta$ von 60° oder weniger gegeneinander geneigt sein können.

Anhand der Fig. 7a-7c wird nachfolgend eine Multiaperturabbildungsvorrichtung 70 erläutert, die die rotatorisch bewegliche Strahlumlenkeinrichtung 18 umfasst, die die keilförmigen Facetten gemäß den Fig. 6a-4f umfasst. Beispielhaft sind Optiken 64 des Arrays 14 jeweils als mehrteilige Linsenkombinationen gebildet. Die Multiaperturabbildungsvorrichtung 70 umfasst die Blendenstruktur 22, die beispielsweise an einer Verbindungskante zwischen den Hauptseiten 174a und 174b oder an der Nebenseite 174d mechanisch befestigt sein kann. Die Optiken 64 können in dem Gehäuse 21 angeordnet sein. Optional kann auch der Bildsensor 12 in dem Gehäuse 21 angeordnet sein. Obwohl sich nachfolgende Ausführungen auf ein Gehäuse beziehen, in dem die Optiken 64 angeordnet sind, gelten dieselben Ausführungen ohne Einschränkungen auch für ein Array von optischen Kanälen, das beispielsweise einen Träger aufweist, wie es für den Träger 47 beschrieben ist. An dem möglicherweise transparent gebildeten Träger 47 können die Optiken 64 unmittelbar oder mittelbar über Halterstrukturen angeordnet sein. Das Gehäuse 21 kann beispielsweise Hauptseiten $21_1$ und $21_2$ aufweisen, wobei die Hauptseite $21_1$ dadurch gekennzeichnet ist, dass sie der Strahlumlenkeinrichtung 18 zugewandt angeordnet ist und eine der Strahlumlenkeinrichtung 18 benachbarte Seite des Gehäuses 21 bereitstellt. Wird beispielsweise die Fig. 1 betrachtet, so kann der Träger 47 ebenfalls eine Hauptseite aufweisen, die der Strahlumlenkeinrichtung 18 zugewandt angeordnet ist und eine Hauptseite aufweisen, die dem Bildsensor 12 zugewandt angeordnet ist. Nebenseiten $21_3$ und $21_4$ können die beiden Hauptseiten $21_1$ und $21_2$ miteinander verbinden. Zumindest die Hauptseite $21_1$ des Gehäuses 21 kann auch als eine Hauptseite des Arrays verstanden werden.

In Fig. 7a ist nun die Multiaperturabbildungsvorrichtung 70 mit einer ersten Stellung der Strahlumlenkeinrichtung 18 dargestellt, in welcher die Blendenstruktur 22 den Spalt $29_1$ verschließt.

In Fig. 7b ist die Multiaperturabbildungsvorrichtung 70 in der zweiten Stellung der Strahlumlenkeinrichtung 18 dargestellt, wobei die Blendenstruktur 22 den Spalt $29_2$ verschließt. In der in Fig. 7a dargestellten ersten Stellung kann die Blendenstruktur möglichst weit außen, das bedeutet, benachbart zu der Nebenseite $21_4$ mechanisch kontaktieren, das bedeutet, die Hauptseite $21_1$ benachbart zu der Nebenseite $21_4$ oder, wie es beispielsweise in Fig. 1 dargestellt ist, die Nebenseite $21_4$. In Fig. 7b ist eine Situation dargestellt, in der die Blendenstruktur 22 das Gehäuse 21 bzw. das Array benachbart zu der Nebenseite $21_3$ mechanisch kontaktiert.

In Fig. 7c ist die Multiaperturabbildungsvorrichtung 70 in einer optionalen Zwischenstellung zwischen der ersten Stellung und der zweiten Stellung dargestellt.

In dieser dritten Stellung weist die Blendenstruktur 22 hin zu einem Bereich zwischen den Nebenseiten $21_3$ und $21_4$. Basierend auf der Darstellung gemäß den Fig. 7a und 7b kann die Blendenstruktur 22 elastisch oder flexibel gebildet sein und beispielsweise eine flexible Blende oder Dichtlippe bereitstellen. Hierfür kann die Blendenstruktur 22 elastische Materialien umfassen, etwa Silikon, Polyurethan oder andere Elastomere. Während des Umschaltens zwischen der ersten und zweiten Stellung kann die Blendenstruktur 22 über die Hauptseite $21_1$ streichen. Wie es jedoch in Fig. 7c dargestellt ist, kann basierend auf einem veränderlichen Abstand zwischen der Strahlumlenkeinrichtung 18 und dem Array 14 bzw. dem Gehäuse 21 auch eine Situation erhalten werden, in der die Blendenstruktur 22 kontaktfrei zu dem Array 14 bzw. dem Gehäuse 21 ist. Hierfür kann die Multiaperturabbildungsvorrichtung 70 beispielsweise einen Aktuator umfassen, der ausgebildet ist, um die Strahlumlenkeinrichtung 18 und/oder das Array 14 translatorisch zu bewegen, um einen Abstand zwischen dem Array und der Strahlumlenkeinrichtung 18 zeitweise zu vergrößern. Das bedeutet, dass die Multiaperturabbildungsvorrichtung 70 ausgebildet sein kann, um während der Rotationsbewegung der Strahlumlenkeinrichtung eine translatorische Bewegung zwischen dem Array 14 und der Blendenstruktur 22 bereitzustellen, um zeitweise einen Abstand zwischen dem Array und der Blendenstruktur zu vergrößern.

In anderen Worten ist an einer Seite/Kante der Strahlumlenkeinrichtung der Multiaperturabbildungsvorrichtung mit linearer Kanalanordnung eine sich über alle Facetten des Spiegels und damit die gesamte Breite des Array-Objektivs erstreckende Blende bevorzugt aus einem flexiblen Material angeordnet. Diese ähnelt einer Dichtlippe. Die flexible Blende liegt in den zwei Nutzungszuständen, d. h. der ersten und der zweiten Stellung, entweder oberhalb oder unterhalb des Array-Objektivs an und verschließt die Lücke zwischen dem Array-Objektiv und der Strahlumlenkeinrichtung, so dass Falschlicht nicht bzw. in vermindertem Maße in die Kamera eindringen kann. Die flexible Blende kann in einem dritten Zustand, in dem die Kamera nicht benutzt wird, und in dem die Strahlumlenkeinrichtung in einer Zwischenstellung geparkt ist, weder oberhalb noch unterhalb des Array-Objektivs anliegen.

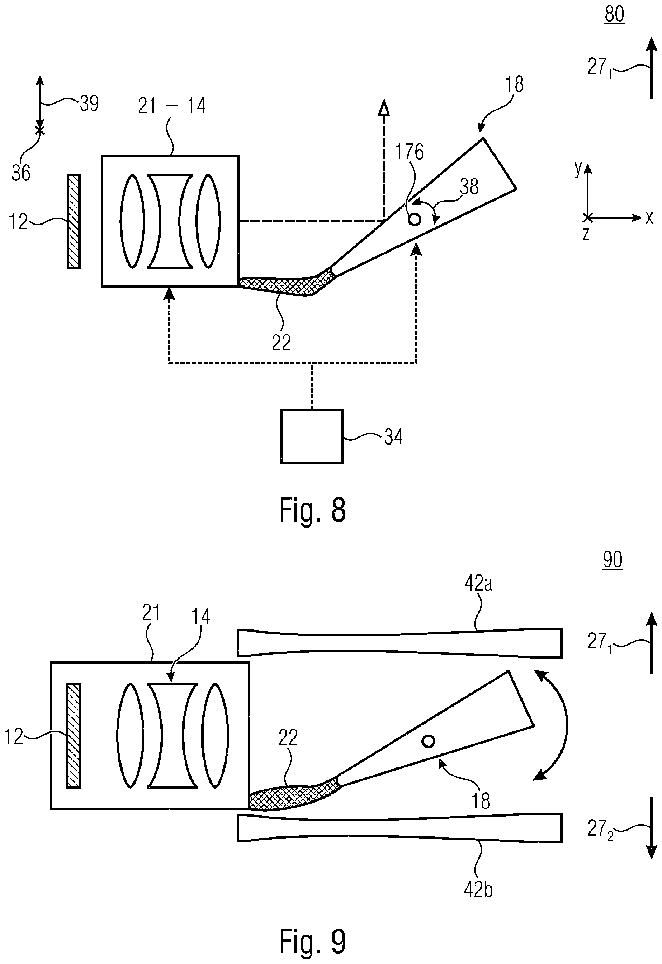

Fig. 8 zeigt eine schematische Seitenschnittansicht einer Multiaperturabbildungsvorrichtung 80 gemäß einem Ausführungsbeispiel. Verglichen mit der Multiaperturabbildungsvorrichtung 70 weist die Multiaperturabbildungsvorrichtung 70 einen optischen Bildstabilisator 34 auf, der ausgebildet ist, um eine Kraft auf das Array 14 bzw. das Gehäuse 21 und/oder die Strahlumlenkeinrichtung 18 auszuüben. Durch die erzeugte Kraft kann eine Relativbewegung zwischen dem Bildsensor 12, dem Array 14 und der Strahlumlenkeinrichtung 18 erhalten werden, etwa durch eine translatorische Verschiebung des Arrays 14 entlang einer oder beider der Bildachsen eines von dem Bildsensor 12 bereitgestellten Bildes. Bspw. kann hierfür eine Bewegung entlang einer z- Richtung parallel zu der Zeilenerstreckungsrichtung und entlang einer y-Richtung vorgesehen sein, die parallel zu Bildachsen 36 und/oder angeordnet sein können oder zumindest teilweise in diese Richtung verlaufen, das bedeutet, eine entsprechende Richtungskomponente aufweisen. Alternativ oder zusätzlich kann eine translatorische Relativbewegung der Strahlumlenkeinrichtung 18, etwa entlang der y-Richtung und/oder eine Rotationsbewegung um die Achse 176 erzeugt werden, um eine optische Bildstabilisierung entlang der Bildrichtung 36 oder 38 zu erhalten, die bspw. parallel zu der y-Richtung angeordnet ist. Dies ermöglicht eine geringe Komplexität, da das Array 14 in diesem Fall lediglich entlang einer Richtung, etwa z, bewegt werden kann und zusammen mit einer Bewegung der Strahlumlenkeinrichtung, deren Bewegungsfreiheit zur Richtungsumschaltung bereits vorgesehen sein kann, eine Bildstabilisierung entlang zweier Richtungen erhalten werden kann. Alternativ oder zusätzlich zu einer Bewegung des Arrays 14 kann auch eine Bewegung des Bildsensors 12 vorgesehen werden, um die optische Bildstabilisierung ganz oder teilwiese zu implementieren Eine optische Bildstabilisierung kann vorteilhaft sein, wenn während eines Erfassungsvorgangs, während dem Teilgesichtsfelder oder das Gesamtgesichtsfeld erfasst werden, die Multiaperturabbildungsvorrichtung 60 gegenüber dem Objektbereich, dessen Gesichtsfeld erfasst wird, bewegt wird. Die Rotationsbewegung zur Bildstabilisierung kann mit der Rotationsbewegung 38 überlagert werden und bspw. von demselben Aktuator bereitgestellt werden.

Der optische Bildstabilisator 34 kann ausgebildet sein, um dieser Bewegung zumindest teilweise entgegenzuwirken, um ein Verwackeln des Bilds zu reduzieren oder zu verhindern. Für die optische Bildstabilisierung entlang einer ersten Bildachse 36, die beispielsweise parallel zu der Zeilenerstreckungsrichtung z angeordnet sein kann, kann der optische Bildstabilisator 34 ausgebildet sein, um eine erste Relativbewegung zwischen dem Bildsensor 12, dem Array 14 und der Strahlumlenkeinrichtung 18 zu erzeugen. Für die optische Bildstabilisierung entlang einer hierzu senkrecht angeordneten zweiten Bildachse 39 kann der optische Bildstabilisator 34 ausgebildet sein, um eine zweite Relativbewegung zwischen dem Bildsensor 12, dem Array 14 und der Strahlumlenkeinrichtung 18 zu erzeugen. Für die erste Relativbewegung kann der optische Bildstabilisator 34 ausgebildet sein, um das Array 14 bzw. den Bildsensor 12 entlang der Bildachse 36 translatorisch zu verschieben. Alternativ oder zusätzlich kann der optische Bildstabilisator 34 ausgebildet sein, um eine translatorische Bewegung der Strahlumlenkeinrichtung 18 entlang der Bildachse 36 zu erzeugen. Der optische Bildstabilisator 34 ist dabei so konfiguriert, dass er die Bewegungen der Komponenten so ausführt, dass zwischen dem Bildsensor 12, dem Array 14 und der Strahlumlenkeinrichtung 18 die entsprechende Relativbewegung entsteht. Die Relativbewegung kann parallel zu der Zeilenerstreckungsrichtung z und senkrecht zu den Strahlengängen ausführbar sein. Es kann jedoch vorteilhaft sein, das Array 14 gegenüber dem Bildsensor 12 in eine translatorische Bewegung zu versetzen, um beispielsweise eine elektronische Verschaltung des Bildsensors 12 gegenüber weiteren Komponenten mechanisch wenig oder nicht zu belasten.

Zum Erzeugen der zweiten Relativbewegung kann der optische Bildstabilisator 34 ausgebildet sein, um eine Rotationsbewegung der Strahlumlenkeinrichtung 18 zu erzeugen oder zu ermöglichen. Diese kann mit einer Bewegung zum rotatorischen Umschalten der Strahlumlenkeinrichtung 18 überlagert werden. Es können für beide Rotationsbewegungen individuelle Aktuatoren oder eine kombinierte Aktuatoreinrichtung vorgesehen sein. Alternativ oder zusätzlich kann der optische Bildstabilisator ausgebildet sein um eine translatorische Relativbewegung zwischen dem Bildsensor 12 und dem Array 14 entlang der Bildachse 39 und/oder eine translatorische Relativbewegung zwischen dem Array 14 und der Strahlumlenkeinrichtung 18 bereitzustellen, wobei hierfür entsprechende Aktuatoren angeordnet sein können. Für die Erzeugung der Rotationsbewegung, etwa parallel zu der Rotationsbewegung 38 oder als Teil hiervon kann der optische Bildstabilisator 34 beispielsweise einen Aktuator umfassen, der ausgebildet ist, um die Rotationsbewegung 38 zu erzeugen. Obwohl für den Erhalt der optischen Bildstabilisierung eine Ausgestaltung des optischen Bildstabilisators 34 derart, dass er die erste und zweite Relativbewegung als translatorische Relativbewegung steuert, möglich ist, kann eine Ausgestaltung der zweiten Relativbewegung als Rotationsbewegung 38 vorteilhaft sein, da in diesem Fall eine translatorische Bewegung von Komponenten entlang der zweiten Bildachse 39 vermieden werden kann. Diese Richtung kann parallel zu einer Dickenrichtung der Multiaperturabbildungsvorrichtung 60 liegen, die gemäß manchen Ausführungen möglichst gering gehalten werden soll. Durch die Rotationsbewegung kann ein derartiges Ziel erreicht werden.

Wird nun Fig. 8 betrachtet und die Rotationsbewegung 38 und/oder eine translatorische Bewegung des Arrays 14 entlang der z-Richtung betrachtet, die durch den optischen Bildstabilisator 34 ausgelöst werden können, so kann basierend auf der Elastizität der Blendenstruktur 22 bzw. der Steifigkeit der Blendenstruktur sowie dem mechanischen Kontakt zwischen der Blendenstruktur 22 und dem Array 14 bzw. der Strahlumlenkeinrichtung 18 eine rückstellende Kraft erhalten werden, wenn die jeweilige Relativbewegung durch den optischen Bildstabilisator 34 erzeugt wird, da basierend auf der Relativbewegung eine Verformung der Blendenstruktur 22 erfolgt. Alternativ oder zusätzlich kann eine derartige rückstellende Kraft auch zumindest teilwiese durch eigene separate Federstrukturen erhalten werden, beispielsweise elastische Verbindungselemente. Die rückstellende Kraft kann konfiguriert sein, um zumindest 30%, zumindest 20% oder zumindest 10% einer maximalen Relativbewegung, d. h. einer maximalen Auslenkung im Zuge der Relativbewegung durch den optischen Bildstabilisator 34, zurückzustellen, wenn die Kraft des optischen Bildstabilisators 34 zurückgenommen wird.

In anderen Worten kann die flexible Blende 22 selbst bzw. zusätzlich ein- oder angebrachte Elemente als Federelemente für die Strahlumlenkeinrichtung dienen und damit beispielsweise bei Nutzung der letzteren zur optischen Bildstabilisierung eine rückstellende Wirkung haben.

Obwohl der optische Bildstabilisator im Zusammenhang mit der flexiblen Blende beschrieben ist, kann der optische Bildstabilisator auch in Abwesenheit derselben angeordnet werden, etwa in der Multiaperturabbildungsvorrichtung 10.

Fig. 9 zeigt eine schematische perspektivische Ansicht einer Multiaperturabbildungsvorrichtung 90 gemäß einem Ausführungsbeispiel, die transparente Strukturen 37a und 37b aufweist, die entlang der Blickrichtungen $27_1$ und $27_2$ ausgehend von der Strahlumlenkrichtung 18 angeordnet sind. Die transparenten Strukturen 37a und 37b können ausgebildet sein, um einen Eintritt von Schmutz oder Partikeln hin zu dem Gehäuse 21, der Strahlumlenkeinrichtung 18 oder weiteren Komponenten zu verhindern. Alternativ oder zusätzlich kann auch eine Berührung der Strahlumlenkeinrichtung 18, etwa durch einen Finger eines Benutzers oder dergleichen, verhindert oder erschwert werden. Die Multiaperturabbildungsvorrichtung 90 weist beispielsweise zwei Blickrichtungen und zwei transparente Strukturen 37a und 37b auf, wobei jede der transparenten Strukturen 37a und 37b mit jeweils einer der Blickrichtungen $27_1$ bzw. $27_2$ assoziiert sein kann. Wird beispielsweise die Multiaperturabbildungsvorrichtung 10 betrachtet, die gebildet sein kann, um lediglich eine Blickrichtung aufzuweisen, so kann die Multiaperturabbildungsvorrichtung auch mit lediglich einer transparenten Struktur 37 ausgeführt sein.

Die transparenten Strukturen 37a können beispielsweise ein Glasmaterial und/oder ein Polymermaterial umfassen und für die von der Multiaperturabbildungsvorrichtung 90 zu erfassende elektromagnetische Strahlung im Wesentlichen transparent gebildet sein, wobei ebenfalls vorstellbar ist, dass Filter in die transparente Struktur mit eingebracht sind. Die transparenten Strukturen 37a und/oder 37b können eine Oberflächenrauigkeit aufweisen, die gering ist, das bedeutet, die transparenten Strukturen 37a und/oder 37b können glatt ausgeführt sein.

Ein beispielhafter, jedoch nicht einschränkender Wert einer Rauheit $R_a$ für die transparenten Strukturen 37a und/oder 37b kann beispielsweise höchstens 0,03 $\mu$m, höchstens 0,005 $\mu$m oder höchstens 0,0005 $\mu$m betragen. Die Blendenstruktur 22 kann eine Rauheit aufweisen, deren Rauheitswert vergleichsweise größer ist als die Rauheit der transparenten Strukturen 37a und/oder 37b, Dies ermöglicht eine Erschwerung oder gar Vermeidung einer Anhaftung der Blendenstruktur 22 an einer transparenten Struktur 37a und/oder 37b bei einem mechanischen Kontakt zwischen denselben. Das bedeutet, alternativ zu dem mechanischen Kontakt mit dem Array 14 kann die Blendenstruktur 22 mit der transparenten Struktur 37a und/oder 37b in mechanischem Kontakt stehen, etwa zeitlich wechselweise. Die Blendenstruktur kann in der ersten Stellung und in der zweiten Stellung in mechanischem Kontakt mit einerseits dem Array 14 oder einer der transparenten Strukturen 37a und 37b und andererseits mit der Strahlumlenkeinrichtung 18.

In anderen Worten kann die flexible Blende 22 über eine raue Oberfläche verfügen, so dass die Blende an glatten Oberflächen wie etwa Deckgläsern 37a und/oder 37b nicht haften bleiben und/oder bereits bei geringen Kräften, die durch die Strahlumlenkeinrichtung aufgebracht werden kann, von der Oberfläche gelöst werden kann. Das bedeutet, selbst bei einem Erfolgen eines Anhaftens kann durch die Rotationsbewegung ein leichtes Ablösen der Blendenstruktur 22 von den transparenten Strukturen 37a und/oder 37b erhalten werden.

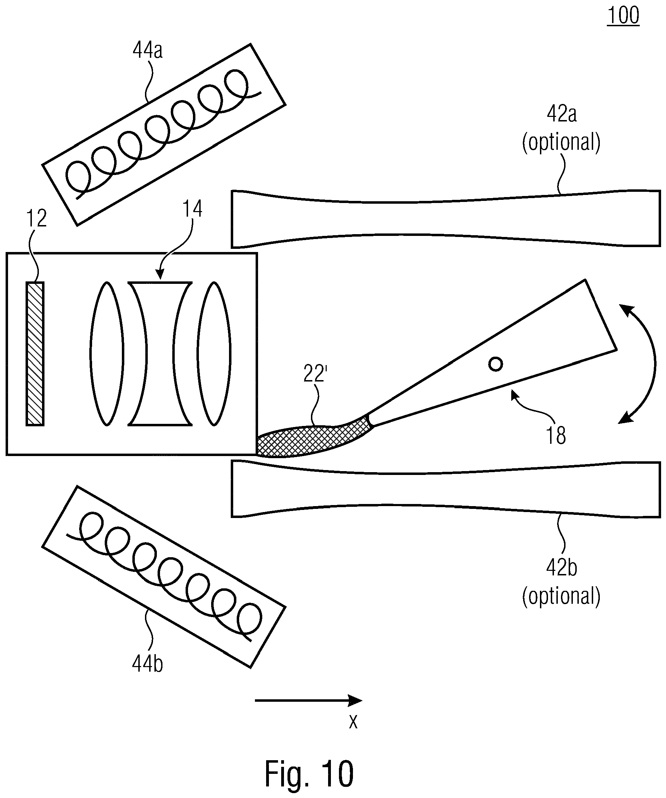

Fig. 10 zeigt eine schematische Seitenschnittansicht einer Multiaperturabbildungsvorrichtung 100, die optional die transparenten Strukturen 37a und 37b umfassen kann, ohne weiteres jedoch auch ohne dieselben ausführbar ist. Die Multiaperturabbildungsvorrichtung 80 umfasst eine Blendenstruktur 22', die ähnlich der Blendenstruktur 22 gebildet sein kann, jedoch zusätzlich ein magnetisches oder magnetisierbares Material umfassen kann, etwa ferromagnetische oder paramagnetische Materialien. Diese Materialien können beispielsweise als Partikel, Späne, Sägespäne oder Schleifspäne in das Material der Blendenstruktur 22 eingebracht sein. Das bedeutet, dass die Blendenstruktur 22' magnetische Materialien umfassen kann. Benachbart zu dem Gehäuse 21 und/oder die transparenten Strukturen 37a und/oder 37b und mithin benachbart zu der Blendenstruktur 22 kann ein Magnetfeld-bereitstellendes Element 44a und/oder 44b angeordnet sein, das bedeutet, eine Magnetfeldquelle. Bei den Magnetfeld-bereitstellenden Elementen 44a und/oder 44b kann es sich bevorzugt um Elemente handeln, die in einem zeitlichen Wechsel ein vergleichsweise starkes und ein vergleichsweise schwaches bzw. kein Magnetfeld bereitstellen. Beispielsweise kann es sich bei den Magnetfeldquellen 44a und 44b um Elektromagneten handeln. Alternativ oder zusätzlich ist ebenfalls vorstellbar, dass die Magnetfeldquellen beispielsweise Permanentmagnete umfassen und mit einem veränderlichen Abstand zu der Blendenstruktur 22' angeordnet sind, um bei einem geringen Abstand ein vergleichsweise großes Magnetfeld und bei einem hohen Abstand ein vergleichsweises niedriges Magnetfeld bereitzustellen.

Magnetfelder der Magnetfeldquellen 44a und 44b können so ausgestaltet sein, dass basierend auf dem Magnetfeld eine anziehende Kraft auf die Blendenstruktur 22' ausgeübt wird, so dass die anziehende Kraft die Rotationsbewegung der Strahlumlenkeinrichtung 18 ausführt oder zumindest unterstützt. Alternativ oder zusätzlich ist es ebenfalls vorstellbar, dass nach der Rotationsbewegung der Strahlumlenkeinrichtung 18 ein eventuell im Blickfeld des Arrays 14 verbleibender Teil der Blendenstruktur 22' durch die anziehende Kraft aus diesem Blickfeld herausbewegt wird, das bedeutet, herausgezogen wird.

In anderen Worten können oberhalb und unterhalb des Array-Objektivs aus einer Spule und gegebenenfalls einem zusätzlichen Kern Elektromagnete gebildet sein, die die flexible Blende zusätzlich zur Drehbewegung der Strahlumlenkeinrichtung 18 anziehen, so dass die Blende eine noch verbesserte lichtabdichtende Wirkung aufweist.

Die vorangehend beschriebene Anordnung einer Blendenstruktur ermöglicht eine Verbesserung der Falschlichtunterdrückung in Multiaperturabbildungsvorrichtungen. Derartige Multiaperturabbildungsvorrichtungen und/oder Multiaperturabbildungssysteme können Anwendung finden in Konzepten mit linearer Kanalanordnung und kleinster Baugröße.

Gemäß Ausführungsbeispielen kann eine Fokussiereinrichtung vorgesehen sein, die ausgebildet ist, um kanalindividuell, für zwei oder mehrere, ggf. alle optischen Kanäle gemeinsam, einen Fokus der Multiaperturabbildungsvorrichtung 100 oder einer anderen hierin beschriebenen Multiaperturabbildungsvorrichtung, etwa die Multiaperturabbildungsvorrichtung 10, 10', 40, 50, 60, 70, 80 oder 90 zu verändern. Hierfür kann ein Aktuator verwendet werden, um bspw. ein Abstand zwischen zumindest einer Optik aus dem Array 14 oder dem Array 14 insgesamt und dem Bildsensor 12 zu verändern. Dies kann zu einem veränderlichen Abstand zwischen der Optik bzw. dem Array 14 und der Strahlumlenkeinrichtung 18 führen, etwa wenn die Optik des optischen Kanals, d. h., das Objektiv, axial bewegt wird. Durch eine flexible oder elastische Blende kann der Spalt zwischen dem Array 14 und der Strahlumlenkeinrichtung 18 geschlossen bleiben, etwa wenn eine axiale Ausdehnung der Blendenstruktur 22' entlang der x-Richtung größer oder gleich ist wie ein maximaler Abstand zwischen dem Array 14 und der Strahlumlenkeinrichtung 18. Bei einem Verringerung des Abstands und/oder einer darauffolgenden Vergrößerung desselben kann eine Stauchung/Verlängerung oder Verformung der Blendenstruktur 22' den Spalt verschlossen halten.

Obwohl die Einrichtung zur optischen Bildstabilisierung bzw. der optische Bildstabilisator und die Fokussiereinrichtung im Zusammenhang mit einer flexiblen Blende beschrieben sind, können beide Einrichtungen einzeln oder in Kombination auch in Abwesenheit einer derartigen Blende vorgesehen sein. Bspw. können das Array 14 und der Bildsensor 12 als gemeinsame Einheit von einem Aktuator des optischen Bildstabilisators bewegt werden, etwa durch Anordnen und Bewegen der Einheit in, an oder auf einem bewegbaren Verfahrschlitten. Innerhalb dieser Einheit können ein oder mehrere Aktuatoren vorgesehen sein, um eine Bewegung zwischen einer, mehrerer oder allen Optiken des Arrays und der Strahlumlenkeinrichtung 18 und/oder dem Bildsensor 12 bereitzustellen. Eine derartige Bewegung kann durch Bewegen der Optiken und/oder eventueller Träger, die mit Optiken verbunden sind, erfolgen.

Die Einrichtungen zur optischen Bildstabilisierung und/oder die Fokussiereinrichtung können bei der Anpassungsbewegung entsprechend mitbewegt werden. Alternativ oder zusätzlich können auch die gleichen Aktuatoren oder Aktautoreinrichtungen zum Erzeugen der Bewegung verwendet werden.

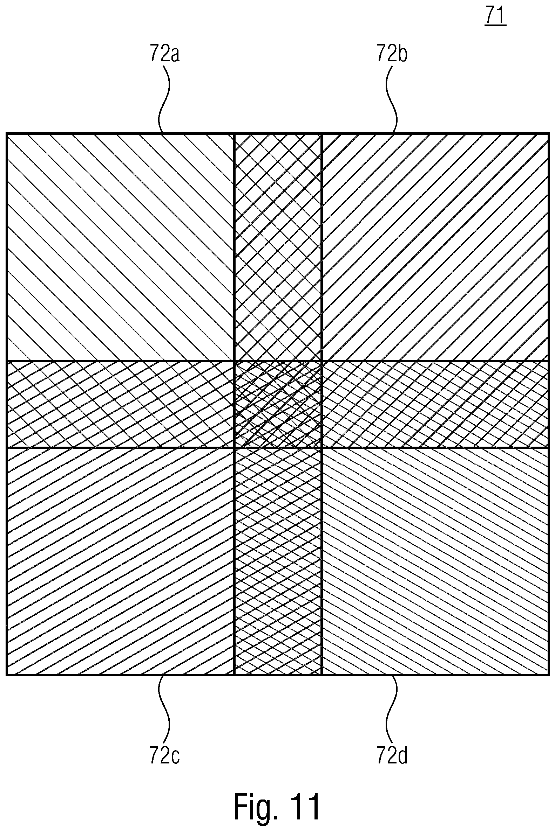

Fig. 11 zeigt eine schematische Darstellung eines Gesamtgesichtsfelds 71, wie es beispielsweise mit einer vorangehend beschriebenen Multiaperturabbildungsvorrichtung erfassbar ist, etwa der Multiaperturabbildungsvorrichtung 10, 10', 40, 50, 60, 70, 80, 90 oder 100. Obwohl die hierin beschriebenen Multiaperturabbildungsvorrichtungen so beschrieben sind, dass sie beispielhaft vier optische Kanäle zur Erfassung von vier Teilgesichtsfeldern 72a-72d des Gesamtgesichtsfelds aufweisen, so sei darauf hingewiesen, dass die hierin beschriebenen Multiaperturabbildungsvorrichtungen auch mit einer anderen Anzahl optischer Kanäle gebildet sein können, etwa mit einer Anzahl von zumindest 2, zumindest 3, zumindest 4, zumindest 10, zumindest 20 oder ein noch höherer Wert. Es sei ferner darauf hingewiesen, dass es vorstellbar ist, dass einige der Teilgesichtsfelder 72a-72d mit einer Anzahl von mehr als einem optischen Kanal erfasst werden. Die Strahlengänge der optischen Kanäle der Multiaperturabbildungsvorrichtungen können auf voneinander verschiedene Teilgesichtsfelder 72a-d lenkbar sein, wobei jedem optischen Kanal ein Teilgesichtsfeld 72a-d zugeordnet werden kann. Beispielsweise überlappen die Teilgesichtsfelder 72a-d miteinander, um eine Aneinanderfügung einzelner Teilbilder zu einem Gesamtbild zu ermöglichen. Weist die Multiaperturabbildungsvorrichtung eine von 4 verschiedene Anzahl von optischen Kanälen auf, kann das Gesamtgesichtsfeld 71 eine von 4 verschiedene Anzahl von Teilgesichtsfeldern aufweisen. Alternativ oder zusätzlich kann zumindest ein Teilgesichtsfeld 72a-d von einem zweiten oder einer höheren Anzahl von optischen Kanälen mit einer höheren Anzahl von Modulen (Multiaperturabbildungsvorrichtungen) erfasst werden, um Stereo-, Trio-, Quattro-Kameras oder höherwertigere Kameras zu bilden. Die einzelnen Module können um Bruchteile eines Pixels verschoben sein, und ausgebildet sein, um Verfahren der Superresolution zu implementieren. Eine Anzahl von optischen Kanälen und/oder eine Anzahl von Multiaperturabbildungsvorrichtungen und/oder eine Anzahl von Teilgesichtsfeldern ist/sind beispielsweise beliebig.

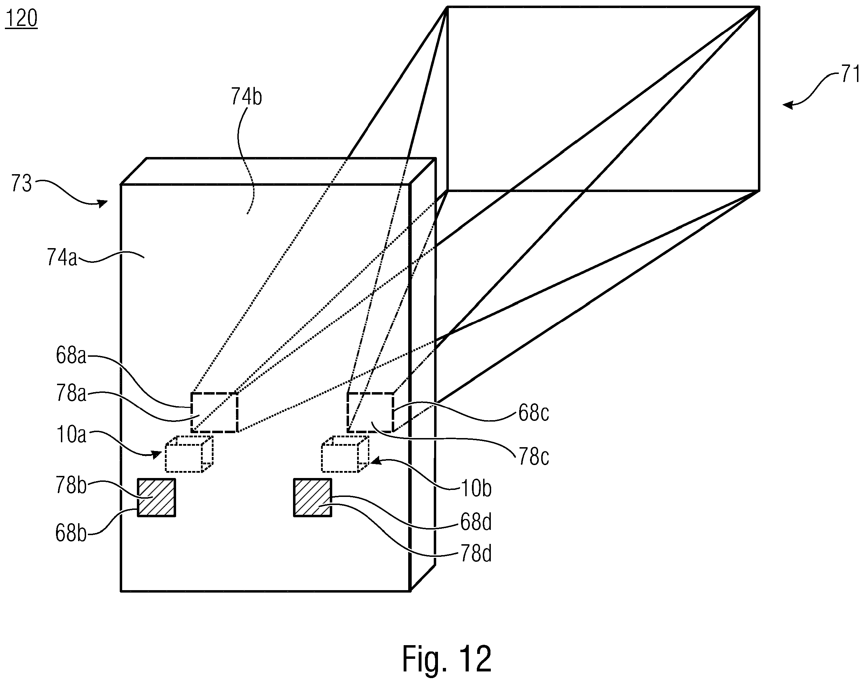

Fig. 12 zeigt eine schematische perspektivische Ansicht eines Abbildungssystems 120, das ein Gehäuse 73 und eine erste Multiaperturabbildungsvorrichtung 10a und eine zweite Multiaperturabbildungsvorrichtung 10b aufweist, die in dem Gehäuse 73 angeordnet sind. Das Abbildungssystem 120 ist ausgebildet, um das Gesamtgesichtsfeld 71 zumindest teilweise, etwa im Überlappbereich der Erfassungsbereiche der Multiaperturabbildungsvorrichtungen 10a und 10b, stereoskopisch mit den Multiaperturabbildungsvorrichtungen 10a und 10b zu erfassen. Der Überlappbereich kann einen Teil des Gesamtgesichtsfelds 71 bilden, kann aber auch das Gesamtgesichtsfeld 71 nahezu vollständig oder vollständig abdecken, d. h., zu einem Anteil von zumindest 95%, zumindest 97% oder zumindest 99%. Das Gesamtgesichtsfeld 71 ist beispielsweise an einer, einer Hauptseite 74a abgewandten, Hauptseite 74b des Gehäuses 73 angeordnet. Beispielsweise können die Multiaperturabbildungsvorrichtungen 10a und 10b das Gesamtgesichtsfeld 71 durch transparente Bereiche 68a bzw. 68c erfassen, wobei in der Hauptseite 74b angeordnete Blenden 78a und 78c zumindest teilweise transparent sind. In der Hauptseite 74a angeordnete Blenden 78b und 78d können transparente Bereiche 78b bzw. 78d umfassen, die zumindest teilweise die transparenten Bereiche 68b und 68d optisch verschließen, so dass ein Umfang von Falschlicht aus einer der Hauptseite 74a zugewandten Seite, das die Aufnahmen der Multiaperturabbildungsvorrichtungen 10a und/oder 10b verfälschen kann, zumindest reduziert ist. Die Hauptseite 74a kann mit der Gehäuseseite 23a der Vorrichtung 30 vergleichbar sein. In gleicher Weise kann die Hauptseite 74b mit der Gehäuseseite 23b vergleichbar sein. Die Strahlumlenkeinrichtung einer oder beider Multiaperturabbildungsvorrichtungen 10a und/oder 1b oder eine gemeinsame Strahlumlenkeinrichtung kann alternativ zu der Bereitstellung einer Blende 68a-d aus dem Gehäuse 73 herausbewegt werden.

Obwohl die Multiaperturabbildungsvorrichtungen 10a und 10b räumlich voneinander beabstandet angeordnet dargestellt sind, können die Multiaperturabbildungsvorrichtungen 10a und 10b auch räumlich benachbart oder kombiniert angeordnet sein. Beispielsweise können die Arrays der Abbildungsvorrichtungen 10a und 10b nebeneinander oder parallel zueinander angeordnet sein. Die Arrays können mehrzeilig oder einzeilig gebildet sein und können zueinander angeordnete Zeilen bilden, wobei jede Multiaperturabbildungsvorrichtung 10a und 10b bspw. ein einzeiliges Array aufweist. Die Multiaperturabbildungsvorrichtungen 10a und 10b können eine gemeinsame Strahlumlenkeinrichtung und/oder einen gemeinsamen Träger 47 und/oder einen gemeinsamen Bildsensor 12 aufweisen. Das bedeutet, dass das die Multiaperturabbildungsvorrichtungen 10a und 10b und/oder weitere Multiaperturabbildungsvorrichtungen eine gemeinsamen Bildsensor, einen gemeinsamen Elektronikträger zum Steuern und/oder Auslesen der Multiaperturabbildungsvorrichtungen und/oder ein gemeinsames Array und/oder eine gemeinsame Strahlumlenkeinheit aufweisen kann. Alternativ oder zusätzlich zu der Multiaperturabbildungsvorrichtung 10a und/oder 10b kann zumindest die Multiaperturabbildungsvorrichtung 10', 40, 50, 60, 70, 80, 90 und/oder 100 angeordnet sein und/oder eine weitere Multiaperturabbildungsvorrichtung 10. Die oben beschriebenen gemeinsamen Elemente, etwa die Strahlumlenkeinrichtung 18 oder das Array 14 können von einem gemeinsamen optischen Bildstabilisator genutzt werden, da beispielsweise eine Bewegung der Strahlumlenkeinrichtung für optische Kanäle mehrerer Module gemeinsam wirken kann, was eine gemeinsame optische Bildstabilisierung ermöglicht. Dementsprechend kann auch der optische Bildstabilisator für mehrere Module gemeinsam ausgeführt sein und/oder ein gemeinsamer Referenzkanal für mehrere Module benutzt werden.

Die transparenten Bereiche 68a-d können zusätzlich mit einer schaltbaren Blende 78a-d ausgestattet sein, die den optischen Aufbau für den Fall der Nicht-Benutzung abdeckt. Die Blenden 78a-d können ein mechanisch bewegtes Teil umfassen. Die Bewegung des mechanisch bewegten Teils kann unter Nutzung eines Aktuators erfolgen, wie es beispielsweise auch für andere Bewegungen vorgesehen sein kann. Die Blenden 78a-d können alternativ oder zusätzlich elektrisch steuerbar sein und eine elektrochrome Schicht oder eine elektrochrome Schichtfolge umfassen, d. h., als elektrochrome Blende gebildet sein.

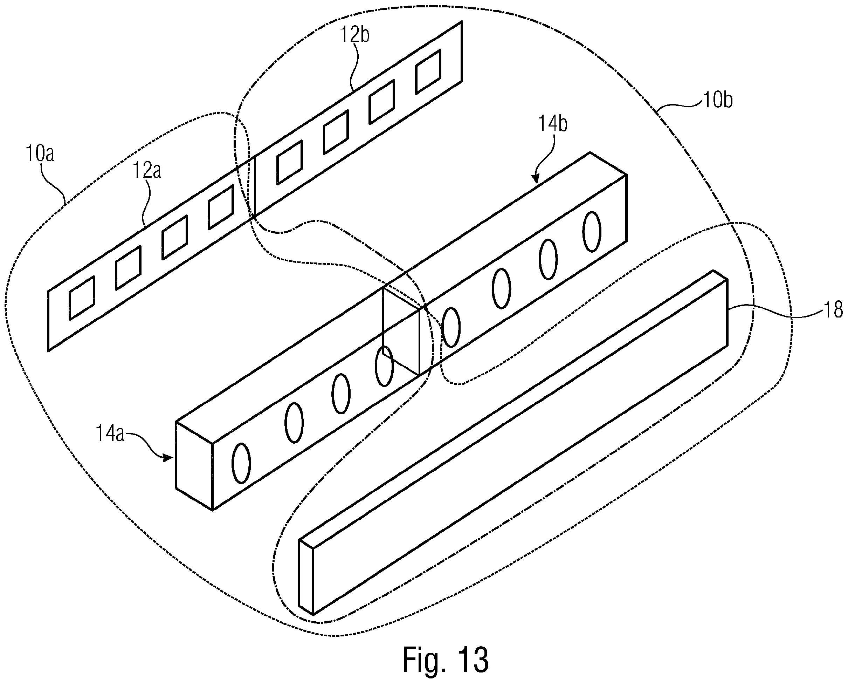

Fig. 13 zeigt einen schematischen Aufbau umfassend eine erste Multiaperturabbildungsvorrichtung 10a und eine zweite Multiaperturabbildungsvorrichtung 10b, wie er beispielsweise in dem Abbildungssystem 120 angeordnet sein kann. Die Arrays 14a und 14b können einzeilig gebildet sein und können eine gemeinsame Zeile bilden. Die Bildsensoren 12a und 12b können auf einem gemeinsamen Substrat bzw. auf einem gemeinsamen Schaltungsträger, wie einer gemeinsamen Platine oder einem gemeinsamen Flexboard markiert sein. Alternativ können die Bildsensoren 12a und 12b auch voneinander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen Array und/oder einer gemeinsamen Strahlumlenkeinrichtung ist, dass eine Bewegung der jeweiligen Komponenten mit einer großen Präzision durch Ansteuern einer geringen Menge von Aktuatoren erhalten werden kann und eine Synchronisierung zwischen Aktuatoren reduziert oder vermieden werden kann. Ferner kann eine hohe thermische Stabilität erhalten werden. Alternativ oder zusätzlich können auch andere und/oder voneinander verschieden Multiaperturabbildungsvorrichtungen ein gemeinsames Array, einen gemeinsamen Bildsensor und/oder eine gemeinsame Strahlumlenkeinrichtung aufweisen.

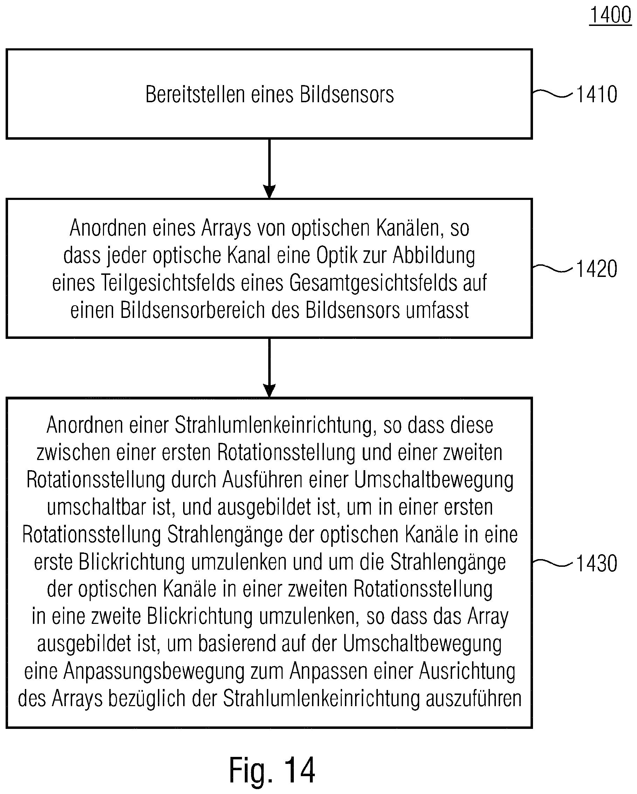

Fig. 14 zeigt ein schematisches Flussdiagramm eines Verfahrens 1400 zum Bereitstellen einer Multiaperturabbildungsvorrichtung, etwa der Multiaperturabbildungsvorrichtung 10.

Das Verfahren 1400 umfasst einen Schritt 1410, in welchem ein Bereitstellen eines Bildsensors erfolgt. Ein Schritt 1420 umfasst ein Anordnen eines Arrays von optischen Kanälen, so dass jeder optische Kanal eine Optik zur Abbildung eines Teilgesichtsfelds eines Gesamtgesichtsfelds auf einen Bildsensorbereich des Bildsensors umfasst. Ein Schritt 1430 umfasst ein Anordnen einer Strahlumlenkeinrichtung, so dass diese zwischen einer ersten Rotationsstellung und einer zweiten Rotationstellung durch Ausführen einer Umschaltbewegung umschaltbar ist, und ausgebildet ist, um in einer ersten Rotationsstellung Strahlengänge der optischen Kanäle in eine erste Blickrichtung umzulenken und um die Strahlengänge der optischen Kanäle in einer zweiten Rotationsstellung in eine zweite Blickrichtung umzulenken. Das verfahren wird so ausgeführt, dass das Array ausgebildet ist, um basierend auf der Umschaltbewegung eine Anpassungsbewegung zum Anpassen einer Ausrichtung des Arrays bezüglich der Strahlumlenkeinrichtung auszuführen.

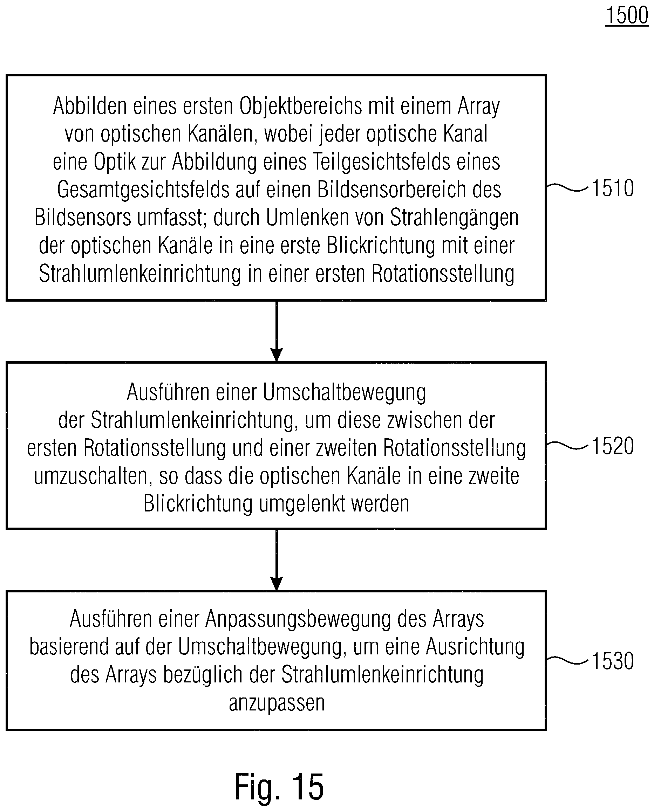

Fig. 15 zeigt ein schematisches Flussdiagramm eines Verfahrens 1500 zum Erfassen eines Bildbereichs.

Das Verfahren 1500 umfasst einen Schritt 1510 in welchem ein Abbilden eines ersten Objektbereichs mit einem Array von optischen Kanälen, wobei jeder optische Kanal eine Optik zur Abbildung eines Teilgesichtsfelds eines Gesamtgesichtsfelds auf einen Bildsensorbereich des Bildsensors umfasst; durch Umlenken von Strahlengängen der optischen Kanäle in eine erste Blickrichtung mit einer Strahlumlenkeinrichtung in einer ersten Rotationsstellung, erfolgt. In einem Schritt 1520 erfolgt ein Ausführen einer Umschaltbewegung der Strahlumlenkeinrichtung, um diese zwischen der ersten Rotationsstellung und einer zweiten Rotationsstellung umzuschalten, so dass die optischen Kanäle in eine zweite Blickrichtung umgelenkt werden. Ein Schritt 1530 umfasst ein Ausführen einer Anpassungsbewegung des Arrays basierend auf der Umschaltbewegung, um eine Ausrichtung des Arrays bezüglich der Strahlumlenkeinrichtung anzupassen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Multiaperturabbildungsvorrichtung mit:

    einem Bildsensor (12);
    einem Array (14) von optischen Kanälen (16a-h), wobei jeder optische Kanal (16a-h) eine Optik (64a-h) zur Abbildung eines Teilgesichtsfelds (72a-d) eines Gesamtgesichtsfelds (71) auf einen Bildsensorbereich (24a-h) des Bildsensors (12) umfasst; und
    einer Strahlumlenkeinrichtung (18), die zwischen einer ersten Rotationsstellung und einer zweiten Rotationstellung durch Ausführen einer Umschaltbewegung umschaltbar ist, und die ausgebildet ist, um in einer ersten Rotationsstellung Strahlengänge (26a-h) der optischen Kanäle (16a-h) in eine erste Blickrichtung (27₁) umzulenken und um die Strahlengänge (26a-h) der optischen Kanäle (16a-h) in einer zweiten Rotationsstellung in eine zweite Blickrichtung (27₁) umzulenken;
    wobei das Array (14) ausgebildet ist, um basierend auf der Umschaltbewegung eine Anpassungsbewegung (11) zum Anpassen einer Ausrichtung des Arrays (14) bezüglich der Strahlumlenkeinrichtung (18) auszuführen;
    wobei die Strahlumlenkeinrichtung (18) zwei gegenüberliegende und reflektierend gebildete Hauptseiten aufweist und ausgebildet ist, um in der ersten Stellung die Strahlengänge mit einer ersten Hauptseite der Strahlumlenkeinrichtung in die erste Blickrichtung (27₁) zu lenken und in der zweiten Stellung die Strahlengänge mit einer zweiten Hauptseite in die zweite Blickrichtung (27₂) zu lenken.

2.  Multiaperturabbildungsvorrichtung gemäß einem der vorangehenden Ansprüche, bei der eine laterale Position der Strahlumlenkeinrichtung entlang einer Dickenrichtung (y) der Multiaperturabbildungsvorrichtung, die senkrecht zu einer axialen Richtung (x) zwischen dem Bildsensor und dem Array und senkrecht zu einer Zeilenerstreckungsrichtung (z) einer Zeile des Arrays entlang der optische Kanäle im Wesentlichen entlang einer Geraden angeordnet sind angeordnet ist, in der ersten Rotationsstellung und in der zweiten Rotationsstellung in einem Ausmaß von zumindest 20 % gleich ist.

3.  Multiaperturabbildungsvorrichtung gemäß einem der vorangehenden Ansprüche, bei der die Umschaltbewegung eine rotatorische Bewegung (38) der Strahlumlenkeinrichtung (18) und eine erste translatorische Bewegung (17) der Strahlumlenkeinrichtung (18) entlang einer ersten Bewegungsrichtung (y) umfasst, wobei die Anpassungsbewegung (11) eine zweite translatorische Bewegung ($11_1$) des Arrays (14) entlang der Bewegungsrichtung umfasst.

4. Multiaperturabbildungsvorrichtung gemäß einem der vorangehenden Ansprüche, bei der die Umschaltbewegung von der ersten in die zweite Rotationsstellung eine erste rotatorische Bewegung (38) der Strahlumlenkeinrichtung (18) und die Anpassungsbewegung (11) eine zweite rotatorische Bewegung ($11_2$) umfasst.

5. Multiaperturabbildungsvorrichtung gemäß Anspruch 1 oder 2, bei der die Umschaltbewegung von der ersten in die zweite Rotationsstellung eine erste rotatorische Bewegung (38) der Strahlumlenkeinrichtung (18) und eine translatorische Bewegung (17) der Strahlumlenkeinrichtung (18) entlang einer ersten Bewegungsrichtung (y) umfasst; wobei die Anpassungsbewegung (11) eine translatorische Bewegung ($11_1$) des Arrays (14) entlang der ersten Bewegungsrichtung (y) umfasst und eine zweite rotatorische Bewegung ($11_1$) umfasst.

6. Multiaperturabbildungsvorrichtung gemäß einem der vorangehenden Ansprüche, bei der das Array (14) und der Bildsensor (12) mechanisch mit einander gekoppelt sind und ausgebildet sind, um die Anpassungsbewegung (11) gemeinsam auszuführen.

7. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei die Blendenstruktur (22; 22') in der ersten Stellung und in der zweiten Stellung in mechanischem Kontakt mit einerseits dem Array (14) oder einer transparenten Struktur (42a, 42b), die ausgebildet ist, um einen Eintritt von Partikeln zu der Strahlumlenkeinrichtung (18) zumindest teilweise zu reduzieren, und andererseits der Strahlumlenkeinrichtung (18) steht.

8. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei der die Blendenstruktur (22; 22') in der ersten Stellung benachbart zu einer ersten Nebenseite (314) des Arrays (14) mit selbigen in mechanischem Kontakt steht und in der zweiten Stellung benachbart zu einer gegenüberliegenden zweiten Nebenseite (313) des Arrays (14) in mechanischem Kontakt steht und, bei der die Strahlumlenkeinrichtung (18) eine dritte Rotationsstellung aufweist, die rotatorisch zwischen der ersten Rotationsstellung und der zweiten Rotationsstellung angeordnet ist und in der die Blendenstruktur (22; 22') von der ersten und zweiten Nebenseite (313, 314) des Arrays (14) beabstandet ist.

9. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei die Blendenstruktur ausgebildet ist, um mit einerseits dem Array (14) oder einer transparenten Struktur (42a, 42b), die ausgebildet ist, um einen Eintritt von Partikeln zu der Strahlumlenkeinrichtung (18) zumindest teilweise zu reduzieren, und andererseits der Strahlumlenkeinrichtung (18) in mechanischem Kontakt zu stehen, wenn die Strahlengänge (26a-h) umgelenkt werden, wobei die Blendenstruktur (22; 22') eine mechanische Steifigkeit aufweist, die bei einer Relativbewegung zwischen dem Array (14) und der Strahlumlenkeinrichtung (18) zur optischen Bildstabilisierung eine rückstellende Kraft erzeugt, die konfiguriert ist, um zumindest 30% einer maximalen Relativbewegung zurückzustellen.

10. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei die Blendenstruktur (22') ein magnetisches Material umfasst und bei der benachbart zu der Blendenstruktur (22') ein Magnetfeld-bereitstellendes Element (44a, 44b) angeordnet ist und ausgebildet ist, um die Blendenstruktur (22') anzuziehen.

11. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei entlang einer Richtung, entlang der die Strahlengänge umgelenkt werden, eine transparente Struktur (42a, 42b) angeordnet ist und ausgebildet ist, um einen Eintritt von Partikeln zu der Strahlumlenkeinrichtung (18) zumindest teilweise zu reduzieren, wobei eine Oberflächenrauigkeit der Blendenstruktur (22; 22') größer ist als eine Oberflächenrauigkeit der transparenten Struktur (42a, 42b).

12. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; wobei die Strahlumlenkeinrichtung (18) als ein Array von nebeneinander angeordneten Facetten (172a-d) gebildet ist, wobei jeder optische Kanal (16a-d) einer der Facetten (172a-d) zugeordnet ist, wobei sich die Blendenstruktur (22; 22') über das Array von Facetten (172a-d) erstreckt.

13. Multiaperturabbildungsvorrichtung gemäß einem der vorangehenden Ansprüche, mit einer Blendenstruktur (22; 22'), die angeordnet ist, um einen Spalt (291, 292) zwischen dem Array (14) und der Strahlumlenkeinrichtung (18) zumindest teilweise zu verschließen; bei der die Blendenstruktur (22; 22') elastisch gebildet ist.

14. Abbildungssystem (120) mit einem ersten Modul umfassend eine Multiaperturabbildungsvorrichtung (10a) gemäß einem der Ansprüche 1 bis 13 und einem zweiten Modul umfassend eine Multiaperturabbildungsvorrichtung (10b) gemäß einem der Ansprüche 1 bis 13, wobei das erste und das zweite Modul ausgebildet sind, um das Gesamtgesichtsfeld (71) zumindest stereoskop zu erfassen.

15. Verfahren (1500) zum Erfassen eines Objektbereichs mit folgenden Schritten

   Abbilden (1510) eines ersten Objektbereichs mit einem Array (14) von optischen Kanälen (16a-h), wobei jeder optische Kanal (16a-h) eine Optik (64a-h) zur Abbildung eines Teilgesichtsfelds (72a-d) eines Gesamtgesichtsfelds (71) auf einen Bildsensorbereich (24a-h) des Bildsensors (12) umfasst; durch Umlenken von Strahlengängen der optischen Kanäle (16a-h) in eine erste Blickrichtung (27$_1$) mit einer Strahlumlenkeinrichtung (18), die zwei gegenüberliegende und reflektierend gebildete Hauptseiten aufweist, in einer ersten Rotationsstellung;
   Ausführen (1520) einer Umschaltbewegung der Strahlumlenkeinrichtung, um diese zwischen der ersten Rotationsstellung und einer zweiten Rotationsstellung umzuschalten, so dass die optischen Kanäle in eine zweite Blickrichtung (27$_2$) umgelenkt werden;
   Ausführen (1530) einer Anpassungsbewegung des Arrays basierend auf der Umschaltbewegung, um eine Ausrichtung des Arrays bezüglich der Strahlumlenkeinrichtung anzupassen;
   so dass in der ersten Rotationsstellung die Strahlengänge mit einer ersten Hauptseite der Strahlumlenkeinrichtung in die erste Blickrichtung (27$_1$) gelenkt werden und in der zweiten Rotationsstellung die Strahlengänge mit einer zweiten Hauptseite in die zweite Blickrichtung (27$_2$) gelenkt werden.

16. Verfahren (1400) zum Bereitstellen einer Multiaperturabbildungsvorrichtung mit folgenden Schritten:

   Bereitstellen (1410) eines Bildsensors (12);
   Anordnen (1420) eines Arrays (14) von optischen Kanälen (16a-h), so dass jeder optische Kanal (16a-h) eine Optik (64a-h) zur Abbildung eines Teilgesichtsfelds (72a-d) eines Gesamtgesichtsfelds (71) auf einen Bildsensorbereich (24a-h) des Bildsensors (12) umfasst;
   Anordnen (1430) einer Strahlumlenkeinrichtung (18), die zwei gegenüberliegende und reflektierend gebildete Hauptseiten aufweist, so dass diese zwischen einer ersten Rotationsstellung und einer zweiten Rotationstellung durch Ausführen einer Umschaltbewegung umschaltbar ist, und ausgebildet ist, um in einer ersten Rotationsstellung Strahlengänge (26a-h) der optischen Kanäle (16a-h) in eine erste Blickrichtung (27$_1$) umzulenken und um die Strahlengänge (26a-h) der optischen Kanäle (16a-h) in einer zweiten Rotationsstellung in eine zweite Blickrichtung (27$_1$) umzulenken;
   so dass das Array ausgebildet ist, um basierend auf der Umschaltbewegung eine Anpassungsbewegung zum Anpassen einer Ausrichtung des Arrays bezüglich der Strahlumlenkeinrichtung auszuführen; und
   so dass in der ersten Rotationsstellung die Strahlengänge mit einer ersten Hauptseite der Strahlumlenkeinrichtung in die erste Blickrichtung (27$_1$) gelenkt werden und in der zweiten Rotationsstellung die Strahlengänge mit einer zweiten Hauptseite in die zweite Blickrichtung (27$_2$) gelenkt werden.

**Claims**

1. A multi-aperture imaging device, comprising:

   an image sensor (12);
   an array (14) of optical channels (16a-h), each optical channel (16a-h) including optics (64a-h) for imaging a partial field of view (72a-d) of a total field of view (71) onto an image sensor region (24a-h) of the image sensor (12); and
   beam-deflecting means (18) switchable between a first rotational position and a second rotational position by executing a switching movement and configured to deflect, in a first rotational position, optical paths (26a-h) of the optical channels (16a-h) into a first viewing direction (27$_1$) and to deflect, in a second rotational position, the optical paths (26a-h) of the optical channels (16a-h) into a second viewing direction (27$_1$);
   wherein the array (14) is configured to execute, based on the switching movement, an adjustment movement (11) for adjusting an orientation of the array (14) with respect to the beam-deflecting means (18);

wherein the beam-deflecting means (18) comprises two opposite main sides formed to be reflective and is configured to guide, in the first position, the optical paths with a first main side of the beam-deflecting means into the first viewing direction ($27_1$) and to guide, in the second position, the optical paths with a second main side into the second viewing direction ($27_2$).

2. The multi-aperture imaging device according to any one of the preceding claims, wherein, in the first rotational position and in the second rotational position, a lateral position of the beam-deflecting means along a thickness direction (y) of the multi-aperture imaging device, which is arranged perpendicularly to an axial direction (x) between the image sensor and the array and perpendicularly to a line-extension direction (z) of a line of the array along which optical channels are essentially arranged along a straight line, is equal to an extent of at least 20%.

3. The multi-aperture imaging device according to any one of the preceding claims, wherein the switching movement includes a rotational movement (38) of the beam-deflecting means (18) and a first translational movement (17) of the beam-deflecting means (18) along a first movement direction (y), wherein the adjustment movement (11) includes a second translational movement ($11_1$) of the array (14) along the movement direction.

4. The multi-aperture imaging device according to any one of the preceding claims, wherein the switching movement from the first into the second rotational position includes a first rotational movement (38) of the beam-deflecting means (18), and the adjustment movement (11) includes a second rotational movement ($11_2$).

5. The multi-aperture imaging device according to claim 1 or 2, wherein the switching movement from the first into the second rotational position includes a first rotational movement (38) of the beam-deflecting means (18) and a translational movement (17) of the beam-deflecting means (18) along a first movement direction (y);

wherein the adjustment movement (11) includes a translational movement ($11_1$) of the array (14) along the first movement direction (y), and includes a second rotational movement ($11_1$).

6. The multi-aperture imaging device according to any one of the preceding claims, wherein the array (14) and the image sensor (12) are mechanically coupled to each other and are configured to mutually execute the adjustment movement (11).

7. The multi-aperture imaging device according to any one of the preceding claims, comprising a diaphragm structure (22; 22') arranged to at least partially close a slit (291, 292) between the array (14) and the beam-deflecting means (18); wherein, in the first position and in the second position, the diaphragm structure (22; 22') is on the one hand in mechanical contact with the array (14) or a transparent structure (42a, 42b) configured to at least partially reduce an entry of particles towards the beam-deflecting means (18), and on the other hand with the beam-deflecting means (18).

8. The multi-aperture imaging device according to any one of the preceding claims, comprising a diaphragm structure (22; 22') arranged to at least partially close a slit (291, 292) between the array (14) and the beam-deflecting means (18); wherein, in the first position, the diaphragm structure (22; 22'), adjacent to a first auxiliary side (314) of the array (14), is in mechanical contact with the same and, in the second position, is in mechanical contact adjacent to an opposing second auxiliary side (313) of the array (14), and wherein the beam-deflecting means (18) comprises a third rotational position rotationally arranged between the first rotational position and the second rotational position, and in which the diaphragm structure (22; 22') is spaced apart from the first and the second auxiliary sides (313, 314) of the array (14).

9. The multi-aperture imaging device according to any one of the preceding claims, comprising a diaphragm structure (22; 22') arranged to at least partially close a slit (291, 292) between the array (14) and the beam-deflecting means (18); wherein the diaphragm structure is configured to be, on the one hand, in mechanical contact with the array (14) or a transparent structure (42a, 42b) configured to at least partially reduce an entry of particles towards the beam-deflecting means (18), and, on the other hand, with the beam-deflecting means (18), if the optical paths (26ah) are deflected, wherein the diaphragm structure (22; 22') comprises a mechanical rigidity that generates, upon a relative movement between the array (14) and the beam-deflecting means (18) for the optical image stabilization, a restoring force configured to restore at least 30% of a maximum relative movement.

10. The multi-aperture imaging device according to any one of the preceding claims, comprising a diaphragm structure (22; 22') arranged to at least partially close a slit (291, 292) between the array (14) and the beam-deflecting means (18); wherein the diaphragm structure (22') includes a magnetic material, and wherein a magnetic field-providing element (44a, 44b) is arranged adjacent to the diaphragm structure (22') and is configured to attract the diaphragm structure (22').

11. The multi-aperture imaging device according to any one of the preceding claims, comprising a diaphragm structure (22; 22') arranged to at least partially close a slit (291, 292) between the array (14) and the beam-deflecting means (18); wherein a transparent structure (42a, 42) is arranged along a direction along which the optical paths are deflected, and is configured to at least partially reduce an entry of particles towards the beam-deflecting means (18), wherein a surface roughness of the diaphragm structure (22; 22') is larger than a surface roughness of the transparent structure (42a, 42b).

12. The multi-aperture imaging device according to any one of the preceding claims, comprising a diaphragm structure (22; 22') arranged to at least partially close a slit (291, 292) between the array (14) and the beam-deflecting means (18); wherein the beam-deflecting means (18) is formed as an array of facets (172a-d) arranged side by side, wherein each optical channel (16a-d) is assigned to one of the facets (172a-d), wherein the diaphragm structure (22; 22') extends across the array of facets (172a-d).

13. The multi-aperture imaging device according to any one of the preceding claims, comprising a diaphragm structure (22; 22') arranged to at least partially close a slit (291, 292) between the array (14) and the beam-deflecting means (18); wherein the diaphragm structure (22; 22') is formed to be elastic.

14. An imaging system (120) comprising a first module including a multi-aperture imaging device (10a) according to any one of the claims 1 to 13, and a second module including a multi-aperture imaging device (10b) according to any one of the claims 1 to 13, wherein the first and second modules are configured to at least stereoscopically capture the total field of view (71).

15. A method (1500) for capturing an object region, comprising:

imaging (1510) a first object region with an array (14) of optical channels (16a-h), each optical channel (16a-h) including optics (64a-h) for imaging a partial field of view (72a-d) of a total field of view (71) onto an image sensor region (24a-h) of the image sensor (12); by deflecting optical paths of the optical channels (16a-h) in a first viewing direction ($27_1$) with a beam-deflecting means, which comprises two opposite main sides formed to be reflective, in a first rotational position;
executing (1520) a switching movement of the beam-deflecting means in order to switch the same between the first rotational position and a second rotational position so that the optical channels are deflected into a second viewing direction ($27_2$);
executing (1530) an adjustment movement of the array based on the switching movement in order to adjust an orientation of the array with respect to the beam-deflecting means;
so that, in the first rotational position, the optical paths are guided with a first main side of the beam-deflecting means into the first viewing direction ($27_1$) and, in the second rotational position, the optical paths are guided with a second main side into the second viewing direction ($27_2$).

16. A method (1400) for providing a multi-aperture imaging device, comprising:

providing (1410) an image sensor (12);
arranging (1420) an array (14) of optical channels (16a-h) such that each optical channel (16a-h) includes optics (64a-h) for imaging a partial field of view (72a-d) of a total field of view (71) onto an image sensor region (24a-h) of the image sensor (12);
arranging (1430) beam-deflecting means (18), which comprises two opposite mains sides formed to be reflective, such that the same is switchable between a first rotational position and a second rotational position by executing a switching movement, and is configured to deflect, in a first rotational position, optical paths (26a-h) of the optical channels (16a-h) into a first viewing direction ($27_1$), and to deflect, in a second rotational position, the optical paths (26a-h) of the optical channels (16a-h) into a second viewing direction ($27_1$);
so that the array is configured to execute, based on the switching movement, an adjustment movement for adjusting an orientation of the array with respect to the beam-deflecting means; and
so that, in the first rotational position, the optical paths are guided with a first main side of the beam-deflecting means into the first viewing direction ($27_1$) and, in the second rotational position, the optical paths are guided with a second main side into the second viewing direction ($27_2$).

**Revendications**

1. Dispositif d'imagerie à ouvertures multiples, avec:

un capteur d'image (12);

un réseau (14) de canaux optiques (16a à h), où chaque canal optique (16a à h) comporte une optique (64a à h) destinée à reproduire un champ de vision partiel (72a à d) d'un champ de vision global (71) sur une zone de capteur d'image (24a à h) du capteur d'image (12); et

un dispositif de déviation de faisceau (18) qui peut être commuté entre une première position de rotation et une deuxième position de rotation en effectuant un mouvement de commutation, et qui est conçu pour dévier, dans une première position de rotation, les trajets de faisceau (26a à h) des canaux optiques (16a à h) dans une première direction de regard ($27_1$), et pour dévier les trajets de faisceau (26a à h) des canaux optiques (16a à h), dans une deuxième position de rotation, dans une deuxième direction de regard ($27_1$);

dans lequel le réseau (14) est conçu pour effectuer, sur base du mouvement de commutation, un mouvement d'adaptation (11) destiné à adapter une orientation du réseau (14) par rapport au dispositif de déviation de faisceau (18);

dans lequel le dispositif de déviation de faisceau (18) présente deux côtés principaux opposés et formés réfléchissants et est conçu pour dévier, dans la première position, les trajets de faisceau par un premier côté principal du dispositif de déviation de faisceau dans la première direction de regard ($27_1$) et pour dévier, dans la deuxième position, les trajets de faisceau par un deuxième côté principal dans la deuxième direction de regard ($27_2$).

2. Dispositif d'imagerie à ouvertures multiples selon l'une des revendications précédentes, dans lequel une position latérale du dispositif de déviation de faisceau dans une direction de l'épaisseur (y) du dispositif d'imagerie à ouvertures multiples qui est disposée de manière perpendiculaire à une direction axiale (x) entre le capteur d'image et le réseau et de manière perpendiculaire à une direction d'extension de rangée (z) d'une rangée du réseau le long de laquelle les canaux optiques sont disposés substantiellement le long d'une ligne droite, est identique dans la première position de rotation et dans la deuxième position de rotation dans une mesure d'au moins 20 %.

3. Dispositif d'imagerie à ouvertures multiples selon l'une des revendications précédentes, dans lequel le mouvement de commutation comporte un mouvement de rotation (38) du dispositif de déviation de faisceau (18) et un premier mouvement de translation (17) du dispositif de déviation de faisceau (18) dans une première direction de mouvement (y), dans lequel le mouvement d'adaptation (11) comporte un deuxième mouvement de translation ($11_1$) du réseau (14) dans la direction de déplacement.

4. Dispositif d'imagerie à ouvertures multiples selon l'une des revendications précédentes, dans lequel le mouvement de commutation de la première à la deuxième position de rotation comporte un premier mouvement de rotation (38) du dispositif de déviation de faisceau (18) et le mouvement d'adaptation (11) comporte un deuxième mouvement de rotation ($11_2$).

5. Dispositif d'imagerie à ouvertures multiples selon la revendication 1 ou 2, dans lequel le mouvement de commutation de la première à la deuxième position de rotation comporte un premier mouvement de rotation (38) du dispositif de déviation de faisceau (18) et un mouvement de translation (17) du dispositif de déviation de faisceau (18) dans une première direction de déplacement (y); dans lequel le mouvement d'adaptation (11) comporte un mouvement de translation ($11_1$) du réseau (14) dans la première direction de mouvement (y) et comporte un deuxième mouvement de rotation ($11_1$).

6. Dispositif d'imagerie à ouvertures multiples selon l'une des revendications précédentes, dans lequel le réseau (14) et le capteur d'images (12) sont couplés mécaniquement l'un à l'autre et sont conçus pour réaliser ensemble le mouvement d'adaptation (11).

7. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel la structure de diaphragme (22; 22') se trouve, dans la première position et dans la deuxième position, en contact mécanique avec, d'une part, le réseau (14) ou une structure transparente (42a, 42b), qui est conçue pour réduire au moins partiellement l'entrée de particules dans le dispositif de déviation du faisceau (18) et, d'autre part, le dispositif de déviation de faisceau (18).

8. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel la structure de diaphragme (22; 22') se trouve, dans la première position à proximité d'un premier côté secondaire (314) du réseau (14), en contact mécanique avec ce dernier et, dans la deuxième position à proximité d'un deuxième côté secondaire opposé (313) du réseau (14), en contact mécanique avec ce dernier, et dans lequel le dispositif de déviation de faisceau (18) présente une troisième position de rotation qui est disposée de manière rotative entre la première position de rotation et la deuxième position de rotation et dans laquelle la structure de diaphragme (22; 22') est distante du premier et du deuxième côté secondaire (313, 314) du réseau (14).

9. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel la structure de diaphragme est conçue de manière à se trouver en contact mécanique, d'une part, avec le réseau (14) ou une structure transparente (42a, 42b), qui est conçue pour réduire au moins partiellement l'entrée de particules dans le dispositif de déviation de faisceau (18) et, d'autre part, avec le dispositif de déviation de faisceau (18) lorsque les trajets de faisceau (26a à h) sont déviés, dans lequel la structure de diaphragme (22; 22') présente une rigidité mécanique qui, en cas de mouvement relatif entre le réseau (14) et le dispositif de déviation de faisceau (18) génère, pour la stabilisation de l'image optique, une force de rappel qui est configurée pour rétablir au moins 30% d'un mouvement relatif maximum.

10. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel la structure de diaphragme (22') comporte un matériau magnétique et dans lequel un élément (44a, 44b) créant un champ magnétique est disposé adjacent à la structure de diaphragme (22') et est conçu pour attirer la structure de diaphragme (22').

11. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel une structure transparente (42a, 42b) est disposée dans une direction dans laquelle sont déviés les trajets de faisceau et est conçue pour réduire au moins partiellement une entrée de particules dans le dispositif de déviation de faisceau (18), dans lequel une rugosité de surface de la structure de diaphragme (22; 22') est supérieure à une rugosité de surface de la structure transparente (42a, 42b).

12. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel le dispositif de déviation de faisceau (18) est formé comme un réseau de facettes (172a à d) disposées l'une à côté de l'autre, dans lequel chaque canal optique (16a à d) est associée à l'une des facettes (172a à d), dans lequel la structure de diaphragme (22; 22') s'étend sur le réseau de facettes (172a à d).

13. Dispositif d'imagerie à ouvertures multiples selon l'une des revendications précédentes, avec une structure de diaphragme (22; 22') qui est disposée de manière à obturer au moins partiellement un interstice (291, 292) entre le réseau (14) et le dispositif de déviation de faisceau (18); dans lequel la structure de diaphragme (22; 22') est formée élastique.

14. Système d'imagerie (120) avec un premier module comportant un dispositif d'imagerie à ouvertures multiples (10a) selon l'une des revendications 1 à 13 et un deuxième module comportant un dispositif d'imagerie à ouvertures multiples (10b) selon l'une des revendications 1 à 13, dans lequel le premier et le deuxième module sont conçus pour capturer le champ de vision global (71) au moins de manière stéréoscopique.

15. Procédé (1500) permettant de capturer une zone objet, aux étapes suivantes consistant à

reproduire (1510) une première zone d'objet par un réseau (14) de canaux optiques (16a à h), où chaque canal optique (16a à h) comporte une optique (64a à h) destinée à reproduire un champ de vision partiel (72a à d) d'un champ de vision global (71) sur une zone de capteur d'image (24a à h) du capteur d'image (12); par déviation des trajets de faisceau des canaux optiques (16a à h) dans une première direction de regard (27$_1$) par un dispositif de déviation de faisceau (18), qui présente deux côtés principaux opposés et formés réfléchissants, dans une première position de rotation;
effectuer (1520) un mouvement de commutation du dispositif de déviation de faisceau pour le commuter entre la première position de rotation et une deuxième position de rotation, de sorte que les canaux optiques soient déviés dans une deuxième direction de regard (27$_2$);
effectuer (1530) un mouvement d'adaptation du réseau sur base du mouvement de commutation pour adapter une orientation du réseau par rapport au dispositif de déviation de faisceau;
de sorte que, dans la première position de rotation, les trajets de faisceaux soient déviés par un premier côté principal du dispositif de déviation de faisceau dans la première direction de regard ($27_1$) et, dans la deuxième position de rotation, les trajets de faisceau soient déviés par un deuxième côté principal dans la deuxième direction de regard ($27_2$).

16. Procédé (1400) pour prévoir un dispositif d'imagerie à ouvertures multiples, aux étapes suivantes consistant à:

prévoir (1410) un capteur d'image (12);
disposer (1420) un réseau (14) de canaux optiques (16a à h) de sorte que chaque canal optique (16a à h) comporte une optique (64a à h) destinée à reproduire un champ de vision partiel (72a à d) d'un champ de vision global (71) sur une zone de capteur d'image (24a à h) du capteur d'image (12);
disposer (1430) un dispositif de déviation de faisceau (18) qui présente deux côtés principaux opposés et formés réfléchissants, de sorte qu'il puisse être commuté entre une première position de rotation et une deuxième position de rotation en effectuant un mouvement de commutation, et qui est conçu pour dévier, dans une première position de rotation, les trajets de faisceau (26a à h) des canaux optiques (16a à h) dans une première direction de regard ($27_1$) et pour dévier les trajets de faisceau (26a à h) des canaux optiques (16a à h), dans une deuxième position de rotation, dans une deuxième direction de regard ($27_1$);
de sorte que le réseau soit conçu pour effectuer, sur base du mouvement de commutation, un mouvement d'adaptation pour adapter une orientation du réseau par rapport au dispositif de déviation de faisceau; et
de sorte que, dans la première position de rotation, les trajets de faisceau soient déviés par un premier côté principal du dispositif de déviation de faisceau dans la première direction de regard ($27_1$) et, dans la deuxième position de rotation, les trajets de faisceau soient déviés par un deuxième côté principal dans la deuxième direction de regard ($27_2$).

Fig. 1a

EP 3 682 626 B1

Fig. 1b

Fig. 1c

EP 3 682 626 B1

Fig. 1d

Fig. 1e

Fig. 1f

Fig. 2a

Fig. 2b

Fig. 2c

30

10   19₁   19₂   44

23a

37a

12

37b

23b

25

18

23c

y

x

28

Fig. 3a

30

10   37a

23a

19₁

12

44   18

23c

19₂

23b

25

37b

28

Fig. 3b

EP 3 682 626 B1

Fig. 3c

Fig. 3d

Fig. 3e

Fig. 3f

40

12  14  64  22  26  29  18  27

## Fig. 4

50

12  14  $29_2$  $22_2$  26  174a  174a  $27_1$  $27_2$  18  174b  38  44  174b  $22_1$  18  64  $29_1$  174b

y

x

## Fig. 5

172

174a

δ

174c

174b

## Fig. 6a

172

175a

174a    178

176

182

174c

174b

175b

184

## Fig. 6b

60

14

12

16a

16b

16c

16d

18

29

172a

172b

172c

172d

y

z

x

Fig. 6c

172

174a

174c

174d

186

174b

## Fig. 6d

172a

186a = 186b

172b

## Fig. 6e

EP 3 682 626 B1

Fig. 6f

Fig. 7a

Fig. 7b

Fig. 7c

Fig. 8

Fig. 9

100

44a

12        14

42a
(optional)

22'

18

42b
(optional)

X

Fig. 10

Fig. 11

Fig. 12

EP 3 682 626 B1

Fig. 13

<u>1400</u>

```
┌─────────────────────────────────────────┐
│                                         │
│      Bereitstellen eines Bildsensors    │  ～1410
│                                         │
└─────────────────────────────────────────┘
                    │
                    ▼
┌─────────────────────────────────────────┐
│     Anordnen eines Arrays von optischen Kanälen, so │
│     dass jeder optische Kanal eine Optik zur Abbildung │  ～1420
│     eines Teilgesichtsfelds eines Gesamtgesichtsfelds auf │
│     einen Bildsensorbereich des Bildsensors umfasst │
└─────────────────────────────────────────┘
                    │
                    ▼
┌─────────────────────────────────────────┐
│   Anordnen einer Strahlumlenkeinrichtung, so dass diese │
│   zwischen einer ersten Rotationsstellung und einer zweiten │
│   Rotationsstellung durch Ausführen einer Umschaltbewegung │
│   umschaltbar ist, und ausgebildet ist, um in einer ersten │
│   Rotationsstellung Strahlengänge der optischen Kanäle in eine │  ～1430
│   erste Blickrichtung umzulenken und um die Strahlengänge │
│   der optischen Kanäle in einer zweiten Rotationsstellung │
│   in eine zweite Blickrichtung umzulenken, so dass das Array │
│   ausgebildet ist, um basierend auf der Umschaltbewegung │
│   eine Anpassungsbewegung zum Anpassen einer Ausrichtung │
│   des Arrays bezüglich der Strahlumlenkeinrichtung auszuführen │
└─────────────────────────────────────────┘
```

Fig. 14

1500

Abbilden eines ersten Objektbereichs mit einem Array von optischen Kanälen, wobei jeder optische Kanal eine Optik zur Abbildung eines Teilgesichtsfelds eines Gesamtgesichtsfelds auf einen Bildsensorbereich des Bildsensors umfasst; durch Umlenken von Strahlengängen der optischen Kanäle in eine erste Blickrichtung mit einer Strahlumlenkeinrichtung in einer ersten Rotationsstellung

~1510

Ausführen einer Umschaltbewegung der Strahlumlenkeinrichtung, um diese zwischen der ersten Rotationsstellung und einer zweiten Rotationsstellung umzuschalten, so dass die optischen Kanäle in eine zweite Blickrichtung umgelenkt werden

~1520

Ausführen einer Anpassungsbewegung des Arrays basierend auf der Umschaltbewegung, um eine Ausrichtung des Arrays bezüglich der Strahlumlenkeinrichtung anzupassen

~1530

Fig. 15